# EUROPEAN PATENT APPLICATION

(11) **EP 4 534 228 A1**
(43) Date of publication of application: **09.04.2025**
(21) Application number: 22943801.5
(22) Date of filing: 27.05.2022
(51) Int. Cl.: B23K 26/00, B23K 26/082, B23K 26/70

(54) **MACHINING SYSTEM**

(71) Applicant: NIKON CORPORATION, Tokyo 140-8601 (JP)
(72) Inventor: MATSUDA, Takeshi, Tokyo 140-8601 (JP)
(74) Representative: Hoffmann Eitle
(86) International application number: PCT/JP2022/021729
(87) International publication number: WO 2023/228401

(57) **Abstract**

A processing system includes: an irradiation optical system for irradiating an object with an energy beam for processing the object; a placing apparatus for placing the object on a placement surface; a first change apparatus for changing at least one of a positional relationship and a postural relationship between the irradiation optical system and the object placed on the placing apparatus; a light receiving apparatus for optically receiving the energy beam emitted from the irradiation optical system; a second change apparatus for changing a positional relationship between the light receiving apparatus and the irradiation optical system; and a control apparatus, a position of the light receiving apparatus is changed from a first position at which it is possible to optically receive the energy beam to a second position different from the first position by the second change apparatus under the control of the control apparatus.

## Description

### Technical Field

The present invention relates to a technical field of a processing system that is configured to process an object, for example.

### Background Art

A Patent literature 1 discloses a processing system that processes an object by irradiating the object with laser light. This type of processing system is required to properly process the object.

### Citation List

### Patent Literature

Patent Literature 1: US2002/0017509A1

### Summary of Invention

A first aspect provides processing system including: an irradiation optical system that is configured to irradiate an object with an energy beam that is for processing the object; a placing apparatus that is configured to place the object on a placement surface; a first change apparatus that is configured to change at least one of a positional relationship and a postural relationship between the irradiation optical system and the object placed on the placing apparatus; a light receiving apparatus that is configured to optically receive the energy beam emitted from the irradiation optical system; a second change apparatus that is configured to change a positional relationship between the light receiving apparatus and the irradiation optical system; and a control apparatus, wherein a position of the light receiving apparatus is changed to a first position at which it is possible to optically receive the energy beam from a second position that is different from the first position by the second change apparatus under a control of the control apparatus.

A second aspect provides a processing system including: an irradiation optical system that is configured to irradiate an object with a processing beam that is for processing the object, that is configured to irradiate the object with a measurement beam that is for measuring the object, and that includes at least an objective optical system; a placing apparatus that is configured to place the object on a placement surface; a light receiving apparatus that is configured to optically receive the processing beam and the measurement beam emitted from the irradiation optical system; a position change apparatus that is configured to change at least one of an irradiation position of the processing beam on the object and an irradiation position of the measurement beam on the object; and a control apparatus, wherein the control apparatus controls the position change apparatus based on a light receiving result of the processing beam by the light receiving apparatus and a light receiving result of the measurement beam by the light receiving apparatus.

A third aspect provides a processing system including: a deflection optical system that is configured to deflect an energy beam, which is for processing or measuring an object, to change an irradiation position of the energy beam on the object; an irradiation optical system that is configured to irradiate the object with the energy beam emitted from the deflection optical system; a light receiving apparatus that is configured to optically receive the energy beam emitted from the irradiation optical system; a position change apparatus that is configured to change the irradiation position of the energy beam on the object by changing a position or a pose of the deflection optical system; and a control apparatus that controls the position change apparatus based on a light receiving result of the energy beam by the light receiving apparatus, wherein the light receiving apparatus includes: a beam passing member having a plurality of formed passing areas through each of which the energy beam emitted from the irradiation optical system is allowed to pass; and a light receiving unit that is configured to optically receive each energy beam that has passed through each of the plurality of passing areas, the deflection optical system deflects the energy beam so that the plurality of passing areas are scanned with the energy beam along one direction that is along a surface of the beam passing member, and the control apparatus controls the position change apparatus based on the light receiving result of the energy beam by the light receiving apparatus.

A fourth aspect provides a processing system including: an emission optical system that is configured to emit an energy beam, which is for processing or measuring an object, and that includes a plurality of condensed position adjustment optical systems each of which is configured to adjusts a condensed position of the energy beam and whose focal lengths are different from each other; a plurality of irradiation optical systems each of which is configured to irradiate the object with the energy beam emitted from the emission optical system, each of which is attachable to and detachable from the emission optical system, and each of which includes at least an objective optical system; a change apparatus that is configured to exchange the irradiation optical system attached to the emission optical system; and a control apparatus that identifies a type of the irradiation optical system attached to the emission optical system, selects one condensed position adjustment optical system from among the plurality of condensed position adjustment optical systems based on the identified type, and moves the one condensed position adjustment optical system so that the selected one condensed position adjustment optical system is positioned on an optical system of the energy beam.

A fifth aspect provides a processing system including: an irradiation optical system that is configured to irradiate an object with an energy beam; a first change apparatus that is configured to change at least one of a positional relationship and a postural relationship between the object and the irradiation optical system; a light receiving apparatus that is configured to optically receive the energy beam emitted from the irradiation optical system; a second change apparatus that is configured to change a positional relationship between the light receiving apparatus and the irradiation optical system; and a control apparatus, wherein a position of the light receiving apparatus is changed to a first position at which it is possible to optically receive the energy beam from a second position that is different from the first position by the second change apparatus under a control of the control apparatus.

A sixth aspect provides a processing system including: an irradiation optical system that is configured to irradiate an object with a first beam and that is configured to irradiate the object with a second beam; a light receiving apparatus that is configured to optically receive the first beam and the second beam emitted from the irradiation optical system; a position change apparatus that is configured to change at least one of an irradiation position of the first beam on the object and an irradiation position of the second beam on the object; and a control apparatus, wherein the control apparatus controls the position change apparatus based on a light receiving result of the first beam by the light receiving apparatus and a light receiving result of the second beam by the light receiving apparatus.

A seventh aspect provides a processing system including: a deflection optical system that is configured to deflect an energy beam to change an irradiation position of the energy beam on the object; an irradiation optical system that is configured to irradiate the object with the energy beam emitted from the deflection optical system; a light receiving apparatus that is configured to optically receive the energy beam emitted from the irradiation optical system; a position change apparatus that is configured to change the irradiation position of the energy beam on the object by changing a position or a pose of the deflection optical system; and a control apparatus that controls the position change apparatus based on a light receiving result of the energy beam by the light receiving apparatus, wherein the light receiving apparatus includes: a beam passing member having a plurality of formed passing areas through each of which the energy beam emitted from the irradiation optical system is allowed to pass; and a light receiving unit that is configured to optically receive each energy beam that has passed through each of the plurality of passing areas, the control apparatus controls the position change apparatus based on the light receiving result of the energy beam by the light receiving apparatus.

A eighth aspect provides a processing system including: an emission optical system that is configured to emit an energy beam and that includes a plurality of condensed position adjustment optical systems each of which is configured to adjusts a condensed position of the energy beam and whose focal lengths are different from each other; a plurality of irradiation optical systems each of which is configured to irradiate the object with the energy beam emitted from the emission optical system, each of which is attachable to and detachable from the emission optical system, and each of which includes at least an objective optical system; a change apparatus that is configured to exchange the irradiation optical system attached to the emission optical system; and a control apparatus that identifies a type of the irradiation optical system attached to the emission optical system, selects one condensed position adjustment optical system from among the plurality of condensed position adjustment optical systems based on the identified type, and moves the one condensed position adjustment optical system so that the selected one condensed position adjustment optical system is positioned on an optical system of the energy beam.

An operation and another advantage of the present invention will be apparent from an example embodiment described below.

### Brief Description of Drawings

[FIG. 1] FIG. 1 is a cross-sectional view that schematically illustrates one example of a configuration of a processing system in a first example embodiment.
[FIG. 2] FIG. 2 is a block diagram that illustrates one example of a configuration of the processing system in the first example embodiment.
[FIG. 3] FIG. 3 is a cross-sectional view that illustrates a configuration of a processing head in the first example embodiment.
[FIG. 4] FIG. 4 is a perspective view that illustrates a processing shot area.
[FIG. 5] FIG. 5 is a perspective view that illustrates a measurement shot area.
[FIG. 6] FIG. 6 is a cross-sectional view that illustrates one example of a structure of an attachment adapter that is used to attach an irradiation optical system to an emission optical system.
[FIG. 7] Each of FIG. 7A to FIG. 7C is a cross-sectional view that illustrates a process for attaching the irradiation optical system to the emission optical system.
[FIG. 8] FIG. 8 is a cross-sectional view that conceptionally illustrates one example of a configuration of a head change apparatus.
[FIG. 9] Each of FIG. 9A to FIG. 9G is a cross-sectional view that illustrates one example of the irradiation optical system.
[FIG. 10] FIG. 10 is a block diagram that illustrates one example of a configuration of a processing system in a second example embodiment.
[FIG. 11] FIG. 11A is a cross-sectional view that illustrates a calibration position at which an optical measurement apparatus is positioned in a case where a calibration operation is performed, and FIG. 11B is a cross-sectional view that illustrates a non-calibration position at which the optical measurement apparatus is positioned in a case where the calibration operation is not performed.
[FIG. 12] FIG. 12 is a cross-sectional view that illustrates a configuration of the optical measurement apparatus.
[FIG. 13] FIG. 13 is a planar view that illustrates a search mark formed by a light passing area.
[FIG. 14] FIG. 14 is a planar view that illustrates a beam passing member on which a plurality of search marks are formed.
[FIG. 15] FIG. 15 is a planar view that illustrates the beam passing member on which the plurality of search marks are formed.
[FIG. 16] FIG. 16 is a planar view that illustrates the plurality of search marks that are irradiated with processing light.
[FIG. 17] FIG. 17 illustrates light receiving information output from a light receiving element.
[FIG. 18] FIG. 18 is a planar view that illustrates a base irradiation position of the processing light and an actual irradiation position of the processing light in the processing shot area.
[FIG. 19] Each of FIG. 19A to FIG. 19C illustrates the light receiving information output from the light receiving element.
[FIG. 20] FIG. 20 is a planar view that illustrates a base irradiation position of measurement light and an actual irradiation position of the measurement light in the measurement shot area.
[FIG. 21] FIG. 21 is a planar view that illustrates the actual irradiation position of the processing light and the actual irradiation position of the measurement light in the processing shot area and the measurement shot area.
[FIG. 22] Each of FIG. 22A to FIG. 22C illustrates the light receiving information output from the light receiving element.
[FIG. 23] FIG. 23 is a cross-sectional view that illustrates a configuration of a processing head in a third example embodiment.
[FIG. 24] FIG. 24 is a cross-sectional view that illustrates a configuration of a processing head in a fourth example embodiment.
[FIG. 25] FIG. 25 is a cross-sectional view that illustrates a configuration of a processing head in a fifth example embodiment.
[FIG. 26] FIG. 26 is a cross-sectional view that illustrates the configuration of the processing head in the fifth example embodiment.

### Description of Example embodiments

Next, with reference to drawings, an example embodiment of a processing system will be described. In the below described description, the example embodiment of the processing system will be described by using a processing system SYS that is configured to process a workpiece W that is one example of an object. However, the present invention is not limited to the below described example embodiment.

Moreover, in the below-described description, a positional relationship of various components included in the processing system SYS will be described by using an XYZ rectangular coordinate system that is defined by an X-axis, a Y-axis and a Z-axis that are orthogonal to one another. Note that each of an X-axis direction and a Y-axis direction is assumed to be a horizontal direction (namely, a predetermined direction in a horizontal plane) and a Z-axis direction is assumed to be a vertical direction (namely, a direction that is orthogonal to the horizontal plane, and substantially a vertical direction) in the below-described description, for convenience of the description. Moreover, rotational directions (in other words, inclination directions) around the X-axis, the Y-axis and the Z-axis are referred to as a θX direction, a θY direction and a θZ direction, respectively. Here, the Z-axis direction may be a gravity direction. Moreover, an XY plane may be a horizontal direction.

### (1) Processing System SYS in First Example Embodiment

First, the processing system in a first example embodiment will be described. Incidentally, in the below-described description, the processing system in the first example embodiment is referred to as a "processing system SYSa".

### (1-1) Entire Configuration of Processing System SYSa

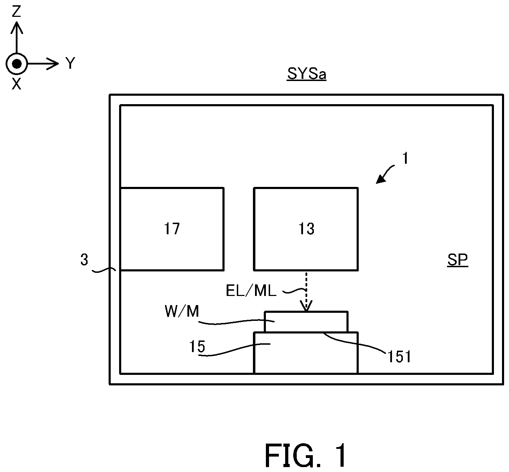

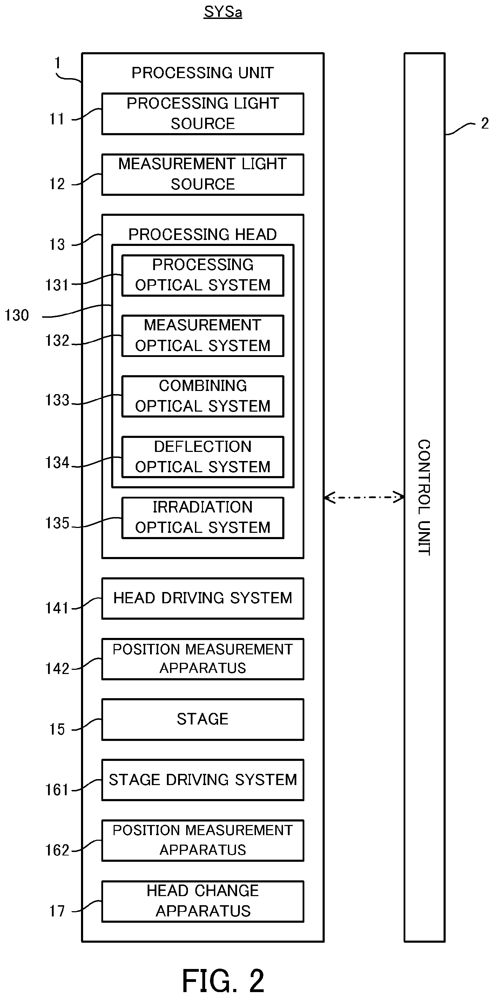

First, with reference to FIG. 1 and FIG. 2, an entire configuration of the processing system SYSa in the first example embodiment will be described. FIG. 1 is a cross-sectional view that schematically illustrates one example of the configuration of the processing system SYSa in the first example embodiment. FIG. 2 is a block diagram that illustrates one example of the configuration of the processing system SYSa in the first example embodiment.

As illustrated in FIG. 1 and FIG. 2, the processing system SYSa includes a processing unit 1, and a control unit 2. Incidentally, the processing unit 1 may be referred to as a processing apparatus, and the control unit 2 may be referred to as a control apparatus. At least a part of the processing unit 1 is contained in an inner space SP in a housing 3. The inner space SP in the housing 3 may be purged with purge gas (namely, gas) such as Nitrogen gas and so on, or may not be purged with the purge gas. The inner space SP in the housing 3 may be vacuumed or may not be vacuumed. However, the processing unit 1 may not be contained in the inner space SP in the housing 3. A local space surrounding only a part of the processing unit 1 may be purged with the purge gas or may be vacuumed.

The processing unit 1 is configured to process a workpiece W that is a processing target object (it may be referred to as a base member) under the control of the control unit 2. The workpiece W may be a metal, may be an alloy (for example, duralumin and the like), may be a semiconductor (for example, silicon), may be a resin, may be a composited material such as a CFRP (Carbon Fiber Reinforced Plastic), may be a painting material (as one example a film of painting material that is coated on a base member), may be a glass, or may be an object that is made from any other material, for example.

The processing unit 1 irradiates the workpiece W with processing light EL in order to process the workpiece W. The processing light EL may be any light as long as the workpiece W is processed by irradiating the workpiece W with it. In the first example embodiment, an example in which the processing light EL is laser light will be described, however, the processing light EL may be light that is different from the laser light. Furthermore, a wavelength of the processing light EL may be any wavelength as long as the workpiece W is processed by irradiating the workpiece W with it. For example, the processing light EL may be visible light, or may be invisible light (for example, at least one of infrared light, ultraviolet light, extreme ultraviolet light, and the like). The processing light EL may include pulsed light. Alternatively, the processing light EL may not include the pulsed light. In other words, the processing light EL may be continuous light. Incidentally, the processing light EL may be referred to as a processing beam, because light is one example of an energy beam.

The processing unit 1 may perform an additive manufacturing on the workpiece W. Namely, the processing unit 1 may perform the additive manufacturing for building a build object on the workpiece W. The processing unit 1 may perform a subtractive manufacturing on the workpiece W. Namely, the processing unit 1 may perform the subtractive manufacturing for removing a part of the workpiece W. The processing unit 1 may perform a marking processing for forming a desired mark on a surface of the workpiece W. The processing unit 1 may perform a peening processing for changing a characteristic of the surface of the workpiece W. The processing unit 1 may perform a peeling processing for peeling the surface of the workpiece W. The processing unit 1 may perform a welding processing for coupling one workpiece W with another the workpiece W. The processing unit 1 may perform a cutting processing for cutting the workpiece W. The processing unit 1 may perform a planar processing (in other words, a remelting processing) for making the surface of the workpiece W be closer to a planar surface by melting the surface of the workpiece W and solidifying the melted surface.

The processing unit 1 may form a desired structure on the surface of the workpiece W by processing the workpiece W. However, the processing unit 1 may perform a processing that is different from a processing for forming the desired structure on the surface of the workpiece W.

A riblet structure is one example of the desired structure. The riblet structure may include a structure by which a resistance (especially at least one of frictional resistance and a turbulent frictional resistance) of the surface of the workpiece W to a fluid is reducible. Therefore, the riblet structure may be formed on the workpiece W including a member that is positioned (in other words, disposed) in the fluid. Note that the fluid here means any medium (for example, at least one of gas and liquid) that flows relative to the surface of the workpiece W. For example, in a case where the surface of workpiece W moves relative to the medium although the medium itself is static, this medium may be referred to as the fluid. Note that a state where the medium is static may mean a state where the medium does not move relative to a predetermined reference object (for example, a ground surface).

At least one of an airplane, a windmill, a turbine for an engine, and a turbine for a power generation is one example of the workpiece W on which the riblet structure is formed. **In** a case where the riblet structure is formed on the workpiece W, the workpiece W is movable relative to the fluid more easily. Therefore, the resistance that prevents the workpiece W from moving relative to the fluid is reduced, and thereby an energy saving is achievable. Namely, it is possible to manufacture the environmentally preferable workpiece W. For example, in a case where the workpiece W is a member exposed on a surface of the airplane (for example, at least a part of the airplane), the resistance that prevents the airplane from moving is reduced, and thereby a fuel saving of the airplane is achievable. For example, in a case where the workpiece W is the windmill (for example, at least a part of the windmill), the resistance that prevents the windmill from moving (typically, rotating) is reduced, and thereby a high efficiency of the windmill is achievable. For example, in a case where the workpiece W is the turbine for the engine (for example, at least a part of the turbine for the engine), the resistance that prevents the turbine for the engine from moving (typically, rotating) is reduced, and thereby a high efficiency and energy saving of the turbine for the engine is achievable. For example, in a case where the workpiece W is the turbine for the power generation (for example, at least a part of the turbine for the power generation), the resistance that prevents the turbine for the power generation from moving (typically, rotating) is reduced, and thereby a high efficiency and energy saving of the turbine for the power generation is achievable. Therefore, there is a possibility that the processing unit 1 can contribute "13-2-2 Total Greenhous gas emission per year" in indicators included in Goal 13 (Take urgent action to combat climate change and its impact) of Sustainable Development Goals (SDGs) initiated by United Nations.

The processing unit 1 is further configured to measure a measurement target object M under the control of the control unit 2. The processing unit 1 irradiates the measurement target object M with measurement light ML for measuring the measurement target object M in order to measure the measurement target object M. Specifically, the processing unit 1 measures the measurement target object M by irradiating the measurement target object M with the measurement light ML and detecting (namely, optically receiving) at least a part of returned light RL that returns from the measurement target object M onto which the measurement light ML is irradiated. The light returning from the measurement target object M onto which the measurement light ML is irradiated is light from the measurement target object M that is generated by the irradiation with the measurement light ML.

The measurement light ML may be any type of light, as long as the measurement target object M is measurable by irradiating the measurement target object M with it. In the first example embodiment, an example in which the measurement light ML is a laser light will be described. However, the measurement light ML may be a light that is different from the laser light. Furthermore, a wavelength of the measurement light ML may be any wavelength, as long as the measurement target object M is measurable by irradiating the measurement target object M with it. For example, the measurement light ML may be visible light, or may be invisible light (for example, at least one of infrared light, ultraviolet light, extreme ultraviolet light and the like). The measurement light ML may include pulsed light (for example, pulsed light an ON time of which is equal to or shorter than an pico-order second). Alternatively, the measurement light ML may not include the pulsed light. In other words, the measurement light ML may be continuous light. Incidentally, the measurement light ML may be referred to as a measurement beam, because light is one example of an energy beam.

The processing unit 1 may be configured to measure a characteristic of the measurement target object M by using the measurement light ML. The characteristic of the measurement target object M may include at least one of a position of the measurement target object M, a shape of the measurement target object M, a reflectance of the measurement target object M, a transmittance of the measurement target object M, a temperature of the measurement target object M, and a surface roughness of the measurement target object M, for example.

In the below-described description, an example in which the processing unit 1 measures at least the position of the measurement target object M will be described. The position of the measurement target object M may include a position of a surface of the measurement target object M. The position of the surface of the measurement target object M may include a position of at least a part of the surface of the measurement target object M. Moreover, the position of the measurement target object M may mean the position of the measurement target object M relative to a processing head 13 (namely, a relative position). Namely, the position of the measurement target object M may mean the position of the measurement target object M in a measurement coordinate system that is based on the processing head 13. Moreover, as described below, an operation for measuring the position of the measurement target object M may include an operation for measuring the shape of the measurement target object M. This is because the shape of the measurement target object M is calculatable from the position of the measurement target object M.

The measurement target object M may include the workpiece W that is processed by the processing unit 1, for example. The measurement target object M may include any object placed on a below-described stage 15, for example. The measurement target object M may include the stage 15, for example. The measurement target object M may include an optical measurement apparatus 18b that is used for a calibration operation described below in a second example embodiment, for example.

In order to process the workpiece W and measure the measurement target object M, the processing unit 1 includes a processing light source 11, a measurement light source 12, the processing head 13, a head driving system 141, a position measurement apparatus 142, the stage 15, a stage driving system 161, a position measurement apparatus 162, and a head change apparatus 17.

The processing light source 11 generates the processing light EL. In a case where the processing light EL is the laser light, the processing light source 11 may include a laser diode, for example. Furthermore, the processing light source 11 may be a light source that is configured to perform a pulsed oscillation. In this case, the processing light source 11 is configured to generate the pulsed light as the processing light EL. Incidentally, the processing light source 11 may be a CW light source that generates the CW (continuous wave).

The measurement light source 12 generates the measurement light ML. In a case where the measurement light ML is the laser light, the measurement light source 12 may include a laser diode, for example. Furthermore, the measurement light source 12 may be a light source that is configured to perform a pulsed oscillation. In this case, the measurement light source 12 is configured to generate the pulsed light as the processing light EL. Incidentally, the measurement light source 12 may be a CW light source that generates the CW (continuous wave).

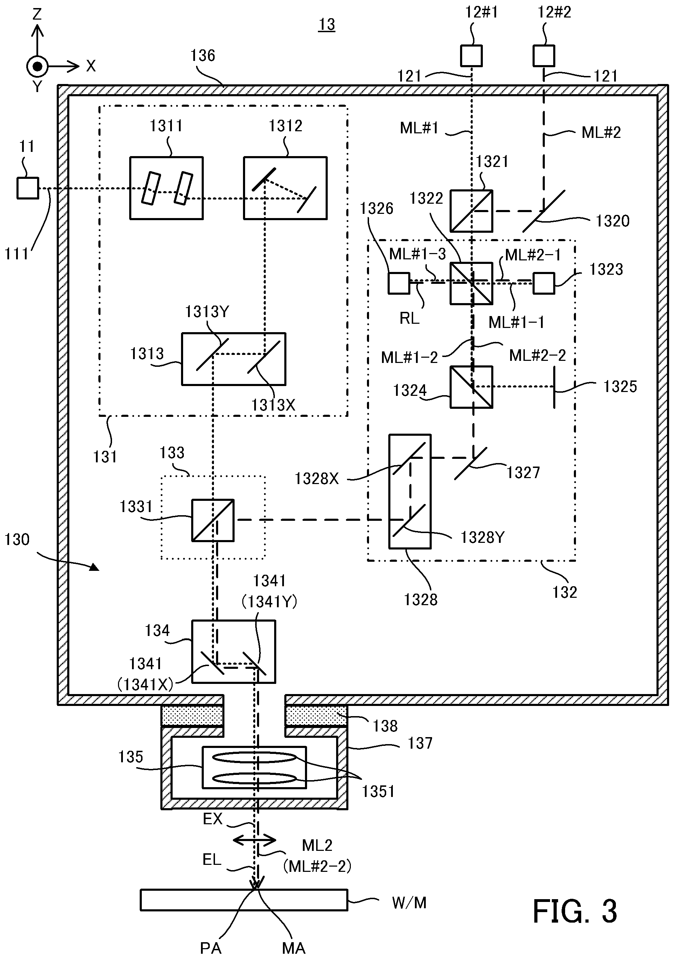

The processing head 13 irradiates the workpiece W with the processing light EL generated by the processing light source 11 and irradiates the measurement target object M with the measurement light ML generated by the measurement light source 12. In order to irradiate the workpiece W with the processing light EL and irradiate the measurement target object M with the measurement light ML, the processing head 13 includes a processing optical system 131, a measurement optical system 132, a combining optical system 133, a deflection optical system 134, and an irradiation optical system 135. The processing head 13 irradiates the workpiece W with the processing light EL through the processing optical system 131, the combining optical system 133, the deflection optical system 134, and the irradiation optical system 135. Moreover, the processing head 13 irradiates the measurement target object M with the measurement light ML through the measurement optical system 132, the combining optical system 133, the deflection optical system 134, and the irradiation optical system 135. Note that a detailed description of a configuration of the processing head 13 will be described later in detail with reference to FIG. 3.

The head driving system 141 moves the processing head 13. Namely, the head driving system 141 moves a position of the processing head 13. Therefore, the head driving system 141 may be referred to as a movement apparatus. The head driving system 141 may move (namely, linearly move) the processing head 13 along a movement axis along at least one of the X-axis direction, the Y-axis direction, and the Z-axis direction, for example. The head driving system 141 may move the processing head 13 along at least one of the θX direction, the θY direction, and the θZ direction, in addition to or instead of at least one of the X-axis direction, the Y-axis direction, and the Z-axis direction, for example. Namely, the head driving system 141 may rotate (namely, rotationally move) the processing head 13 around at least one axis of a rotational axis along the X-axis direction (namely, an A-axis), a rotational axis along the Y-axis direction (namely, a B-axis), and a rotational axis along the Z-axis direction (namely, a C-axis).

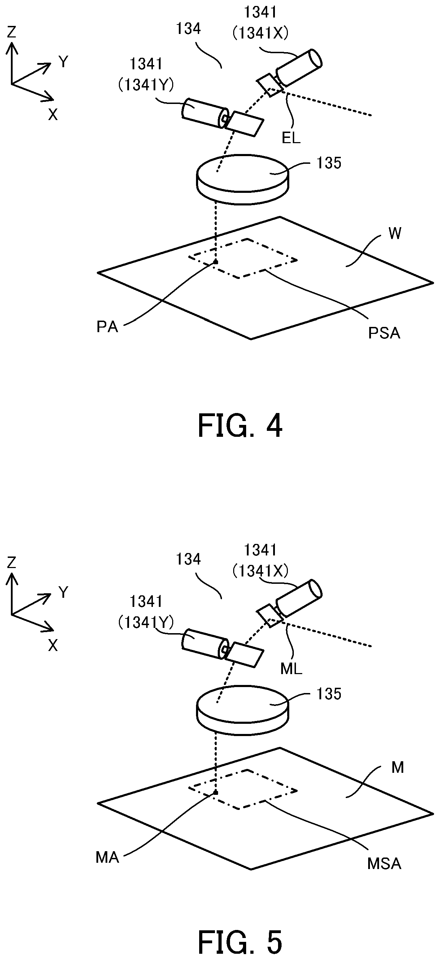

When the head driving system 141 moves the processing head 13, a relative positional relationship between the stage 15 (furthermore, the workpiece W placed on the stage 15) and the processing head 13 changes. Therefore, a relative positional relationship between the workpiece W and a processing shot area PSA (see FIG. 4 described below) in which the processing head 13 performs the processing changes. Namely, the processing shot area PSA moves relative to the workpiece W. The processing unit 1 may process the workpiece W while moving the processing head 13. Specifically, the processing unit 1 may set the processing shot area PSA at a desired position of the workpiece W by moving the processing head 13, and process the desired position of the workpiece W.

Furthermore, when the head driving system 141 moves the processing head 13, a relative positional relationship between the measurement target object M and a measurement shot area MSA (see FIG. 5 described below) in which the processing head 13 performs the measurement changes. Namely, the measurement shot area MSA moves relative to the measurement target object M. The processing unit 1 may measure the measurement target object M while moving the processing head 13. Specifically, the processing unit 1 may set the measurement shot area MSA at a desired position of the measurement target object M by moving the processing head 13, and measure the desired position of the measurement target object M.

Furthermore, when the head driving system 141 moves the processing head 13, a positional relationship between the processing head 13 (especially, the irradiation optical system 135 of the processing head 13) and the workpiece W placed on the stage 15 changes. For example, the positional relationship between the processing head 13 (especially, the irradiation optical system 135) and the workpiece W along at least one of the X-axis direction, the Y-axis direction, and the Z-axis direction may change. For example, the positional relationship between the processing head 13 (especially, the irradiation optical system 135) and the workpiece W along at least one of the θX direction, the θY direction, and the θZ direction may change. Incidentally, the positional relationship between the processing head 13 (especially, the irradiation optical system 135) and the workpiece W along at least one of the θX direction, the θY direction, and the θZ direction may be regarded as a postural relationship between the processing head 13 (especially, the irradiation optical system 135) and the workpiece W. Therefore, the head driving system 141 may be considered to serve as a change apparatus that is configured to change at least one of the positional relationship and the postural relationship between the processing head 13 (especially, the irradiation optical system 135) and the workpiece W.

The position measurement apparatus 142 is configured to measure a position of the processing head 13. The position measurement apparatus 142 may include an interferometer (for example, a laser interferometer), for example. The position measurement apparatus 142 may include an encoder (for example, at least one of a linear encoder and a rotary encoder), for example. The position measurement apparatus 142 may include a potentiometer, for example. In a case where the head driving system 141 uses a stepping motor as a driving source, the position measurement apparatus 142 may include an open-loop control type of position detection apparatus, for example. The open-loop control type of position detection apparatus is a position detection apparatus that measures the position of the processing head 13 by estimating a moving distance of the processing head 13 from a cumulative value of the number of pulses for driving the stepping motor.

Incidentally, since the processing head 13 includes an irradiation optical system 135, an operation for measuring the position of the processing head 13 may be considered to be equivalent to an operation for measuring a position of the irradiation optical system 135 of the processing head 13. Namely, the position measurement apparatus 142 may be considered to measure the position of the irradiation optical system 135 of the processing head 13.

The workpiece W is placed on the stage 15. Therefore, the stage 15 may be referred to as a placing apparatus. Specifically, the workpiece W is placed on a placement surface 151 that is at least a part of an upper surface of the stage 15. The stage 15 is configured to support the workpiece W placed on the stage 15. The stage 15 may be configured to hold the workpiece W placed on the stage 15. In this case, the stage 15 may include at least one of a mechanical chuck, an electrostatic chuck, and a vacuum suction chuck to hold the workpiece W. Alternatively, a jig for holding the workpiece W may hold the workpiece W, and the stage 15 may hold the jig holding the workpiece W. Alternatively, the stage 15 may not hold the workpiece W placed on the stage 15. In this case, the workpiece W may be placed on the stage 15 without clamp.

The stage driving system 161 moves the stage 15. Namely, the stage driving system 161 moves a position of the stage 15. Therefore, the stage driving system 161 may be referred to as a movement apparatus. The stage driving system 161 may move (namely, linearly move) the stage 15 along a movement axis along at least one of the X-axis direction, the Y-axis direction, and the Z-axis direction, for example. The stage driving system 161 may move the stage 15 along at least one of the θX direction, the θY direction, and the θZ direction, in addition to or instead of at least one of the X-axis direction, the Y-axis direction, and the Z-axis direction, for example. Namely, the stage driving system 161 may rotate (namely, rotationally move) the stage 15 around at least one axis of a rotational axis along the X-axis direction (namely, an A-axis), a rotational axis along the Y-axis direction (namely, a B-axis), and a rotational axis along the Z-axis direction (namely, a C-axis).

When the stage driving system 161 moves the stage 15, the relative positional relationship between the stage 15 (furthermore, the workpiece W placed on the stage 15) and the processing head 13 changes. Therefore, the relative positional relationship between the workpiece W and the processing shot area PSA (see FIG. 4 described below) in which the processing head 13 performs the processing changes. Namely, the processing shot area PSA moves relative to the workpiece W. The processing unit 1 may process the workpiece W while moving the stage 15. Specifically, the processing unit 1 may set the processing shot area PSA at a desired position of the workpiece W by moving the stage 15, and process the desired position of the workpiece W.

Furthermore, when the stage driving system 161 moves the stage 15, the relative positional relationship between the measurement target object M and the measurement shot area MSA (see FIG. 5 described below) in which the processing head 13 performs the measurement changes. Namely, the measurement shot area MSA moves relative to the measurement target object M. The processing unit 1 may measure the measurement target object M while moving the stage 15. Specifically, the processing unit 1 may set the measurement shot area MSA at a desired position of the measurement target object M by moving the stage 15, and measure the desired position of the measurement target object M.

Furthermore, when the stage driving system 161 moves the stage 15, the positional relationship between the processing head 13 (especially, the irradiation optical system 135 of the processing head 13) and the workpiece W placed on the stage 15 changes. For example, the positional relationship between the processing head 13 (especially, the irradiation optical system 135) and the workpiece W along at least one of the X-axis direction, the Y-axis direction, and the Z-axis direction may change. For example, the positional relationship between the processing head 13 (especially, the irradiation optical system 135) and the workpiece W along at least one of the θX direction, the θY direction, and the θZ direction may change. Incidentally, as described above, the positional relationship between the processing head 13 (especially, the irradiation optical system 135) and the workpiece W along at least one of the θX direction, the θY direction, and the θZ direction may be regarded as the postural relationship between the processing head 13 (especially, the irradiation optical system 135) and the workpiece W. Therefore, the stage driving system 161 may be considered to serve as a change apparatus that is configured to change at least one of the positional relationship and the postural relationship between the processing head 13 (especially, the irradiation optical system 135) and the workpiece W.

The position measurement apparatus 162 is configured to measure a position of the stage 15. The position measurement apparatus 162 may include an interferometer (for example, a laser interferometer), for example. The position measurement apparatus 162 may include an encoder (for example, at least one of a linear encoder and a rotary encoder), for example. The position measurement apparatus 162 may include a potentiometer, for example. **In** a case where the stage driving system 161 uses a stepping motor as a driving source, the position measurement apparatus 162 may include an open-loop control type of position detection apparatus, for example. The open-loop control type of position detection apparatus is a position detection apparatus that measures the position of the stage 15 by estimating a moving distance of the stage 15 from a cumulative value of the number of pulses for driving the stepping motor.

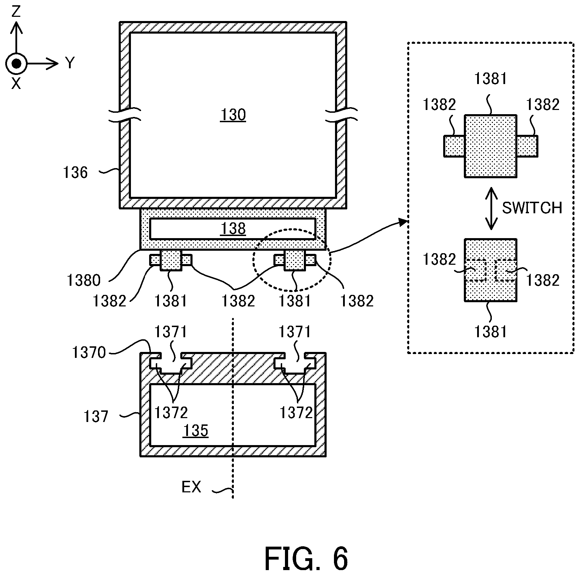

The head change apparatus 17 is an apparatus that is configured to exchange the irradiation optical system 135 of the processing head 13. For example, the head change apparatus 17 may detach the irradiation optical system 135 attached to the processing head 13. For example, the head change apparatus 17 may attach the irradiation optical system 135 to the processing head 13 to which the irradiation optical system 135 is not attached. As one example, the head change apparatus 17 may detach a first irradiation optical system 135 attached to the processing head 13, and then attach a second irradiation optical system 135, which is different from the first irradiation optical system 135, to the processing head 13. Namely, the head change apparatus 17 may replace the first irradiation optical system 135 attached to the processing head 13 with the second irradiation optical system 135. Therefore, the irradiation optical system 135 may be attachable to and detachable from the processing head 13. Incidentally, a configuration of the irradiation optical system 135, which is attachable to and detachable from the processing head 13, and a configuration of the head change apparatus 17 will be described in detail later, with reference to FIG. 6 to FIG. 9.

The control unit 2 controls an operation of the processing unit 1. For example, the control unit 2 may control an operation of the processing head 13 of the processing unit 1. For example, the control unit 2 may control an operation of at least one of the processing optical system 131, the measurement optical system 132, the combining optical system 133, the deflection optical system, and the irradiation optical system 135 of the processing head 13. For example, the control unit 2 may control an operation of the head driving system 141 of the processing unit 1 (for example, the movement of the processing head 13). For example, the control unit 2 may control an operation of the stage driving system 161 of the processing unit 1 (for example, the movement of the stage 15). For example, the control unit 2 may control an operation of the head change apparatus 17.

The control unit 2 may control the operation of the processing unit 1 based on a measured result of the measurement target object M by the processing unit 1. Specifically, the control unit 2 may generate measurement data of the measurement target object M (for example, data related to at least one of the position and the shape of the measurement target object M) based on the measured result of the measurement target object M, and may control the operation of the processing unit 1 based on the generated measurement data. For example, the control unit 2 may generate measurement data of the workpiece W (for example, data related to at least one of the position and the shape of the workpiece W) based on the measured result of the workpiece W that is one example of the measurement target object M, and may control the operation of the processing unit 1 to process the workpiece W based on the measurement data.

The control unit 2 may include a processor and a storage apparatus, for example. The processor may include at least one of a CPU (Central Processing Unit) and a GPU (Graphical Processing Unit), for example. The storage apparatus may include a memory, for example. The control unit 2 serves as an apparatus for controlling the operation of the processing unit 1 by means of the processor executing a computer program. The computer program is a computer program that allows the processor to execute (namely, to perform) a below-described operation that should be executed by the control unit 2. Namely, the computer program is a computer program that allows the control unit 2 to function so as to make the processing unit 1 perform the below-described operation. The computer program executed by the processor may be recorded in the storage apparatus (namely, a recording medium) of the control unit 2, or may be recorded in any recording medium (for example, a hard disk or a semiconductor memory) that is built in the control unit 2 or that is attachable to the control unit 2. Alternatively, the processor may download the computer program that should be executed from an apparatus positioned at the outside of the control unit 2 through a network interface.

The control unit 2 may not be positioned in the processing unit 1. For example, the control unit 2 may be positioned at the outside of the processing unit 1 as a server or the like. In this case, the control unit 2 may be connected to the processing unit 1 through a wired and / or wireless network (alternatively, a data bus and / or a communication line). A network using a serial-bus-type interface such as at least one of IEEE1394, RS-232x, RS-422, RS-423, RS-485 and USB may be used as the wired network. A network using a parallel-bus-type interface may be used as the wired network. A network using an interface that is compatible to Ethernet (a registered trademark) such as at least one of 10-BASE-T, 100BASE-TX or 1000BASE-T may be used as the wired network. A network using an electrical wave may be used as the wireless network. A network that is compatible to IEEE802.1x (for example, at least one of a wireless LAN and Bluetooth (registered trademark)) is one example of the network using the electrical wave. A network using an infrared ray may be used as the wireless network. A network using an optical communication may be used as the wireless network. In this case, the control unit 2 and the processing unit 1 may be configured to transmit and receive various information through the network. Moreover, the control unit 2 may be configured to transmit information such as a command and a control parameter to the processing unit 1 through the network. The processing unit 1 may include a receiving apparatus that receives the information such as the command and the control parameter from the control unit 2 through the network. The processing unit 1 may include a transmitting apparatus that transmits the information such as a command and a control parameter to the control unit 2 (namely, an output apparatus that outputs the information to the control unit 2) through the network. Alternatively, a first control apparatus that performs a part of the processing performed by the control unit 2 may be positioned in the processing unit 1 and a second control apparatus that performs another part of the processing performed by the control unit 2 may be positioned at the outside of the processing unit 1.

An arithmetic model that is buildable by machine learning may be implemented in the control unit 2 by the processor executing the computer program. One example of the arithmetic model that is buildable by the machine learning is an arithmetic model including a neural network (so-called Artificial Intelligence (AI)), for example. In this case, the learning of the arithmetic model may include learning of parameters of the neural network (for example, at least one of weights and biases). The control unit 2 may control the operation of the processing unit 1 by using the arithmetic model. Namely, the operation for controlling the operation of the processing unit 1 may include an operation for controlling the operation of the processing unit 1 by using the arithmetic model. Note that the arithmetic model that has been built by off-line machine learning using training data may be implemented in the control unit 2. Moreover, the arithmetic model implemented in the control unit 2 may be updated by online machine learning on the control unit 2. Alternatively, the control unit 2 may control the operation of the processing unit 1 by using the arithmetic model implemented in an apparatus external to the control unit 2 (namely, an apparatus external to the processing unit 1), in addition to or instead of the arithmetic model implemented on the control unit 2.

Note that the recording medium recording therein the computer program that should be executed by the control unit 2 may include an optical disc such as a CD-ROM, a CD-R, a CD-RW, a flexible disc, a MO, a DVD-ROM, a DVD-RAM, a DVD-R, a DVD+R, a DVD-RW, a DVD+RW and a Blu-ray (registered trademark), a magnetic disc such as a magnetic tape, an optical-magnetic disc, a semiconductor memory such as a USB memory, and another medium that is configured to store the program. The recording medium may include a device that is configured to record the computer program (for example, a device for a universal use or a device for an exclusive use in which the computer program is embedded to be executable in a form of at least one of a software, a firmware and the like). Moreover, each process or function included in the computer program may be realized by a logical process block that is realized in the control unit 2 by means of the control unit 2 (namely, a computer) executing the computer program, may be realized by a hardware such as a predetermined gate array (a FPGA, an ASIC) of the control unit 2, or may be realized in a form in which the logical process block and a partial hardware module that realizes an partial element of the hardware are combined.

### (1-2) Configuration of Processing Head 13

Next, with reference to FIG. 3, one example of the configuration of the processing head 13 will be described. FIG. 3 is a cross-sectional view that illustrates one example of the configuration of the processing head 13.

As illustrated in FIG. 3, the processing light EL generated by processing light source 11 enters the processing head 13 through a light transmitting member 111 such as an optical fiber and the like. The processing light source 11 may be positioned at the outside of the processing head 13. The processing light source 11 may be positioned in the processing head 13.

The processing head 13 includes the processing optical system 131, the measurement optical system 132, the combining optical system 133, the deflection optical system 134, and the irradiation optical system 135, as described above.

The processing optical system 131 is an optical system to which the processing light EL emitted from the processing light source 11 enters. The processing optical system 131 is an optical system that emits, toward the combining optical system 133, the processing light EL that has entered the processing optical system 131. The workpiece W is irradiated with the processing light EL emitted from the processing optical system 131 through the combining optical system 133, the deflection optical system 134, and the irradiation optical system 135.

The processing optical system 131 may include a position adjustment optical system 1311, an angle adjustment optical system 1312, and a Galvano mirror 1313, for example. However, the processing optical system 131 may not include at least one of the position adjustment optical system 1311, the angle adjustment optical system 1312, and the Galvano mirror 1313, for example.

The position adjustment optical system 1311 is configured to adjust an emitting position of the processing light EL from the processing optical system 131. The position adjustment optical system 1311 may include a parallel plate that is configured to incline with respect to a propagating direction of the processing light EL, for example, and change the emitting position of the processing light EL by changing an inclined angle of the parallel plate.

The angle adjustment optical system 1312 is configured to adjust an emitting angle (namely, an emitting direction) of the processing light EL from the processing optical system 131. The angle adjustment optical system 1312 may include a mirror that is configured to incline with respect to the propagating direction of the processing light EL, for example, and change the emitting angle of the processing light by changing an inclined angle of the mirror.

The Galvano mirror 1313 deflects the processing light EL (namely, changes the emitting angle of the processing light EL). The Galvano mirror 1313 changes a condensed position of the processing light EL in a plane intersecting an optical axis EX of the irradiation optical system 135 (namely, in a plane along the XY plane) by deflecting the processing light EL. As illustrated in FIG. 3, the processing head 13 usually irradiates the workpiece W with the processing light EL in a state where the optical axis EX intersects the surface of the workpiece W. Therefore, when the condensed position of the processing light EL in the plane intersecting the optical axis EX is changed, the irradiation position PA of the processing light EL on the surface of the workpiece W is changed (namely, is moved) in a direction along the surface of the workpiece W. Namely, the irradiation position PA of the processing light EL is changed along at least one of the X-axis direction and the Y-axis direction. Thus, the Galvano mirror 1341 is configured to change the irradiation position PA of the processing light EL, and therefore, it may be referred to as a position change optical system or a position change apparatus.

The Galvano mirror 1313 includes a X scanning mirror 1313X and a Y scanning mirror 1313Y. Each of the X scanning mirror 1313X and the Y scanning mirror 1313Y is an inclined angle variable mirror whose angle relative to an optical path of the processing light EL entering the Galvano mirror 1313 is changeable. The X scanning mirror 1313X deflects the processing light EL so as to change an irradiation position PA of the processing light EL on the workpiece W along the X-axis direction. In this case, the X scanning mirror 1313X may be configured to rotate or swing around the Y-axis. Namely, the Galvano mirror 1313 may be configured to change the irradiation position PA of the processing light EL on the workpiece W along the X-axis direction by changing the position of the X scanning mirror 1313X in the θY direction (alternatively, its posture around the Y-axis). The Y scanning mirror 1313Y deflects the processing light EL so as to change the irradiation position PA of the processing light EL on the surface of the workpiece W along the Y-axis direction. In this case, the Y scanning mirror 1313Y may be configured to rotate or swing around the X-axis. Namely, the Galvano mirror 1313 may be configured to change the irradiation position PA of the processing light EL on the workpiece W along the Y-axis direction by changing the position of the Y scanning mirror 1313Y in the θX direction (alternatively, its posture around the X-axis).

The processing light EL that has been emitted from the processing optical system 131 (in this case, the processing light EL that has been emitted from the Galvano mirror 1313) enters the combining optical system 133. The combining optical system 133 includes a beam splitter (for example, a polarization beam splitter) 1331. The beam splitter 1331 emits, toward the deflection optical system 134, the processing light EL that has entered the beam splitter 1331. In an example illustrated in FIG. 3, the processing light EL that has entered the beam splitter 1331 passes through a polarization split surface to be emitted toward the deflection optical system 134. Therefore, in the example illustrated in FIG. 3, the processing light EL enters the polarization split surface of the beam splitter 1331 in a state where the processing light EL has a polarized direction that allows the processing light EL to pass through the polarization split surface (a polarized direction that allows the processing light EL to be a p-polarized light with respect to the polarization split surface).

The processing light EL that has been emitted from the combining optical system 133 enters the deflection optical system 134. The deflection optical system 134 emits, toward the irradiation optical system 135, the processing light EL that has entered the deflection optical system 134.

The deflection optical system 134 includes a Galvano mirror 1341. The processing light EL that has entered the deflection optical system 134 enters the Galvano mirror 1341. The Galvano mirror 1341 deflects the processing light EL (namely, changing the emitting angle of the processing light EL). The Galvano mirror 1341 changes the condensed position of the processing light EL in a plane intersecting the optical axis EX of the irradiation optical system 135 (namely, a plane along the XY plane) by deflecting the processing light EL. As illustrated in FIG. 3, the processing head 13 usually irradiates the workpiece W with the processing light EL in a state where the optical axis EX intersects the surface of the workpiece W. Therefore, when the condensed position of the processing light EL in the plane intersecting the optical axis EX is changed, the irradiation position PA of the processing light EL on the surface of the workpiece W is changed (namely, is moved) in a direction along the surface of the workpiece W. Namely, the irradiation position PA of the processing light EL is changed along at least one of the X-axis direction and the Y-axis direction. Thus, the Galvano mirror 1341 is configured to change the irradiation position PA of the processing light EL, and therefore, it may be referred to as a position change apparatus.

The Galvano mirror 1341 includes a X scanning mirror 1341X and a Y scanning mirror 1341Y. Each of the X scanning mirror 1341X and the Y scanning mirror 1341Y is an inclined angle variable mirror whose angle relative to an optical path of the processing light EL entering the Galvano mirror 1341 is changeable. The X scanning mirror 1341X deflects the processing light EL so as to change the irradiation position PA of the processing light EL on the workpiece W along the X-axis direction. In this case, the X scanning mirror 1341X may be configured to rotate or swing around the Y-axis. Namely, the Galvano mirror 1341 may be configured to change the irradiation position PA of the processing light EL on the workpiece W along the X-axis direction by changing the position of the X scanning mirror 1341X in the θY direction (alternatively, its posture around the Y-axis). The Y scanning mirror 1341Y deflects the processing light EL so as to change the irradiation position PA of the processing light EL on the surface of the workpiece W along the Y-axis direction. In this case, the Y scanning mirror 1341Y may be configured to rotate or swing around the X-axis. Namely, the Galvano mirror 1341 may be configured to change the irradiation position PA of the processing light EL on the workpiece W along the Y-axis direction by changing the position of the Y scanning mirror 1341Y in the θX direction (alternatively, its posture around the X-axis).

At least one of the Galvano mirrors 1341 and 1313 can scan the processing shot area PSA, which is defined with respect to the processing head 13, with the processing light EL. Namely, at least one of the Galvano mirrors 1341 and 1313 can move the irradiation position PA in the processing shot area PSA, which is defined with respect to the processing head 13. FIG. 4 illustrates one example of the processing shot area PSA. As illustrated in FIG. 4, the processing shot area PSA indicates an area (in other words, a range) in which the processing head 13 performs the processing in a state where the positional relationship between the processing head 13 and the workpiece W is fixed (namely, is not changed). Typically, the processing shot area PSA is set to be an area that is the same as a scanning range or narrower than the scanning range of the processing light EL that is deflected by at least one of the Galvano mirrors 1341 and 1313 in a state where the positional relationship between the processing head 13 and the workpiece W is fixed. Furthermore, the processing shot area PSA (the irradiation position PA) is relatively movable relative on the surface of the workpiece W by means of the above-described head driving system 141 moving the processing head 13 and / or the stage driving system 161 moving the stage 15. Incidentally, the scanning range of the processing light EL described above may be a maximum range of the range that is scanned with the processing light EL.

Again in FIG. 3, the processing light EL that has been emitted from the deflection optical system 134 enters the irradiation optical system 135. As described above, when at least one of the Galvano mirrors 1341 of the deflection optical system 134 and the Galvano mirror 1313 of the processing optical system 131 deflects the processing light EL, an incident position of the processing light EL into the irradiation optical system 135 changes. Therefore, each of the Galvano mirrors 1341 and 1313 may be considered to serve as a position change apparatus that is configured to change the incident position of the processing light EL into the irradiation optical system 135 by deflecting the processing light EL.

Incidentally, the incident position of the processing light EL into the irradiation optical system 135, which changes by means of at least one of the Galvano mirror 1341 of the deflection optical system 134 and the Galvano mirror 1313 of the processing optical system 131 deflecting the processing light EL, may be an incident position of the processing light EL entering an optical member that is closest to the deflection optical system 134 (closest to the incident side) among optical member(s) included the irradiation optical system 135. Moreover, an incident angle of the processing light EL entering the irradiation optical system 135 (typically, an incident angle with respect to the optical axis EX of the irradiation optical system 135) may change by means of at least one of the Galvano mirror 1341 of the deflection optical system 134 and the Galvano mirror 1313 of the processing optical system 131 deflecting the processing light EL.

The irradiation optical system 135 is an optical system that is configured to irradiate the workpiece W with the processing light EL. In order to irradiate the workpiece W with the processing light EL, the irradiation optical system 135 includes an fθ lens 1351 that is configured to serve as an objective optical system. The processing light EL that has been emitted from the deflection optical system 134 enters the fθ lens 1351. The fθ lens 1351 irradiates the workpiece W with the processing light EL emitted from the deflection optical system 134. Specifically, the fθ lens 1351 emits the processing light EL toward a direction along the optical axis EX of the irradiation optical system 135. As a result, the processing light EL emitted from the fθ lens 1351 enters the workpiece W by propagating in the direction along the optical axis EX. Incidentally, the optical axis EX of the irradiation optical system 135 may be an optical axis of the fθ lens 1351.

The fθ lens 1351 may condense the processing light EL emitted from the Galvano mirror 1341 on the workpiece W. In this case, the processing light EL that has been emitted from the fθ lens 1351 may be irradiated onto the workpiece W without passing through another optical element (in other words, an optical member, and a lens for example) having a power. In this case, the fθ lens 1351 may be referred to as a terminal optical element, because it is a last optical element (namely, an optical element that is closest to the workpiece W) having a power of a plurality of optical elements positioned on the optical path of the processing light EL. Incidentally, the power of the optical element may be an inverse number of a focal length of the optical element. Moreover, in this case, the processing light EL from the Galvano mirror 1341 may be a parallel beam. Incidentally, the irradiation optical system 135 may include an objective optical system having a projection characteristic that is different from fθ.

Incidentally, at least one of the X scanning mirror 1341X and the Y scanning mirror 1341Y of the Galvano mirror 1341 and the X scanning mirror 1313X and the Y scanning mirror 1313Y of the Galvano mirror 1313 may be positioned at an entrance pupil position of the fθ lens 1351 as the irradiation optical system and / or a conjugate position thereof. In a case where there are a plurality of scanning mirrors in the Galvano mirrors 1341 and 1313, a relay optical system may be positioned between the scanning mirrors to allow the scanning mirrors to be optically conjugate to each other.

The measurement light ML generated by measurement light source 12 further enters the processing head 13 through a light transmitting member 121 such as an optical fiber and the like. The measurement light source 12 may be positioned at the outside of the processing head 13. The measurement light source 12 may be positioned in the processing head 13.

The measurement light source 12 may include a light comb light source. The light comb light source is a light source that is configured to generate, as the pulsed light, light including frequency components that are arranged with equal interval on a frequency axis (in the below-described description, it is referred to as a "light frequency comb"). In this case, the measurement light source 12 emits, as the measurement light ML, the pulsed light including the frequency components that are arranged with equal interval on the frequency axis. However, the measurement light source 12 may include a light source that is different from the light comb light source.

In the example illustrated in FIG. 3, the processing system SYSa includes a plurality of measurement light sources 12. For example, the processing system SYSa may include the measurement light source 12#1 and the measurement light source 12#2. The plurality of measurement light sources 12 may emit a plurality of measurement lights ML whose phases are synchronized with each other and that are coherent, respectively. For example, oscillation frequencies of the plurality of measurement light sources 12 may be different from each other. Therefore, the plurality of measurement lights ML respectively emitted from the plurality of measurement light sources 12 are the plurality of measurement lights ML having different pulse frequencies (for example, the number of the pulsed light per unit time, and an inverse number of the ON time of the pulsed light). However, the processing head 13 may include a single measurement light source 12.

The measurement light ML that has been emitted from the measurement light source 12 enters the measurement optical system 132. The measurement optical system 132 is an optical system that emits, toward the combining optical system 133, the measurement light ML that has entered the measurement optical system 132. The workpiece W is irradiated with the measurement light ML emitted from the measurement optical system 132 through the combining optical system 133, the deflection optical system 134, and the irradiation optical system 135.

The measurement optical system 132 includes a mirror 1320, a beam splitter 1321, a beam splitter 1322, a detector 1323, a beam splitter 1324, a mirror 1325, a detector 1326, a mirror 1327, and a Galvano mirror 1328, for example.

The measurement light ML that has been emitted from the measurement light source 12 enters the beam splitter 1321. Specifically, the measurement light ML that has been emitted from the measurement light source 12#1 (in the below-described description, it is referred to as the "measurement light ML#1") enters the beam splitter 1321. The measurement light ML that has been emitted from the measurement light source 12#2 (in the below-described description, it is referred to as the "measurement light ML#2") enters the beam splitter 1321 through the mirror 1320. The beam splitter 1321 emits, toward the beam splitter 1322, the measurement lights ML#1 and ML#2 that has entered the beam splitter 1321. Namely, the beam splitter 1321 emits, toward the same direction (namely, toward a direction along which the beam splitter 1322 is positioned), the measurement lights ML#1 and ML#2 that has entered the beam splitter 1321 from different directions, respectively.

The beam splitter 1322 reflects, toward the detector 1323, measurement light ML#1-1 that is a part of the measurement light ML#1 that has entered the beam splitter 1322. The beam splitter 1322 emits, toward the beam splitter 1324, measurement light ML#1-2 that is another part of the measurement light ML#1 that has entered the beam splitter 1322. The beam splitter 1322 reflects, toward the detector 1323, measurement light ML#2-1 that is a part of the measurement light ML#2 that has entered the beam splitter 1322. The beam splitter 1322 emits, toward the beam splitter 1324, measurement light ML#2-2 that is another part of the measurement light ML#2 that has entered the beam splitter 1322.

The measurement lights ML#1-1 and ML#2-1 that have been emitted from the beam splitter 1322 enter the detector 1323. The detector 1323 optically receives (namely, detects) the measurement light ML#1-1 and the measurement light ML#2-1. Especially, the detector 1323 optically receives interference light generated by an interference between the measurement light ML#1-1 and the measurement light ML#2-1. Incidentally, an operation for optically receiving the interference light generated by the interference between the measurement light ML#1-1 and the measurement light ML#2-1 may be considered to be equivalent to an operation for optically receiving the measurement light ML#1-1 and the measurement light ML#2-1. A detected result by the detector 1323 is output to the control unit 2.

The measurement light ML that has been emitted from the beam splitter 1322 enters the beam splitter 1324. The beam splitter 1324 emits, toward the mirror 1325, a part of the measurement light ML#1-2 that has entered the beam splitter 1324. The beam splitter 1324 emits, toward the mirror 1327, a part of the measurement light ML#2-2 that has entered the beam splitter 1324.

The measurement light ML#1-2 that has been emitted from the beam splitter 1324 enters the mirror 1325. The measurement light ML#1-2 that has entered the mirror 1325 is reflected by a reflection surface (the reflection surface may be referred to as a reference surface) of the mirror 1325. Specifically, the mirror 1325 reflects, toward the beam splitter 1324, the measurement light ML#1-2 that has entered the mirror 1325. Namely, the mirror 1325 emits the measurement light ML#1-2, which has entered the mirror 1325, toward the beam splitter 1324 as measurement light ML#1-3 that is a reflection light thereof. In this case, the measurement light ML#1-3 may be referred to as a reference light. The measurement light ML#1-3 that has been emitted from the mirror 1325 enters the beam splitter 1324. The beam splitter 1324 emits, toward the beam splitter 1322, the measurement light ML#1-3 that has entered the beam splitter 1324. The measurement light ML#1-3 that has been emitted from the beam splitter 1324 enters the beam splitter 1322. The beam splitter 1322 emits, toward the detector 1326, the measurement light ML#1-3 that has entered the beam splitter 1322.

On the other hand, the measurement light ML#2-2 that has been emitted from the beam splitter 1324 enters the mirror 1327. The mirror 1327 reflects, toward the Galvano mirror 1328, the measurement light ML#2-2 that has entered the mirror 1327. Namely, the mirror 1327 emits, toward the Galvano mirror 1328, the measurement light ML#2-2 that has entered the mirror 1327.

The Galvano mirror 1328 deflect the measurement light ML#2-2 (namely, change an emitting angle of the measurement light ML#2-2). The Galvano mirror 1328 changes a condensed position of the measurement light ML#2-2 in a plane intersecting the optical axis EX of the fθ lens 1351 (namely, a plane along the XY plane) by deflecting the measurement light ML#2-2. As illustrated in FIG. 3, the processing head 13 usually irradiates the measurement target object M with the measurement light ML#2-2 in a state where the optical axis EX of the fθ lens 1351 intersects the surface of the measurement target object M. Therefore, when the condensed position of the measurement light ML#2-2 in the plane intersecting the optical axis EX of the fθ lens 1351 is changed, the irradiation position MA of the measurement light ML#2-2 on the surface of the measurement target object M is changed (namely, is moved) in a direction along the surface of the measurement target object M. Namely, the irradiation position MA of the measurement light ML#2-2 is changed along at least one of the X-axis direction and the Y-axis direction. Thus, the Galvano mirror 1328 is configured to change the irradiation position MA of the measurement light ML#2-2, and therefore, it may be referred to as a position change optical system or a position change apparatus.

The Galvano mirror 1328 includes a X scanning mirror 1328X and a Y scanning mirror 1328Y. Each of the X scanning mirror 1328X and the Y scanning mirror 1328Y is an inclined angle variable mirror whose angle relative to an optical path of the measurement light ML#2-2 entering the Galvano mirror 1328 is changeable. The X scanning mirror 1328X deflects the measurement light ML#2-2 so as to change the irradiation position MA of the measurement light ML#2-2 on the surface of the measurement target object M along the X-axis direction. In this case, the X scanning mirror 1328X may be configured to rotate or swing around the Y-axis. Namely, the Galvano mirror 1328 may be configured to change the irradiation position MA of the measurement light ML#2-2 on the measurement target object M along the X-axis direction by changing the position of the X scanning mirror 1328X in the θY direction (alternatively, its posture around the Y-axis). The Y scanning mirror 1328Y deflects the measurement light ML#2-2 so as to change the irradiation position MA of the measurement light ML#2-2 on the surface of the workpiece W along the Y-axis direction. In this case, the Y scanning mirror 1328Y may rotate or swing around the X-axis. Namely, the Galvano mirror 1328 may be configured to change the irradiation position MA of the measurement light ML#2-2 on the measurement target object M along the Y-axis direction by changing the position of the Y scanning mirror 1328Y in the θX direction (alternatively, its posture around the X-axis).

The measurement light ML#2-2 emitted from the measurement optical system 132 (in this case, the measurement light ML#2-2 emitted from the Galvano mirror 1328) enters the combining optical system 133. The beam splitter 1331 of the combining optical system 133 emits, toward the deflection optical system 134, the measurement light ML#2-2 that has entered the beam splitter 1331. In the example illustrated in FIG. 3, the measurement light ML#2-2 that has entered the beam splitter 1331 is reflected by the polarization split surface to be emitted toward the deflection optical system 134. Therefore, in the example illustrated in FIG. 3, the measurement light ML#2-2 enters the polarization split surface of the beam splitter 1331 in a state where the measurement light ML#2-2 has a polarized direction that allows the measurement light ML#2-2 to be reflected by the polarization split surface (a polarized direction that allows the measurement light ML#2-2 to be a s-polarized light with respect to the polarization split surface).

Here, not only the measurement light ML#2-2 but also the processing light EL enter the beam splitter 1331 as described above. Namely, both of the measurement light ML#2-2 and the processing light EL pass through the beam splitter 1331. The beam splitter 1331 emits, toward same direction (namely, toward the same deflection optical system 134), the processing light EL and the measurement light ML#2-2 that enter the beam splitter 1331 from different directions, respectively. Therefore, the beam splitter 1331 substantially serves as an combining optical member that combines the processing light EL and the measurement light ML#2-2.

Incidentally, in a case where the wavelength of the processing light EL is different from the wavelength of the measurement light ML#2-2, the combining optical system 133 may include a dichroic mirror as the combining optical member instead of the beam splitter 1331. Even in this case, the combining optical system 133 may combine the processing light EL and the measurement light ML#2-2 (namely, combine the optical path of the processing light EL and the optical path of the measurement light ML#2-2) by using the dichroic mirror.

The measurement light ML#2-2 that has been emitted from the combining optical system 133 enters the deflection optical system 134. The deflection optical system 134 emits, toward the irradiation optical system 135, the measurement light ML#2-2 that has entered the deflection optical system 134.

The measurement light ML#2-2 that has entered the deflection optical system 134 enters the Galvano mirror 1341. The Galvano mirror 1341 deflects the measurement light ML#2-2, as with the case where the processing light EL is deflected. Therefore, the Galvano mirror 1341 is configured to change the irradiation position MA of the measurement light ML#2-2 on the surface of the measurement target object M in a direction along the surface of the measurement target object M. Namely, the Galvano mirror 1341 may be configured to change the irradiation position MA of the measurement light ML#2-2 on the measurement target object M along the X-axis direction by changing the position of the X scanning mirror 1341X in the θY direction (alternatively, its posture around the Y-axis). The Galvano mirror 1341 may be configured to change the irradiation position MA of the measurement light ML#2-2 on the measurement target object M along the Y-axis direction by changing the position of the Y scanning mirror 1341Y in the θX direction (alternatively, its posture around the X-axis). Thus, the Galvano mirror 1341 is configured to change the irradiation position MA of the measurement light ML#2-2, and therefore, it may be referred to as a position change optical system or a position change apparatus.

As described above, not only the measurement light ML#2-2 but also the processing light EL enter the Galvano mirror 1341. Namely, the processing light EL and the measurement light ML#2-2 combined by the combining optical system 133 enter the Galvano mirror 1341. Therefore, both of the processing light EL and the measurement light ML#2-2 pass through the same Galvano mirror 1341. Therefore, the Galvano mirror 1341 is configured to change the irradiation position PA of the processing light EL and the irradiation position MA of the measurement light ML#2-2 in synchronization with each other. Namely, the Galvano mirror 1341 may change the irradiation position PA of the processing light EL and the irradiation position MA of the measurement light ML#2-2 in conjunction with each other.

On the other hand, the measurement light ML#2-2 is irradiated onto the measurement target object M through the Galvano mirror 1328 and the processing light EL is irradiated onto the workpiece W without passing through the Galvano mirror 1328. Therefore, the processing system SYSa is configured to independently move the irradiation position MA of the measurement light ML#2-2 relative to the irradiation position PA of the processing light EL by using the Galvano mirror 1328. Namely, the processing system SYSa is configured to change a relative positional relationship between the irradiation position PA of the processing light EL and the irradiation position MA of the measurement light ML#2-2 by using the Galvano mirror 1328. Especially, the processing system SYSa is configured to change the positional relationship between the irradiation position PA of the processing light EL and the irradiation position MA of the measurement light ML#2-2 along a direction intersecting an irradiation direction of the measurement light ML#2-2 (in the example illustrated in FIG. 3, at least one of the X-axis direction and the Y-axis direction) by using the Galvano mirror 1328.

Similarly, the processing light EL is irradiated onto the measurement target object M through the Galvano mirror 1313 and the measurement light ML#2-2 is irradiated onto the workpiece W without passing through the Galvano mirror 1313. Therefore, the processing system SYSa is configured to independently move the irradiation position PA of the processing light EL relative to the irradiation position MA of the measurement light ML#2-2 by using the Galvano mirror 1313. Namely, the processing system SYSa is configured to change the relative positional relationship between the irradiation position PA of the processing light EL and the irradiation position MA of the measurement light ML#2-2 by using the Galvano mirror 1313. Especially, the processing system SYSa is configured to change the positional relationship between the irradiation position PA of the processing light EL and the irradiation position MA of the measurement light ML#2-2 along a direction intersecting an irradiation direction of the processing light EL (in the example illustrated in FIG. 3, at least one of the X-axis direction and the Y-axis direction) by using the Galvano mirror 1313.

At least one of the Galvano mirrors 1341 and 1328 can scan the measurement shot area MSA, which is defined with respect to the processing head 13, with the measurement light ML#2-2. Namely, at least one of the Galvano mirrors 1341 and 1328 can move the irradiation position MA in the measurement shot area MSA, which is defined with respect to the processing head 13. FIG. 5 illustrates one example of the measurement shot area MSA. As illustrated in FIG. 5, the measurement shot area MSA indicates an area (in other words, a range) in which the processing head 13 performs the measurement in a state where the positional relationship between the processing head 13 and the measurement target object M is fixed (namely, is not changed). Typically, the measurement shot area MSA is set to be an area that is the same as a scanning range or narrower than the scanning range of the measurement light ML#2-2 that is deflected by at least one of the Galvano mirrors 1341 and 1328 in a state where the positional relationship between the processing head 13 and the measurement target object M is fixed. Furthermore, the measurement shot area MSA (the irradiation position MA) is relatively movable relative on the surface of the measurement target object M by means of the above-described head driving system 141 moving the processing head 13 and / or the stage driving system 161 moving the stage 15. Incidentally, the scanning range of the measurement light ML#2-2 described above may be a maximum range of the range that is scanned with the measurement light ML#2-2.

Again in FIG. 3, the measurement light ML#2-2 that has been emitted from the deflection optical system 134 enters the irradiation optical system 135. As described above, when at least one of the Galvano mirrors 1341 of the deflection optical system 134 and the Galvano mirror 1328 of the measurement optical system 132 deflects the measurement light ML#2-2, an incident position of the measurement light ML#2-2 into the irradiation optical system 135 changes. Therefore, each of the Galvano mirrors 1341 and 1328 may be considered to serve as a position change apparatus that is configured to change the incident position of the measurement light ML#2-2 into the irradiation optical system 135 by deflecting the measurement light ML#2-2.

The irradiation optical system 135 is an optical system that is configured to irradiate the measurement target object M (in the example illustrated in FIG. 3, the workpiece W) with the measurement light ML#2-2. Specifically, the fθ lens 1351 irradiates the measurement target object M with the measurement light ML#2-2 emitted from the deflection optical system 134. Specifically, the fθ lens 1351 emits the measurement light ML#2-2 toward a direction along the optical axis EX of the irradiation optical system 135. As a result, the measurement light ML#2-2 emitted from the fθ lens 1351 enters the measurement target object M by propagating in the direction along the optical axis EX.

The fθ lens 1351 may condense the measurement light ML#2-2 emitted from the deflection optical system 134 on the measurement target object M. In this case, the measurement light ML#2-2 that has been emitted from the fθ lens 1351 may be irradiated onto the measurement target object M without passing through another optical element (in other words, an optical member, and a lens for example) having a power. In this case, the fθ lens 1351 may be referred to as a terminal optical element, because it is a last optical element (namely, an optical element that is closest to the measurement target object M) having a power of a plurality of optical elements positioned on the optical path of the measurement light ML#2-2. In this case, the measurement light ML#2-2 from the deflection optical system 134 may be a parallel beam.

When the measurement target object M is irradiated with the measurement light ML#2-2, light due to the irradiation with the measurement light ML#2-2 is generated from the measurement target object M. Namely, when the measurement target object M is irradiated with the measurement light ML#2-2, the light due to the irradiation with the measurement light ML#2-2 is emitted from the measurement target object M. The light due to the irradiation with the measurement light ML#2-2 (in other words, the light emitted from the measurement target object M due to the irradiation with the measurement light ML#2-2) may include at least one of the measurement light ML#2-2 reflected by the measurement target object M (namely, reflection light), the measurement light ML#2-2 scattered by the measurement target object M (namely, scattering light), the measurement light ML#2-2 diffracted by the measurement target object M (namely, diffraction light) and the measurement light ML#2-2 transmitted through the measurement target object M (namely, transmitted light).

At least a part of the light emitted from the measurement target object M due to the irradiation with the measurement light ML #2-2 enters the irradiation optical system 135 as the returned light RL. Specifically, the light, which propagates along the optical path of the measurement light ML #2-2 entering the measurement target object M, of the light emitted from the measurement target object M due to the irradiation with the measurement light ML #2-2 enters the irradiation optical system 135 as the returned light RL. In this case, the optical path of the measurement light ML #2-2 that is emitted from the irradiation optical system 135 to enter the measurement target object M may be the same as the optical path of the returned light RL that is emitted from the measurement target object M to enter the irradiation optical system 135. The returned light RL that has entered the irradiation optical system 135 enters the deflection optical system 134 through the fθ lens 1351. The returned light RL that has entered the deflection optical system 134 enters the combining optical system 133 through the Galvano mirror 1341. The beam splitter 1331 of the combining optical system 133 emits, toward the measurement optical system 132, the returned light RL that has entered the beam splitter 1331. In the example illustrated in FIG. 3, the returned light RL that has entered the beam splitter 1331 is reflected by the polarization split surface to be emitted toward the measurement optical system 132. Therefore, in the example illustrated in FIG. 3, the returned light RL enters the polarization split surface of the beam splitter 1331 in a state where the returned light RL has a polarized direction that allows the returned light RL to be reflected by the polarization split surface.

The returned light RL that has been emitted from the beam splitter 1331 enters the Galvano mirror 1328 of the measurement optical system 132. The Galvano mirror 1328 emits, toward the mirror 1327, the returned light RL that has entered the Galvano mirror 1328. The mirror 1327 reflects, toward the beam splitter 1324, the returned light RL that has entered the mirror 1327. The beam splitter 1324 emits, toward the beam splitter 1322, at least a part of the returned light RL that has entered the beam splitter 1324. The beam splitter 1322 emits, toward the detector 1326, at least a part of the returned light RL that has entered the beam splitter 1322.

As described above, not only the returned light RL but also the measurement light ML#1-3 enter the detector 1326. Namely, the returned light RL that propagates toward the detector 1326 through the measurement target object M and the measurement light ML#1-3 that propagates toward the detector 1326 without going through the measurement target object M enter the detector 1326. The detector 1326 optically receives (namely, detects) the measurement light ML#1-3 and the returned light RL. Especially, the detector 1326 optically receives interference light generated by an interference between the measurement light ML#1-3 and the returned light RL. Incidentally, an operation for optically receiving the interference light generated by the interference between the measurement light ML#1-3 and the returned light RL may be considered to be equivalent to an operation for optically receiving the measurement light ML#1-3 and the returned light RL. A detected result by detector 1326 is output to the control unit 2.

The control unit 2 acquires the detected result by the detector 1323 and the detected result by the detector 1326. The control unit 2 may generate the measurement data of the measurement target object M (for example, the measurement data related to at least one of the position and the shape of the measurement target object M) based on the detected result by the detector 1323 and the detected result by the detector 1326.

Specifically, since the pulse frequency of the measurement light ML#1 is different from the pulse frequency of the measurement light ML#2, a pulse frequency of the measurement light ML#1-1 is different from a pulse frequency of the measurement light ML#2-1. Therefore, the interference light generated by the interference between the measurement light ML#1-1 and the measurement light ML#2-1 is interference light in which pulsed light appears in synchronization with a timing at which the pulsed light of the measurement light ML#1-1 and the pulsed light of the measurement light ML#2-1 enter the detector 1323 at the same time. Similarly, a pulse frequency of the measurement light ML#1-3 is different from a pulse frequency of the returned light RL. Therefore, the interference light generated by the interference between the measurement light ML#1-3 and the returned light RL is interference light in which pulsed light appears in synchronization with a timing at which the pulsed light of the measurement light ML#1-3 and the pulsed light of the returned light RL enter the detector 1326 at the same time. Here, a position (a position along a time axis) of the pulsed light of the interference light detected by the detector 1326 changes depending on the positional relationship between the processing head 13 and the measurement target object M. This is because the interference light detected by the detector 1326 is the interference light generated by the interference between the returned light RL that propagates toward the detector 1326 through the measurement target object M and the measurement light ML#1-3 that propagates toward the detector 1326 without going through the measurement target object M. On the other hand, a position (a position along a time axis) of the pulsed light of the interference light detected by the detector 1323 does not change depending on the positional relationship between the processing head 13 and the measurement target object M. Therefore, it can be said that a difference in time between the pulsed light of the interference light detected by the detector 1323 and the pulsed light of the interference light detected by the detector 1326 indirectly indicates the positional relationship between the processing head 13 and the measurement target object M. Specifically, it can be said that the difference in time between the pulsed light of the interference light detected by the detector 1323 and the pulsed light of the interference light detected by the detector 1326 indirectly indicates a distance between the processing head 13 and the measurement target object M in the direction along the optical path of the measurement light ML (namely, a direction along the propagating direction of the measurement light ML). Therefore, the control unit 2 may calculate the distance between the processing head 13 and the measurement target object M in the direction along the optical path of the measurement light ML (for example, the Z-axis direction) based on the difference in time between the pulsed light of the interference light detected by the detector 1323 and the pulsed light of the interference light detected by the detector 1326. In other words, the control unit 2 may calculate the position of the measurement target object M in the direction along the optical path of the measurement light ML (for example, the Z-axis direction). More specifically, the control unit 2 may calculate the distance between the processing head 13 and an irradiated part of the measurement target object M that is irradiated with the measurement light ML#2-2. The control unit 2 may calculate the position of the irradiated part in the direction along the optical path of the measurement light ML (for example, the Z-axis direction). Furthermore, since the irradiation position of the measurement light ML #2-2 on the measurement target object M is determined by driving states of the Galvano mirrors 1341 and 1328, the control unit 2 may calculate, based on the driving states of the Galvano mirrors 1341 and 1328, the position of the irradiated part in the direction intersecting the optical path of the measurement light ML (for example, at least one of the X-axis direction and the Y-axis direction). As a result, the control unit 2 may generate the measurement data indicating the position (for example, the position in a three-dimensional coordinate space) of the irradiated part in the measurement coordinate system that is based on the processing head 13.

The processing head 13 may irradiate a plurality of parts of the measurement target object M with the measurement light ML #2-2. For example, at least one of the Galvano mirrors 1341 and 1328 may change the irradiation position of the measurement light ML#2-2 on the measurement target object M so that the processing head 13 irradiates the plurality of parts of the measurement target object M with the measurement light ML #2-2. For example, at least one of the processing head 13 and the stage 15 may move so that processing head 13 irradiates the plurality of parts of the measurement target object M with the measurement light ML #2-2. In a case where the plurality of parts of the measurement target object M are irradiated with the measurement light ML #2-2, the control unit 2 may generate the measurement data indicating the positions of the plurality of parts of the measurement target object M. As a result, the control unit 2 may generate the measurement data indicating the shape of the measurement target object M based on the measurement data indicating the positions of the plurality of parts. For example, the control unit 2 may generate the measurement data indicating the shape of the measurement target object M by calculating, as the shape of the measurement target object M, a three-dimensional shape formed by a virtual planar plane (alternatively, curved plane) connecting the plurality of parts whose positions are calculated.

### (1-3) Configuration of Processing Head 13 in which Irradiation Optical System 135 is exchangeable

In the first example embodiment, as described above, the irradiation optical system 135, which irradiates the workpiece W with the processing light EL and irradiates the measurement target object M with the measurement light ML, is exchangeable. Next, with reference to FIG. 3, a configuration of the processing head 13 in which the irradiation optical system 135 is exchangeable will be described.

As illustrated in FIG. 3, the processing optical system 131, the measurement optical system 132, the combining optical system 133, and the deflection optical system 134 may be contained in a head housing 136 of the processing head 13. On the other hand, the irradiation optical system 135 may be contained in a head housing 137 of the processing head 13 that is different from the head housing 136. At least one of the head housings 136 and 137 may be referred to as a barrel.

In this case, each of the processing light EL and the measurement light ML enters the irradiation optical system 135 contained in the head housing 137 through the processing optical system 131, the measurement optical system 132, the combining optical system 133, and the deflection optical system 134 contained in the head housing 136. Namely, an optical system, which includes the processing optical system 131, the measurement optical system 132, the combining optical system 133, and the deflection optical system 134 contained in the head housing 136, emits the processing light EL and the measurement light ML toward the irradiation optical system 135. Therefore, in the below-described description, for convenience of description, the optical system including the processing optical system 131, the measurement optical system 132, the combining optical system 133, and the deflection optical system 134 is referred to as an emission optical system 130 that emits the processing light EL and the measurement light ML toward the irradiation optical system 135.

The head housing 137 is attachable to the head housing 136. The head housing 137 attached to the head housing 136 is detachable from the head housing 136. Namely, the head housing 137 is attachable to and detachable from the head housing 136. In this case, the irradiation optical system 135 contained in the head housing 137 may be considered to be attachable to the emission optical system 130 contained in the head housing 136. The irradiation optical system 135 attached to the emission optical system 130 may be considered to be detachable from the emission optical system 130. Namely, the irradiation optical system 135 may be considered to be attachable to and detachable from the emission optical system 130.

In the first example embodiment, the head housing 137 may be attachable to and detachable from the head housing 136 through an attachment adapter 138. Namely, the irradiation optical system 135 may be attachable to and detachable from the emission optical system 130 through the attachment adapter 138. However, the head housing 137 may be attachable to and detachable from the head housing 136 without using the attachment adapter 138. Namely, the irradiation optical system 135 may be attachable to and detachable from the emission optical system 130 without using the attachment adapter 138.

FIG. 6 illustrates one example of the attachment adapter 138. As illustrated in FIG. 6, the attachment adapter 138 may be attached to the head housing 136. In an example illustrated in FIG. 6, the attachment adapter 138 may be attached to the head housing 136 so that an upper surface (specifically, a surface facing toward the +Z side) of the attachment adapter 138 faces a lower surface (specifically, a surface facing toward the -Z side) of the head housing 136.

A lower surface (specifically, a surface facing toward the -Z side) of the attachment adapter 138 may be used as an attachment surface 1380 to which the head housing 137 is attached. Namely, the head housing 137 may be attached to the attachment adapter 138 so that an attachment surface 1370, which is an upper surface of the head housing 137, faces the attachment surface 1380 of the attachment adapter 138. As a result, the head housing 137 is attached to the head housing 136 through the attachment adapter 138.

In order to attach the head housing 137 to the attachment adapter 138, at least one attachment pin 1381 may be formed on the attachment surface 1380 of the attachment adapter 138. At least one attachment pin 1382 may be formed on a side surface of each attachment pin 1381. As illustrated in an enlarged view of the attachment pin 1381 on the right side of FIG. 6, a state of each attachment pin 1382 may be switchable between a state where each attachment pin 1382 is contained in the attachment pin 1381 (as a result, each attachment pin 1382 does not protrude from the side surface of the attachment pin 1381) and a state where each attachment pin 1382 is not contained in the attachment pin 1381 (as a result, each attachment pin 1382 protrudes from the side surface of the attachment pin 1381). For example, the state of each attachment pin 1382 may be switchable between the state where each attachment pin 1382 is contained in the attachment pin 1381 and the state where each attachment pin 1382 is not contained in the attachment pin 1381 by using a force for moving the attachment pin 1382.

The force for moving the attachment pin 1382 may be a force applied to the attachment pin 1382 from the head housing 137. For example, there is a possibility that the attachment pin 1382 contacts a surface of the head housing 137 (for example, a surface that forms a below-described attachment hole 1371) in a process of attaching the head housing 137 to the attachment adapter 138. In this case, a force for pushing the attachment pin 1382 from the surface of the head housing 137 is applied to the attachment pin 1382. The attachment pin 1382 may move due to the force for pushing the attachment pin 1382 applied from the surface of the head housing 137. Namely, the attachment pin 1382 may be contained in the attachment pin 1381 by the force for pushing the attachment pin 1382 applied from the surface of the head housing 137. Incidentally, in this case, a curvature of at least a part of the surface of the attachment pin 1382 may be set to an appropriate curvature so that the force is appropriately applied to the attachment pin 1382 from the surface of the head housing 137. At least a part of the surface of the attachment pin 1382 may be a curved surface.

The force for moving the attachment pin 1382 may be a force caused by gas (for example, air), for example. The force for moving the attachment pin 1382 may be a force caused by a pressure of the gas (for example, the air), for example. In this case, a pneumatic apparatus that supplies the gas may move the attachment pin 1382. As the gas for moving the attachment pin 1382, the purge gas may be used, or gas different from the purge gas may be used.

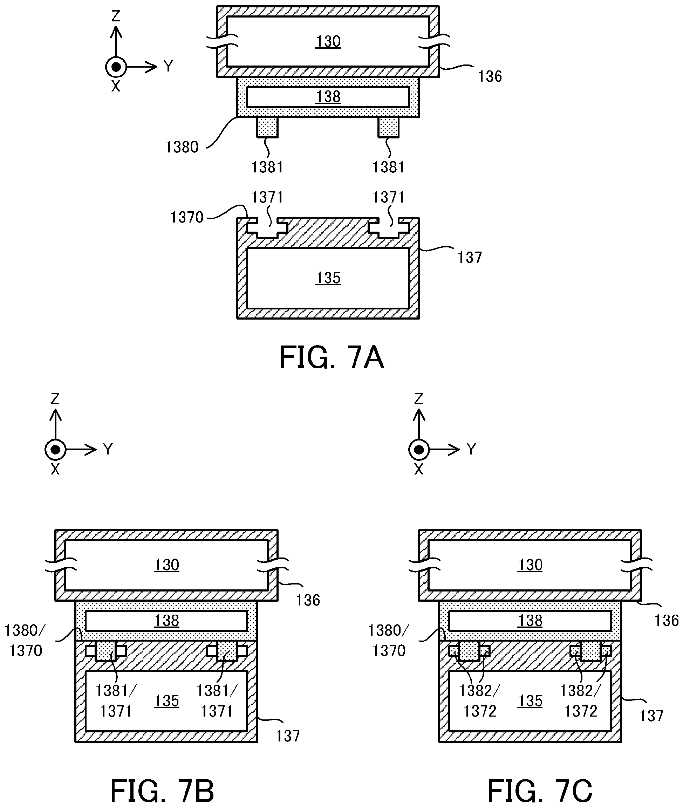

Incidentally, in the example illustrated in FIG. 6 and FIG. 7, two attachment pins 1381 are positioned on a straight line intersecting the optical axis EX of the irradiation optical system 135. However, the number of attachment pins 1381 is not limited to two. A single attachment pin 1381 may be formed. Three or more attachment pins 1381 may be formed.

Furthermore, in order to attach the head housing 137 to the attachment adapter 138, the attachment hole 1371, into which the attachment pin 1381 of the attachment adapter 138 is insertable, may be formed in the attachment surface 1370 of the head housing 137. The number of attachment holes 1371 formed at the head housing 137 may be the same as the number of attachment pins 1381 formed in the attachment adapter 138. Furthermore, the attachment hole 1371 may be connected to an attachment hole 1372 into which the attachment pin 1382 of the attachment adapter 138 is insertable. The number of attachment holes 1372 connected to each attachment hole 1371 may be the same as the number of attachment pins 1382 formed on each attachment pin 1381.

In this case, in order to attach the head housing 137 to the attachment adapter 138, as illustrated in FIG. 7A, the state of each attachment pin 1382 may be switched to the state where each attachment pin 1382 is contained in the attachment pin 1381. Then, as illustrated in FIG. 7B, a position of the head housing 137 relative to the attachment adapter 138 may be adjusted so that each attachment pin 1381 is inserted into each attachment hole 1371. Then, as illustrated in FIG. 7C, the state of each attachment pin 1382 may be switched to the state where each attachment pin 1382 is not contained in the attachment pin 1381. As a result, as illustrated in FIG. 7C, the attachment pin 1382 is inserted into the attachment hole 1372, and the head housing 137 is fixed to the attachment adapter 138. Namely, the head housing 137 is attached to the head housing 136. In other words, the irradiation optical system 135 is attached to the emission optical system 130.

On the other hand, in order to detach the head housing 137 attached to the attachment adapter 138, as illustrated in FIG. 7B, the state of each attachment pin 1382 may be switched to the state where each attachment pin 1382 is contained in the attachment pin 1381. Then, as illustrated in FIG. 7A, each attachment pin 1381 may be detached from each attachment hole 1371. As a result, as illustrated in FIG. 7A, the head housing 137 is detached from the attachment adapter 138. Namely, the head housing 137 is detached from the head housing 136. In other words, the irradiation optical system 135 is detached from the emission optical system 130.

A groove may be formed on at least one of the attachment surface 1380 of the attachment adapter 138 and the attachment surface 1370 of the head housing 137. After the head housing 137 is attached to the attachment adapter 138, the groove may be vacuumed. In this case, in a case the head housing 137 is appropriately attached to the attachment adapter 138, an air pressure in the groove is expected to decrease to a certain value or less because the attachment surface 1370 is appropriately in close contact with the attachment surface 1380. On the other hand, in a case where the head housing 137 is not appropriately attached to the attachment adapter 138, the air pressure in the groove is not expected to decrease to a certain value or less because the attachment surface 1370 is not appropriately in close contact with the attachment surface 1380. Therefore, the control unit 2 may determine whether or not the head housing 137 is appropriately attached to the attachment adapter 138 based on the air pressure in the vacuumed groove.

The force for moving the attachment pin 1382 may include a force caused by a spring (alternatively, any other elastic body) in addition to the force caused by the gas described above. For example, the state of the attachment pin 1382 may be set to the state where the attachment pin 1382 protrudes from the side surface of the attachment pin 1381 by the force applied to the attachment pin 1382 from the spring. In this state, the state of the attachment pin 1382 may be switched to the state where the attachment pin 1382 is contained in the attachment pin 1381 by the force caused by the gas. In other words, the attachment pin 1382 may protrude from the side surface of the attachment pin 1381 in a case where the pneumatic apparatus is in an OFF mode and the attachment pin 1382 may be contained in the attachment pin 1381 in a case where the pneumatic apparatus is in an ON mode. In this case, even when the pneumatic apparatus malfunctions due to unanticipated accident (namely, even when the pneumatic apparatus is turned off), the head housing 137 is not detached from the attachment adapter 138. Therefore, it is possible to prevent a damage of the irradiation optical system 135 caused by a fall. Therefore, the attachment pin 1381 and the attachment hole 1371 are configured to serve as a fall prevention mechanism that prevents the head housing 137 from falling from the attachment adapter 138. The attachment pin 1381 and the attachment hole 1371 are configured to serve as a separation prevention mechanism to prevent the head housing 137 from separating from the attachment adapter 138. However, the processing head 13 may include other fall prevention mechanisms (separation prevention mechanisms) in addition to the fall prevention mechanism (separation prevention mechanism) including the attachment pin 1381 and the attachment hole 1371.

Moreover, in the above-described example, the attachment adapter 138 is attached to the head housing 136. However, the attachment adapter 138 may be attached to the head housing 137. In a case where the irradiation optical system 135 is exchangeable, a plurality of head housings 137 are selectively attached to the head housing 136 as described later. In this case, the attachment adapter 138 may be attached to each of the plurality of head housings 137.

### (1-4) Configuration of Head Change Apparatus 17

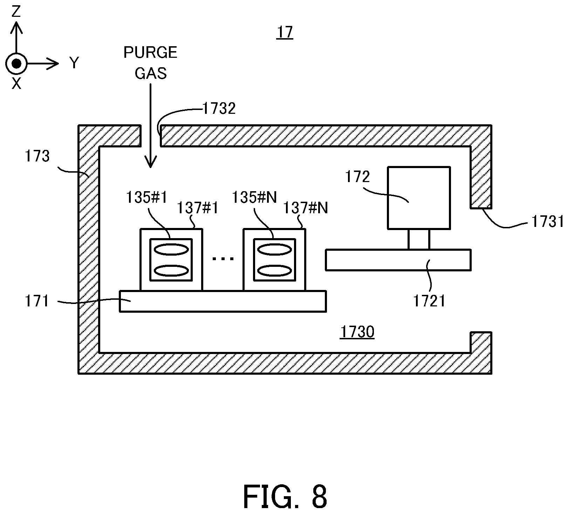

Next, with reference to FIG. 8, a configuration of the head change apparatus 17 that exchanges the irradiation optical system 135 will be described. FIG. 8 is a cross-sectional view that conceptionally illustrates one example of the configuration of the head change apparatus 17.

As illustrated in FIG. 8, the head change apparatus 17 includes a storage apparatus 171, a transport apparatus 172, and a housing 173.

The storage apparatus 171 is configured to store the irradiation optical system 135 that is attachable to the processing head 13. Typically, the storage apparatus 171 may be configured to store a plurality of irradiation optical systems 135 each of which is attachable to the processing head 13. In an example illustrated in FIG. 8, the storage apparatus 171 stores N (wherein, N is a variable number representing an integer number that is larger than or equal to 2) irradiation optical systems 135 (specifically, an irradiation optical systems 135#1 to an irradiation optical systems 135#N).

As described above, the irradiation optical system 135 is attached to the processing head 13 (especially, the emission optical system 130) in a state where the irradiation optical system 135 is contained in the head housing 137. Therefore, the storage apparatus 171 may be configured to store the irradiation optical system 135 contained in the head housing 137. In other words, the storage apparatus 171 may be configured to store the head housing 137 that contains the irradiation optical system 135.

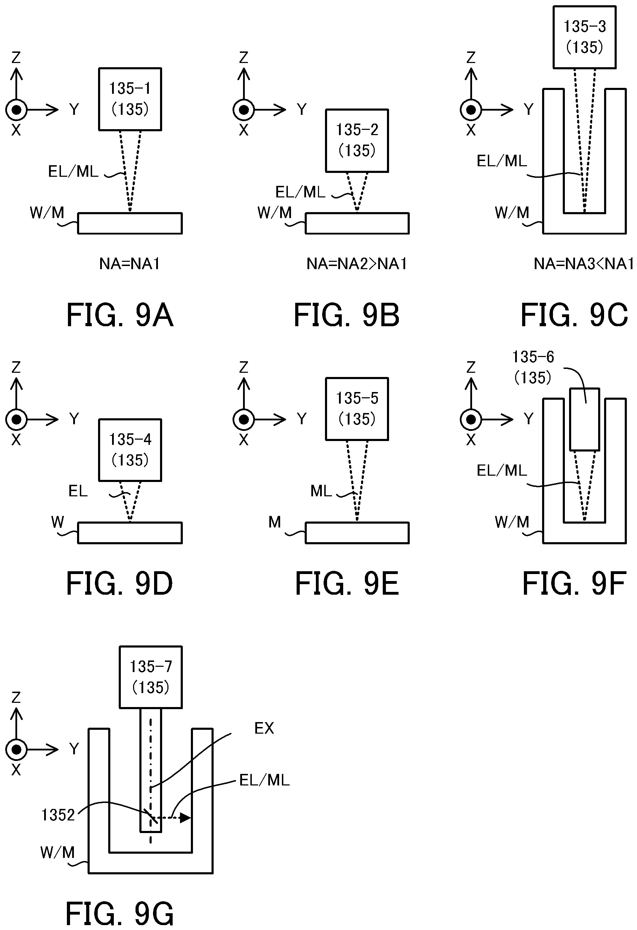

The storage apparatus 171 may store a plurality of irradiation optical systems 135 whose optical characteristics are different from each other. Examples of the plurality of irradiation optical systems 135 whose optical characteristics are different from each other are illustrated in FIG. 9A to FIG. 9G. FIG. 9A to FIG. 9G illustrate seven irradiation optical systems 135 whose optical characteristics are different from each other, respectively.

For example, as illustrated in FIG. 9A to FIG. 9C, the storage apparatus 171 may store the plurality of irradiation optical systems 135 whose numerical apertures (NA) are different from each other. Specifically, a processing accuracy and a measurement accuracy are higher but a working distance between the irradiation optical system 135 and the workpiece W (alternatively, the measurement target object M) is shorter as the numerical aperture NA of the irradiation optical system 135 is larger. Therefore, there is a higher possibility that the irradiation optical system 135 collides with the workpiece W (alternatively, the measurement target M) although the processing accuracy and the measurement accuracy are higher as the numerical aperture NA of the irradiation optical system 135 is larger. On the other hand, the processing accuracy and the measurement accuracy are lower but the working distance between the irradiation optical system 135 and the workpiece W (alternatively, the measurement target object M) is longer as the numerical aperture NA of the irradiation optical system 135 is smaller. Therefore, the processing accuracy and the measurement accuracy is lower although there is a lower possibility that the irradiation optical system 135 collides with the workpiece W (alternatively, the measurement target M) although as the numerical aperture NA of the irradiation optical system 135 is smaller. Therefore, the storage apparatus 171 may store the plurality of irradiation optical systems 135 whose numerical apertures NA are different from each other while considering a trade-off between an effect of improving the processing accuracy and the measurement accuracy (in the below-described description, it is referred to as an "accuracy improvement effect") and an effect of preventing a collision between the irradiation optical system 135 and the workpiece W (alternatively, the measurement target object M (in the below-described description, it is referred to as a "collision prevention effect").

In other words, the plurality of irradiation optical systems 135 whose working distances (operating distances) are different from each other may be stored. Here, the working distance may be a distance along the optical axis EX from the terminal optical element of the irradiation optical system 135 to the condensed position of the processing light EL. The working distance may be a distance along the optical axis EX from an optical element that is positioned to be closest to the incident side among one or more optical elements included the irradiation optical system 135 to the condensed position of the processing light EL. The working distance may be a distance along a direction parallel to the optical axis EX from a part, which is positioned to be closed to the workpiece W, of the head housing 137 that stores the irradiation optical system 135 to the condensed position of the processing light EL. Here, the condensed position of the processing light EL may be a rear focal position of the irradiation optical system 135.

As one example, the storage apparatus 171 may store an irradiation optical system 135-1 whose numerical aperture NA is set to a first numerical aperture NA1 so as to achieve both of the accuracy improvement effect and the collision prevention effect. As another example, the storage apparatus 171 may store an irradiation optical system 135-2 whose numerical aperture NA is set to a second numerical aperture NA2 that is larger than the first numerical aperture NA1 so as to prioritize the accuracy improvement effect over the collision prevention effect, in addition to or instead of the irradiation optical system 135-1. As another example, the storage apparatus 171 may store an irradiation optical system 135-3 whose numerical aperture NA is set to a third numerical aperture NA3 that is smaller than the first numerical aperture NA1 so as to prioritize the collision prevention effect over the accuracy improvement effect, in addition to or instead of at least one of the irradiation optical systems 135-1 and 135-2.

In this case, in a case where the irradiation optical system 135-1 is attached to the processing head 13, the processing system SYSa can process the workpiece W with a first processing accuracy and measure the measurement target object M with a first measurement accuracy, while reducing the possibility of the collision between the irradiation optical system 135 and the workpiece W (alternatively, the measurement target object M). Moreover, in a case where the irradiation optical system 135-2 is attached to the processing head 13, the processing system SYSa can process the workpiece W with a second processing accuracy higher than the first processing accuracy, and measure the measurement target object M with a second measurement accuracy higher than the first measurement accuracy. Moreover, in a case where the irradiation optical system 135-3 is attached to the processing head 13, the processing system SYSa can prevent the collision between the irradiation optical system 135 and the workpiece W (alternatively, the measurement target object M) more, compared to a case where the irradiation optical system 135-1 is attached to the processing head 13. Furthermore, since the working distance is longer, the processing system SYSa can appropriately process the workpiece W to form a deep hole in the workpiece W, and appropriately measure an inside of the deep hole formed in the measurement target object M as illustrated in FIG. 9C.

For example, as illustrated in FIG. 9D, the storage apparatus 171 may store an irradiation optical system 135-4 that is specialized for processing the workpiece W by using processing light EL. For example, the storage apparatus 171 may store the irradiation optical system 135-4 that prioritizes an improvement of the processing accuracy over an improvement of the measurement accuracy. For example, the storage apparatus 171 may store the irradiation optical system 135-4 that is designed to improve the processing accuracy only without considering the improvement of the measurement accuracy. In this case, in a case where the irradiation optical system 135-4 is attached to the processing head 13, the processing system SYSa can process the workpiece W more appropriately.

For example, as illustrated in FIG. 9E, the storage apparatus 171 may store an irradiation optical system 135-5 that is specialized for measuring the measurement target object M by using the measurement light ML. For example, the storage apparatus 171 may store the irradiation optical system 135-5 that prioritizes the improvement of the measurement accuracy over the improvement of the processing accuracy. For example, the storage apparatus 171 may store the irradiation optical system 135-5 that is designed to improve the measurement accuracy only without considering the improvement of the processing accuracy. In this case, in a case where the irradiation optical system 135-5 is attached to the processing head 13, the processing system SYSa can measure the measurement target object M more appropriately.

For example, as illustrated in FIG. 9F, the storage apparatus 171 may store an irradiation optical system 135-6 whose size (so-called a width) in a direction intersecting the irradiation direction of the processing light EL and the measurement light ML is limited to be equal to or smaller than a certain size. Since the irradiation optical system 135-6 is contained in the head housing 137, the storage apparatus 171 may store the irradiation optical system 135-6 contained in the head housing 137 whose size (so-called a width) in the direction intersecting the irradiation direction of the processing light EL and the measurement light ML is limited to be equal to or smaller than the certain size. In this case, in a case where the irradiation optical system 135-6 is attached to the processing head 13, the processing system SYSa can allow the irradiation optical system 135-6 to enter into an inside of a hole which is formed in the workpiece W or the measurement target object M and whose width is equal to or smaller than the certain size. Therefore, the processing system SYSa can appropriately process the workpiece W to form a deep hole in the workpiece W, and appropriately measure the inside of the deep hole formed in the measurement target object M.

For example, as illustrated in FIG. 9G, the storage apparatus 171 may store an irradiation optical system 135-7 that is configured to emit at least one of the processing light EL and the measurement light ML in a direction intersecting the optical axis EX of the irradiation optical system 135 (for example, the optical axis of the fθ lens 1351). In this case, the irradiation optical system 135-7 may include a mirror 1352 that is configured to reflect at least one of the processing light EL and the measurement light ML emitted from the fθ lens 1351 so as to change the propagating direction of at least one of the processing light EL and the measurement light ML emitted from the fθ lens 1351. Furthermore, the mirror 1352 may be rotatable around the optical axis EX of the irradiation optical system 135 (for example, the optical axis of the fθ lens 1351). In a case where this irradiation optical system 135-7 is attached to the processing head 13, the processing system SYSa can irradiate a surface of the workpiece W or the measurement target object M, which is along the optical axis EX of the irradiation optical system 135, with the processing light EL or the measurement light ML.

Again in FIG. 8, the transport apparatus 172 is configured to transport the irradiation optical system 135 between the head change apparatus 17 and the processing head 13. Specifically, the transport apparatus 172 may take out, from the storage apparatus 171, the irradiation optical system 135 stored in the storage apparatus 171. Then, the transport apparatus 172 may transport the irradiation optical system 135, which has been taken out from the storage apparatus 171, from the storage apparatus 171 to the processing head 13. Then, the transport apparatus 172 may attach the irradiation optical system 135, which has been transported to the processing head 13, to the processing head 13. Furthermore, the transport apparatus 172 may detach, from the processing head 13, the irradiation optical system 135 attached to the processing head 13. Then, the transport apparatus 172 may transport the irradiation optical system 135, which has been detached from the processing head 13, from the processing head 13 to the storage apparatus 171. Then, the transport apparatus 172 may store the irradiation optical system 135, that has been transported to the storage apparatus 171, in the storage apparatus 171.

In a case where the plurality of irradiation optical systems 135 are stored in the storage apparatus 171, the control unit 2 may select one of the plurality of irradiation optical systems 135 as the irradiation optical system 135 that should be attached to the processing head 13. For example, the control unit 2 may select, based on an instruction of a user of the processing system SYSa, one of the plurality of irradiation optical systems 135 as the irradiation optical system 135 that should be attached to the processing head 13. For example, the control unit 2 may select, based on a processing aspect performed by the processing system SYSa, one of the plurality of irradiation optical systems 135 as the irradiation optical system 135 that should be attached to the processing head 13. For example, the control unit 2 may select, based on a measurement aspect performed by the processing system SYSa, one of the plurality of irradiation optical systems 135 as the irradiation optical system 135 that should be attached to the processing head 13. Then, the transport apparatus 172 may transport the irradiation optical system 135, which has been selected by the control unit 2, from the storage apparatus 171 to the processing head 13.

The transport apparatus 172 may include a transport arm 1721 that is configured to grasp or temporarily hold the irradiation optical system 135 in order to transport the irradiation optical system 135. In this case, the transport apparatus 172 may transport the irradiation optical system 135 between the head change apparatus 17 and the processing head 13 by using the transport arm 1721.

In a case where the transport apparatus 172 transports the irradiation optical system 135 by using the transport arm 1721, a magazine-type of auto tool changer (ATC: Auto Tool Changer) used in a machine tool may be used as the head change apparatus 17. In this case, the storage apparatus 171 may be referred to as a magazine. In other words, a magazine of the auto tool changer may be used as the storage apparatus 171. In this case, a cutting tool, which is usually stored in the magazine, may not be stored in the magazine that serves as the storage apparatus 171 for storing the plurality of irradiation optical systems 135.

Alternatively, a turret-type of auto tool changer used in the machine tool may be used as a head change apparatus 17. In this case, the storage apparatus 171 may serve as a tool pot whose shape is a drum-liked shape. In other words, the tool pot of the auto tool changer may be used as the storage apparatus 171. In this case, the cutting tool, which is usually stored in the tool pot, may not be stored in the tool pot that serves as the storage apparatus 171 for storing the plurality of irradiation optical systems 135. In this case, the transport apparatus 172 may directly rotate the tool pot that is used as the storage apparatus 171 so that a desired irradiation optical system 135 is positioned at a position closest to the transport apparatus 172, and then grasp or temporarily hold the irradiation optical system 135 positioned at the position closest to the transport apparatus 172. Alternatively, the tool pot that is used as the storage apparatus 171 may be rotated without using a force of the transport apparatus 172 so that the desired irradiation optical system 135 is positioned at the desired position. As one example, in the example illustrated in FIG. 8, the tool pot that is used as the storage apparatus 171 may be rotated so that the desired irradiation optical system 135, which should be attached to the processing head 13, is positioned at the most +Y side. Then, the desired irradiation optical system 135 may move to protrude from a transport port 1731 toward the +Y side, and the processing head 13 may approach the irradiation optical system 135 protruding from the transport port 1731 so that the irradiation optical system 135 protruding from the transport port 1731 is attachable to the processing head 13.

In a case where the auto tool changer of the machine tool is used as the head change apparatus 17, the processing system SYSa may be manufactured by using the machine tool. For example, the processing system SYSa may be manufactured using the machine tool by attaching the processing head 13 to a main spindle of the machine tool. In this case, an apparatus inside a housing of the machine tool that has already been designed, developed or mass-produced may be used as a component of the processing system SYSa. For example, a stage of the machine tool may be used as the stage 15 of the processing system SYSa. For example, a guide mechanism of the machine tool may be used as at least one of the head driving system 141 and the stage driving system 161 of the processing system SYSa. Alternatively, the apparatus inside the housing of the machine tool may be improved at least partially, and the partially improved apparatus may be used as the component of the processing system SYSa. As a result, a cost of the processing system SYSa is reducible compared to a case where the component of the processing system SYSa is newly designed from scratch. The processing system SYS may use the apparatus (for example, an auto tool changer, a stage, and a head guide mechanism of a head) inside the housing of the machine tool that has already been designed, developed or mass-produced as the component of the processing system SYS.

The housing 173 contains at least a part of the storage apparatus 171 and the transport apparatus 172. Specifically, at least a part of the storage apparatus 171 and the transport apparatus 172 is contained in a housing space 1730 in the housing 173.

The transport port 1731 may be formed in the housing 173. In this case, the transport apparatus 172 may transport the irradiation optical system 135 between the head change apparatus 17 and the processing head 13 through the transport port 1731.

A gas supply port 1732 may be formed at the housing 173. The purge gas (namely, the gas) such as nitrogen gas may be supplied to the housing space 1730 in the housing through the gas supply port 1732. Namely, the processing system SYS may supply the purge gas to the housing space 1730 in the housing 173 through the gas supply port 1732 by using an non-illustrated gas supply apparatus.

The purge gas may be supplied to the housing space 1730 through the gas supply port 1732 so that an air pressure in the housing space 1730 is higher than an air pressure in a space outside the housing 173 (specifically, the inner space SP in the housing 3 that contains the processing unit 1). In other words, the purge gas may be supplied to the housing space 1730 through the gas supply port 1732 so that the air pressure in the housing space 1730 is higher than the air pressure in the inner space SP in which the workpiece W is placed on the stage 15. In other words, the purge gas may be supplied to the housing space 1730 through the gas supply port 1732 so that the air pressure in the housing space 1730 is higher than the air pressure in the inner space SP in which the workpiece W is processed. As a result, there is a low possibility that unnecessary substance generated by processing the workpiece W enter the housing space 1730 of the head change apparatus 17 from the inner space SP in which the workpiece W exists. Therefore, the head change apparatus 17 can prevent the unnecessary substance from adhering to the irradiation optical system 135 contained in the housing space 1730. Incidentally, a fume generated by processing the workpiece W is one example of the unnecessary substance.

The purge gas may be supplied to the irradiation optical system 135 contained in the housing space 1730 through the gas supply port 1732. For example, the purge gas may be supplied to at least one of the plurality of irradiation optical systems 135 contained in the housing space 1730 through the gas supply port 1732. In this case, even when the unnecessary substance adheres to the irradiation optical system 135 contained in the housing space 1730, the unnecessary substance adhering to the irradiation optical system 135 is removed by the purge gas supplied to the irradiation optical system 135. Therefore, the head change apparatus 17 can prevent unnecessary substance from adhering to the irradiation optical system 135 contained in the housing space 1730.

Incidentally, the purge gas may be supplied to the attachment surface 1380 of the attachment adapter 138 in at least a part of a period during which the head housing 137 is being detached from the attachment adapter 138 (the head housing 136). In this case, it is possible to prevent unnecessary substance from adhering to the attachment surface 1380. Here, the period during which the purge gas is supplied to the attachment surface 1380 of the attachment adapter 138 may be entire period during which the head housing 137 is detached from the attachment adapter 138 (the head housing 136).

### (1-5) Technical Effect of Processing System SYSa

As described above, the processing system SYSa in the first example embodiment can exchange the irradiation optical system 135 attached to the processing head 13. Therefore, the processing system SYSa can process the workpiece W more appropriately by using one irradiation optical system 135 that matches a processing purpose, compared to a case where the irradiation optical system 135 attached to the processing head 13 is not exchangeable. Furthermore, the processing system SYSa can measure the measurement target object M more appropriately by using one irradiation optical system 135 that matches a measurement purpose, compared to a case where the irradiation optical system 135 attached to the processing head 13 is not exchangeable.

### (2) Processing System SYS in Second Example Embodiment

Next, the processing system in a second example embodiment will be described. Incidentally, in the below-described description, the processing system in the second example embodiment is referred to as a "processing system SYSb".

### (2-1) Configuration of Processing System SYSb

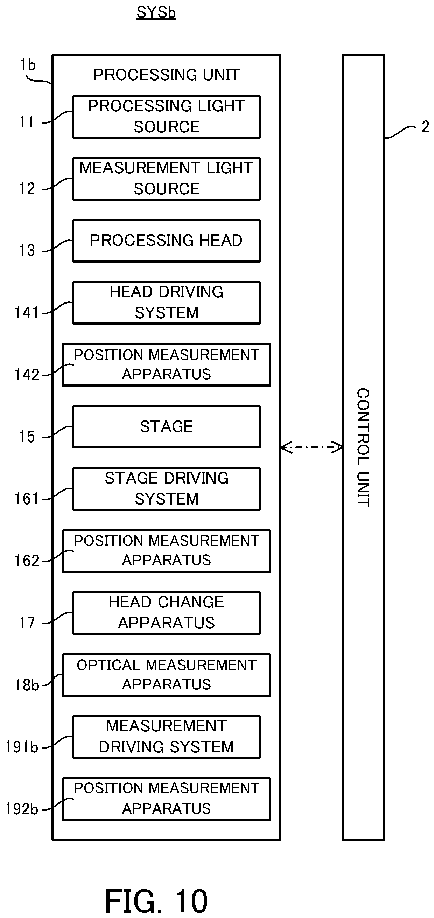

First, with reference to FIG. 10, a configuration of the processing system SYSb in the second example embodiment will be described. FIG. 10 is a block diagram that illustrates one example of the configuration of the processing system SYSb in the second example embodiment. Incidentally, in the below-described description, a detailed description of a component, which is the same as the component that has been already described, is omitted by assigning the same reference sing thereto.

As illustrated in FIG. 10, the processing system SYSb in the second example embodiment is different from the processing system SYSa in the first example embodiment in that it includes a processing unit 1b instead of the processing unit 1 described above. Other feature of the processing system SYSb may be the same as other feature of the processing system SYSa.

The processing unit 1b is different from the processing unit 1 in that it further includes an optical measurement apparatus 18b, a measurement driving system 191b, and a position measurement apparatus 192b. Other feature of the processing unit 1b may be the same as other feature of the processing unit 1.

The optical measurement apparatus 18b is a member that is used in a calibration operation. The calibration operation is an operation for calibrating (in other words, controlling or adjusting) at least one of the irradiation positions PA of the processing light EL and the irradiation position MA of the measurement light ML. The calibration operation is performed under the control of the control unit 2. Namely, the processing system SYSb performs the calibration operation under the control of the control unit 2. Incidentally, a detail of the calibration operation and a detail of the optical measurement apparatus 18b will be described in detail later, however, an overview thereof will be briefly described.

In order to perform the calibration operation, the processing head 13 irradiates the optical measurement apparatus 18b with at least one of the processing light EL and the measurement light ML under the control of the control unit 2. Namely, the processing head 13 emits at least one of the processing light EL and the measurement light ML toward the optical measurement apparatus 18b through the irradiation optical system 135. The optical measurement apparatus 18b measures at least one of the processing light EL and the measurement light ML that has been irradiated onto the optical measurement apparatus 18b under the control of the control unit 2. Namely, the optical measurement apparatus 18b measures at least one of the processing light EL and the measurement light ML that has been emitted from the irradiation optical system 135. Specifically, the optical measurement apparatus 18b optically receives at least one of the processing light EL and the measurement light ML that has been irradiated onto the optical measurement apparatus 18b. Namely, the optical measurement apparatus 18b optically receives at least one of the processing light EL and the measurement light ML that has been emitted from the irradiation optical system 135. Therefore, the optical measurement apparatus 18b may be referred to as a light receiving apparatus. Light receiving information, which indicates an light receiving result of at least one of the processing light EL and the measurement light ML, is output from the optical measurement apparatus 18b to the control unit 2.

The control unit 2 calibrates at least one of the irradiation positions PA of the processing light EL and the irradiation position MA of the measurement light ML based on the light receiving information. Specifically, the control unit 2 calculates (in other words, acquires) at least one of the irradiation positions PA of the processing light EL and the irradiation position MA of the measurement light ML based on the light receiving information. Namely, the control unit 2 acquires irradiation position information related to at least one of the irradiation positions PA of the processing light EL and the irradiation position MA of the measurement light ML based on the light receiving information. Then, the control unit 2 calibrates at least one of the irradiation positions PA of the processing light EL and the irradiation position MA of the measurement light ML based on the irradiation position information.

The measurement driving system 191b moves the optical measurement apparatus 18b under the control of the control unit 2. Namely, the measurement driving system 191b moves a position of the optical measurement apparatus 18b. Therefore, the measurement driving system 191b may be referred to as a movement apparatus. The measurement driving system 191b may move (namely, linearly move) the optical measurement apparatus 18b along a movement axis along at least one of the X-axis direction, the Y-axis direction, and the Z-axis direction, for example. The measurement driving system 191b may move the optical measurement apparatus 18b along at least one of the θX direction, the θY direction, and the θZ direction, in addition to or instead of at least one of the X-axis direction, the Y-axis direction, and the Z-axis direction, for example. Namely, the measurement driving system 191b may rotate (namely, rotationally move) the optical measurement apparatus 18b around at least one axis of a rotational axis along the X-axis direction (namely, an A-axis), a rotational axis along the Y-axis direction (namely, a B-axis), and a rotational axis along the Z-axis direction (namely, a C-axis).

When the measurement driving system 191b moves the optical measurement apparatus 18b, a positional relationship between the processing head 13 (especially, the irradiation optical system 135 of the processing head 13) and the optical measurement apparatus 18b changes. For example, the positional relationship between the processing head 13 (especially, the irradiation optical system 135) and the optical measurement apparatus 18b along at least one of the X-axis direction, the Y-axis direction, and the Z-axis direction may change. For example, the positional relationship between the processing head 13 (especially, the irradiation optical system 135) and the optical measurement apparatus 18b along at least one of the θX direction, the θY direction, and the θZ direction may change. Incidentally, the positional relationship between the processing head 13 (especially, the irradiation optical system 135) and the optical measurement apparatus 18b along at least one of the θX direction, the θY direction, and the θZ direction may be regarded as a postural relationship between the processing head 13 (especially, the irradiation optical system 135) and the optical measurement apparatus 18b. Therefore, the measurement driving system 191b may be considered to serve as a change apparatus that is configured to change at least one of the positional relationship and the postural relationship between the processing head 13 (especially, the irradiation optical system 135) and the optical measurement apparatus 18b.

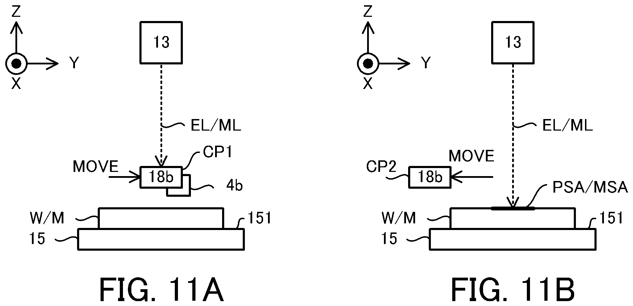

The measurement driving system 191b may move the optical measurement apparatus 18b so that the optical measurement apparatus 18b is positioned at a calibration position CP in at least a part of a calibration period during which the calibration operation is performed, as illustrated in FIG. 11A. The calibration position CP1 is a position at which the optical measurement apparatus 18b can optically receive at least one of the processing light EL and the measurement light ML. On the other hand, the measurement driving system 191b may move the optical measurement apparatus 18b so that the optical measurement apparatus 18b is positioned at a non-calibration position CP2 in at least a part of a processing period during which the processing unit 1 processes the workpiece W, as illustrated in FIG. 11B. The non-calibration position CP2 is a position at which the optical measurement apparatus 18b cannot optically receive at least one of the processing light EL and the measurement light ML. Similarly, the measurement driving system 191b may move the optical measurement apparatus 18b so that the optical measurement apparatus 18b is positioned at the non-calibration position CP2 in at least a part of a measurement period during which the processing unit 1 measures the measurement target object M. Namely, the measurement driving system 191b may move the optical measurement apparatus 18b so that the optical measurement apparatus 18b is positioned at the non-calibration position CP2, which is different from the calibration position CP1, in at least a part of the processing period and the measurement period. Namely, the measurement driving system 191b may move the optical measurement apparatus 18b between the calibration position CP1 and the non-calibration position CP2.

In this case, the optical measurement apparatus 18b positioned at the non-calibration position CP2 does not optically receive the processing light EL in the processing period. Therefore, the processing light EL, which has been emitted toward the workpiece W in order to process the workpiece W, is not shielded by the optical measurement apparatus 18b. Therefore, even in a case where the processing unit 1b includes the optical measurement apparatus 18b, the processing unit 1b can process the workpiece W appropriately. Similarly, the optical measurement apparatus 18b positioned at the non-calibration position CP2 does not optically receive the measurement light ML in the measurement period. Therefore, the measurement light ML, which has been emitted toward the measurement target object M in order to measure the measurement target object M, is not shielded by the optical measurement apparatus 18b. Therefore, even in a case where the processing unit 1b includes the optical measurement apparatus 18b, the processing unit 1b can measure the measurement target object M appropriately. Moreover, typically, a light intensity of the processing light EL optically received by the optical measurement apparatus 18b is lower than a light intensity of the processing light EL for processing the workpiece W. A deterioration and a damage of the optical measurement apparatus 18b can be prevented because the optical measurement apparatus 18b is not irradiated with the processing light EL having a high light intensity the processing period. On the other hand, the optical measurement apparatus 18b positioned at the calibration position CP1 can optically receive at least one of the processing light EL and the measurement light ML in the calibration period. Namely, the processing unit 1b can irradiate the optical measurement apparatus 18b with at least one of the processing light EL and the measurement light ML. Therefore, the processing system SYSb can perform the calibration operations appropriately in the calibration period.

The measurement driving system 191b may move the optical measurement apparatus 18b between the calibration position CP1 and the non-calibration position CP2 by moving the optical measurement apparatus 18b along a direction that intersects a direction along which at least one of the processing light EL and the measurement light ML is emitted. Namely, the measurement driving system 191b may move the optical measurement apparatus 18b between the calibration position CP1 and the non-calibration position CP2 by changing the relative positional relationship between the optical measurement apparatus 18b and the processing head 13 (especially, the irradiation optical system 135) in the direction that intersects the direction along which at least one of the processing light EL and the measurement light ML is emitted. Incidentally, in an example illustrated in FIG. 11A, the direction along which at least one of the processing light EL and the measurement light ML is emitted is the Z-axis direction. Therefore, the measurement driving system 191b may move the optical measurement apparatus 18b along a direction that intersects the Z-axis direction. In this case, the calibration position CP1 and the non-calibration position CP2 may be separated from each other along a direction that intersects the direction along which at least one of the processing light EL and the measurement light ML is emitted.

As illustrated in FIG. 11A, the calibration position CP1 may be a position on the optical path of at least one of the processing light EL and the measurement light ML. The calibration position CP1 may be a position that can be irradiated by the processing head 13 (especially, the irradiation optical system 135) with at least one of the processing light EL and the measurement light ML. On the other hand, as illustrated in FIG. 11B, the non-calibration position CP2 may be a position that is away from the optical path of each of the processing light EL and the measurement light ML. The non-calibration position CP2 may be a position that cannot be irradiated by the processing head 13 (especially, the irradiation optical system 135) with each of the processing light EL and the measurement light ML. The non-calibration position CP2 may be a position which the processing head 13 (especially the irradiation optical system 135) is prohibited from irradiating with each of the processing light EL and the measurement light ML. The non-calibration position CP2 may be a position outside an area that is allowed to be processed by the processing unit 1b (for example, the above described processing shot area PSA). The non-calibration position CP2 may be a position outside an area that is allowed to be measured by the processing unit 1b (for example, the above described measurement shot area MSA)

The calibration position CP1 may be a position on the stage 15. In this case, the optical measurement apparatus 18b positioned at the calibration position CP1 may be placed on the stage 15. The stage 15 may hold the optical measurement apparatus 18b. Alternatively, the stage 15 may not hold the optical measurement apparatus 18b. On the other hand, the non-calibration position CP2 may be a position that is away from the stage 15. Especially, the non-calibration position CP2 may be a position that is away from the stage 15 along a direction that intersects the direction along which at least one of the processing light EL and the measurement light ML is emitted.

The non-calibration position CP2 may be a position in the storage apparatus 171 of the head change apparatus 17 described above. Namely, the non-calibration position CP2 may be a position in the housing 173 that contains the storage apparatus 171 (namely, a position in the housing space 1730). In this case, the optical measurement apparatus 18b positioned at the non-calibration position CP2 may be contained in the storage apparatus 171. The optical measurement apparatus 18b positioned at the non-calibration position CP2 may be contained in the housing space 1730. The optical measurement apparatus 18b positioned at the non-calibration position CP2 may be contained in a housing space that is different from the housing space 1730. On the other hand, the calibration position CP1 may be a position outside the storage apparatus 171. Namely, the calibration position CP1 may be a position outside the housing 173 (namely, a position at an outside of the housing space 1730).

Incidentally, in a case where the above-described head driving system 141 moves the processing head 13, the positional relationship between the processing head 13 (especially, the irradiation optical system 135 of the processing head 13) and the optical measurement apparatus 18b changes. Therefore, the head driving system 141 may be considered to serve as a change apparatus that is configured to change at least one of the positional relationship and the postural relationship between the processing head 13 (especially, the irradiation optical system 135) and the optical measurement apparatus 18b. In this case, the processing system SYSb may relatively move the optical measurement apparatus 18b between the calibration position CP1 and the non-calibration position CP2 by using the head driving system 141 to move the processing head 13, in addition to or instead of using the measurement driving system 191b to move the optical measurement apparatus 18b.

Again in FIG. 10, the position measurement apparatus 192b is configured to measure a position of the optical measurement apparatus 18b under the control of the control unit 2. The position measurement apparatus 192b may include an interferometer (for example, a laser interferometer), for example. The position measurement apparatus 192b may include an encoder (for example, at least one of a linear encoder and a rotary encoder), for example. The position measurement apparatus 192b may include a potentiometer, for example. In a case where the measurement driving system 191b uses a stepping motor as a driving source, the position measurement apparatus 192b may include an open-loop control type of position detection apparatus, for example. The open-loop control type of position detection apparatus is a position detection apparatus that measures the position of the optical measurement apparatus 18b by estimating a moving distance of the optical measurement apparatus 18b from a cumulative value of the number of pulses for driving the stepping motor.

### (2-2) Configuration of Optical Measurement Apparatus 18b

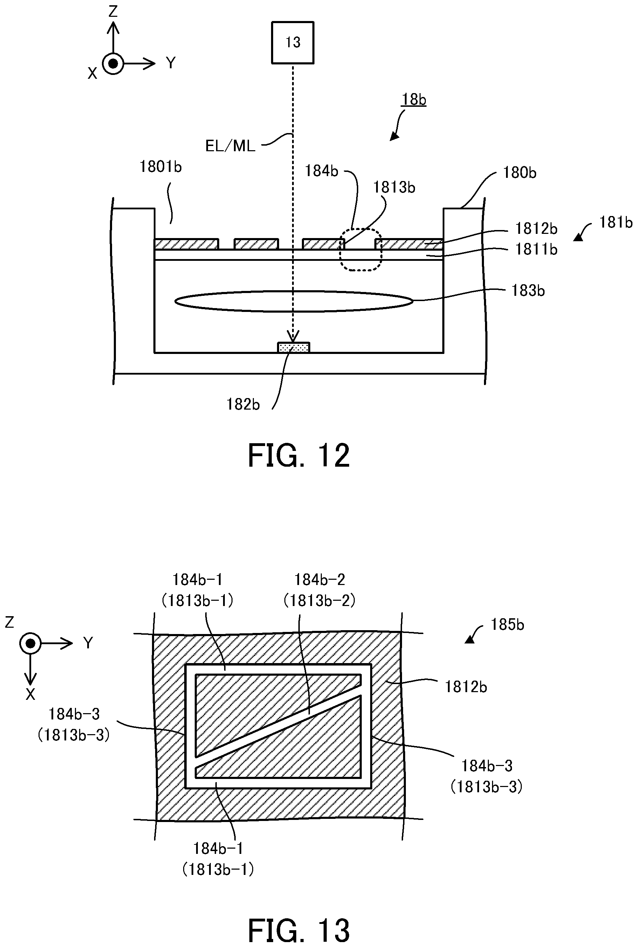

Next, with reference to FIG. 12, a configuration of the optical measurement apparatus 18b will be described. FIG. 12 is a cross-sectional view that illustrates the configuration of the optical measurement apparatus 18b.

As illustrated in FIG. 12, the optical measurement apparatus 18b includes a beam passing member 181b, a light receiving element 182b, and a light receiving optical system 183b. The beam passing member 181b is a member having a formed light passing area 184b through which at least one of the processing light EL and the measurement light ML is allowed to pass. The light receiving element 182b is configured to optically receive at least one of the processing light EL and the measurement light ML that has passed through the light passing area 184b of the beam passing member 181b. The light receiving element 182b is a sensor that corresponds to the wavelength of the processing light EL and the wavelength of the measurement light ML. At least one of a photodetector, a CCD (Charge Coupled Device) sensor, a CMOS (Complementary Metal Oxide Semiconductor) sensor, and a sensor that uses an InGaAs (Indium Gallium Arsenide) element is one example of the light receiving element 182b. Especially in the second example embodiment, the light receiving element 182b may be configured to optically receive at least one of the processing light EL and the measurement light ML, which has passed through the light passing area 184b of the beam passing member 181b, through the light receiving optical system 183b. Therefore, the beam passing member 181b may be positioned above the light receiving optical system 183b, and the light receiving optical system 183b may be positioned above the light receiving element 182b. The beam passing member 181b may be positioned between the processing head 13 and the light receiving optical system 183b, and the light receiving optical system 183b may be positioned between the beam passing member 181b and the light receiving element 182b.

The beam passing member 181b, the light receiving element 182b, and the light receiving optical system 183b may be positioned in a hole 1801b (namely, a concave part) formed at a base member 180b of the optical measurement apparatus 18b. However, at least one of the beam passing member 181b, the light receiving element 182b, and the light receiving optical system 183b may be positioned at any position that is different from the hole 1801b.

The beam passing member 181b includes a glass substrate 1811b and an attenuation film 1812b that is formed on at least a part of a surface of the glass substrate 1811b. The attenuation film 1812b is a member that is configured to attenuate the processing light EL and the measurement light ML entering the attenuation film 1812b. The attenuation film 1812b may include a chromium film or a chromium oxide film. Note that "the attenuation of the processing light EL by the attenuation film 1812b" in the second example embodiment may include not only allowing an intensity of the processing light EL that has passed through the attenuation film 1812b to be lower than an intensity of the processing light EL entering the attenuation film 1812b but also shielding (namely, blocking) the processing light EL entering the attenuation film 1812b. Similarly, "the attenuation of the measurement light ML by the attenuation film 1812b" in the second example embodiment may include not only allowing an intensity of the measurement light ML that has passed through the attenuation film 1812b to be lower than an intensity of the measurement light ML entering the attenuation film 1812b but also shielding (namely, blocking) the measurement light ML entering the attenuation film 1812b. Therefore, when the processing light EL enters the attenuation film 1812b, the processing light EL that has been attenuated by the attenuation film 1812b may enter the light receiving element 182b through the attenuation film 1812b or the processing light EL may not enter the light receiving element 182b because of the attenuation film 1812b shielding the processing light EL. Similarly, when the measurement light ML enters the attenuation film 1812b, the measurement light ML that has been attenuated by the attenuation film 1812b may enter the light receiving element 182b through the attenuation film 1812b or the measurement light ML may not enter the light receiving element 182b because of the attenuation film 1812b shielding the measurement light ML. Therefore, the attenuation film 1812b may be referred to as a shielding film.

At least one aperture 1813b is formed in the attenuation film 1812b. In an example illustrated in FIG. 12, a plurality of apertures 353 are formed in the attenuation film 1812b. The aperture 1813b is a through hole that penetrates the attenuation film 1812b in the Z-axis direction. Therefore, when the processing light EL enters the aperture 1813b formed in the attenuation film 1812b, the processing light EL passes through the beam passing member 181b through the aperture 1813b. Namely, the processing light EL is not attenuated or shielded by the attenuation film 1812b to enter the light receiving element 182b through the aperture 1813b. Similarly, when the measurement light ML enters the aperture 1813b formed in the attenuation film 1812b, the measurement light ML passes through the beam passing member 181b through the aperture 1813b. Namely, the measurement light ML is not attenuated or shielded by the attenuation film 1812b to enter the light receiving element 182b through the aperture 1813b.

In this manner, a part of the beam passing member 181b on which the attenuation film 1812b is not formed (namely, a part at which the aperture 1813b is formed) serves as a light passing area 184b through which each of the processing light EL and the measurement light ML is allowed to pass. Therefore, the light passing area 1814b is formed at the beam passing member 181b by the aperture 1813b. In a case where the plurality of apertures 1813b are formed, a plurality of light passing areas 1814b are formed at the beam passing member 181b by the plurality of the apertures 1813b, respectively.

The light passing area 184b may have a predetermined shape in a plane along the surface of the beam passing member 181b (typically, the XY plane). Namely, the apertures 1813b forming the light passing area 184b may have a predetermined shape in a plane along the surface of the beam passing member 181b (typically, the XY plane). In this case, the light passing area 184b may form a mark (namely, a pattern) having a predetermined shape corresponding to the shape of the light passing area 184b in a plane along the surface of the beam passing member 181b (typically, the XY plane). Namely, the mark (namely, the pattern) having the predetermined shape may be formed on the beam passing member 181b by the light passing area 184b formed by the aperture 1813b having the predetermined shape. For example, as illustrated in FIG. 13, the light passing area 184b that forms a search mark 185b, which is one example of the mark , may be formed on the beam passing member 181b. The light passing area 184b that forms the search mark 185b may include two first linear light passing areas 184b-1 and one second linear light passing area 184b-2. Each of the two first linear light passing areas 184b-1 may extend along a first direction. The two first linear light passing areas 184b-1 may be away from each other along a third direction that is orthogonal to the first direction. The one second linear light passing area 184b-2 may be positioned between the two first linear light passing areas 184b-1. The one second linear light passing area 184b-2 may extend along a second direction that is inclined with respect to (namely, obliquely intersects) the first direction. Namely, the light passing area 184b that forms the search mark 185b may be formed by two first linear apertures 1813b-1, each of which extend along the first direction and which are away from each other along the third direction that is orthogonal to the first direction, and a second linear aperture 1813b-2, which is positioned between the two first linear apertures 1813b-1 and which extends along the second direction that is inclined with respect to (namely, obliquely intersect) the first direction. In an example illustrated in FIG. 13, the light passing area 184b that forms the search mark 185b includes the two first linear light passing area 184b-1, each of which extend along the Y-axis direction and which are away from each other along the X-axis direction that is orthogonal to the Y-axis direction, and the second linear light passing area 184b-2, which extends along a direction that is inclined with respect to (namely, obliquely intersect) the X-axis direction. Namely, in the example illustrated in FIG. 13, the light passing area 184b that forms the search mark 185b may be formed by the two first linear apertures 1813b-1, each of which extend along the Y-axis direction and which are away from each other along the X-axis direction that is orthogonal to the Y-axis direction, and the second linear aperture 1813b-2, which extends along a direction that is inclined with respect to (namely, obliquely intersect) the X-axis direction.

Incidentally, at least one of 75 degrees, 60 degrees, 45 degrees, 30 degrees, and 15 degrees is one example of an angle between the second linear aperture 1813b-2 and the X-axis. The angle between the second linear aperture 1813b-2 and the X-axis may be an angle that is different from the angle described here as one example. Furthermore, the second linear aperture 1813b-2, which extends in the direction that is inclined with respect to (namely, obliquely intersects) the X-axis direction, is also inclined with respect to the Y-axis direction.

At least one of 75 degrees, 60 degrees, 45 degrees, 30 degrees, and 15 degrees is one example of an angle between the second linear aperture 1813b-2 and the Y-axis. The angle between the second linear aperture 1813b-2 and the Y-axis may be an angle that is different from the angle described here as one example. The angle between the second linear aperture 1813b-2 and the Y-axis may be the same as the angle between the second linear aperture 1813b-2 and the X-axis. The angle between the second linear aperture 1813b-2 and the Y-axis may be different from the angle between the second linear aperture 1813b-2 and the X-axis.

The light passing area 184b that forms the search mark 185b may further include two third linear light passing areas 184b-3 that are arranged along a direction that intersects the direction along which the two first linear light passing areas 184b-1 are arranged. Namely, the light passing area 184b may further include two linear apertures 1813b-3 that form the two third linear light passing areas 184b-3. Each of the two third linear light passing areas 184b-3 may extend along a direction that intersects the direction along which the first linear light passing area 184b-1 extends. The two third linear light passing areas 184b-3 may be away from each other along the direction along which the first linear light passing area 184b-1 extends. The second linear light passing area 184b-2 may be positioned between the two third linear light passing areas 184b-3.

A length (namely, a size along a longitudinal direction) of the first linear light passing area 184b-1 forming the search mark 185b is 0.1 mm to 1.0 mm, for example, however, may be any other length. A width (namely, a size along a transverse direction) of the first linear light passing area 184b-1 forming the search mark 185b is several micrometers, for example, however, may be any other width. A width (namely, a size along a transverse direction) of the second linear light passing area 184b-1 forming the search mark 185b is several micrometers, for example, however, may be any other width. A size (for example, a size along at least one of the X-axis direction and the Y-axis direction) of the search mark 185b is from 0.1 mm to several mm, for example, however, may be any other size. A distance between the two first linear light passing areas 184b-1 forming the search mark 185b is from 0.1 mm to several mm, for example, however, may be any other distance. An angle between the first linear light passing area 184b-1 and the second linear light passing area 184b-2, which is inclined with respect to the first linear light passing area 184b-1, is 10 degrees to 20 degrees (for example, 15 degrees), however, may be any other angle.

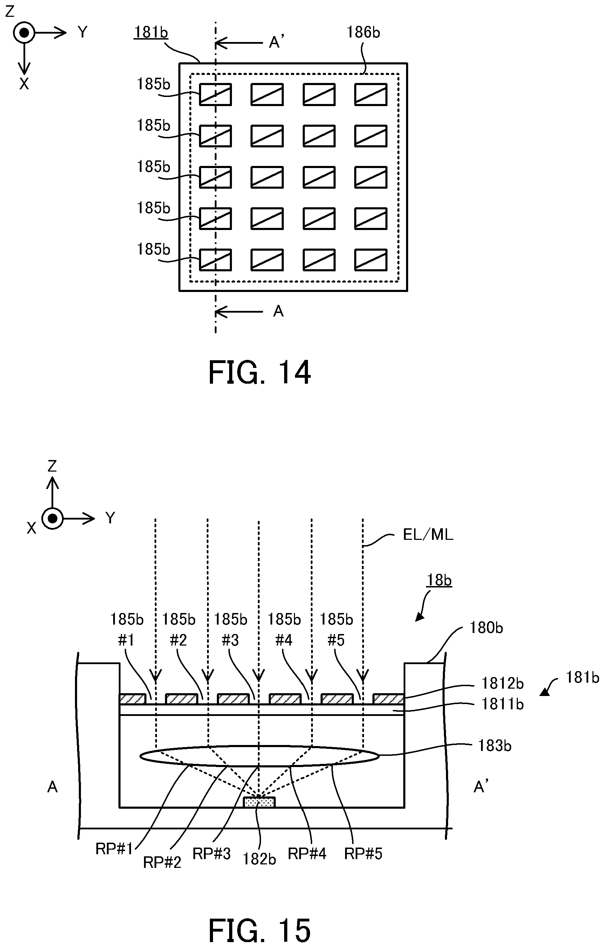

A plurality of search marks 185b (alternatively, a plurality of any marks, the same is applied in the below-described description) may be formed on the beam passing member 181b. Namely, a plurality of light passing areas 184b, which form the plurality of search marks 185b (alternatively, the plurality of any marks), may be formed at the beam passing member 181b. For example, as illustrated in FIG. 14, the plurality of search marks 185b distributed in a matrix pattern may be formed on the beam passing member 181b. In the example illustrated in FIG. 14, the plurality of search marks 185b that are regularly arranged along each of the X-axis direction and the Y-axis direction are formed on the beam passing member 181b.

The plurality of search marks 185b may include at least two search marks 185b that have different angles between the second linear aperture 1813b-2 and the X-axis. The plurality of search marks 185b may include at least two search marks 185b that have different angles between the second linear aperture 1813b-2 and the Y-axis. The plurality of search marks 185b may include at least two search marks 185b that have the same angle between the second linear aperture 1813b-2 and the X-axis. The plurality of search marks 185b may include at least two search marks 185b that have the same angle between the second linear aperture 1813b-2 and the Y-axis.

In a case where the plurality of (namely, two, three, or more) search marks 185b are formed on the beam passing member 181b, the processing unit 1b may irradiate at least two search marks 185b that are different from each other with the processing light EL in order in the calibration period. Similarly, the processing unit 1b may irradiate at least two search marks 185b that are different from each other with the measurement light ML in order in the calibration period.

A size of a mark-formed area 186b, in which the plurality of search marks 185b are formed on the beam passing member 181b, is smaller than or the same as a size of at least one of the processing shot area PSA and the measurement shot area MSA. As a result, the processing unit 1b may irradiate the plurality of search marks 185b with the processing light EL in order by using at least one of the Galvano mirrors 1313 and 1341 while fixing the positional relationship between the processing head 13 (especially, the irradiation optical system 135) and the optical measurement apparatus 18b. In other words, the processing unit 1b may irradiate the plurality of search marks 185b, which are distributed in the mark-formed area 186b in which the irradiation position PA of the processing light EL can be set by using at least one of the Galvano mirrors 1313 and 1341, with the processing light EL in order by changing the irradiation position PA of the processing light EL in the processing shot area PSA set on the beam passing member 181b. Similarly, the processing unit 1b may irradiate the plurality of search marks 185b with the measurement light ML in order by using at least one of the Galvano mirrors 1328 and 1341 while fixing the positional relationship between the processing head 13 (especially, the irradiation optical system 135) and the optical measurement apparatus 18b. In other words, the processing unit 1b may irradiate the plurality of search marks 185b, which are distributed in the mark-formed area 186b in which the irradiation position MA of the measurement light ML can be set by using at least one of the Galvano mirrors 1328 and 1341, with the measurement light ML in order by changing the irradiation position MA of the measurement light ML in the processing shot area PSA set on the beam passing member 181b. However, the size of the mark-formed area 186b, in which the plurality of search marks 185b are formed on the beam passing member 181b, may be larger than the size of at least one of the processing shot area PSA and the measurement shot area MSA.

Incidentally, a position of the optical measurement apparatus 18b in a case where at least one of the processing shot area PSA and the measurement shot area MSA overlaps with at least a part of the mark-formed area 186b may be referred to as the calibration position CP1. A position of the optical measurement apparatus 18b in a case where at least one of the processing shot area PSA and the measurement shot area MSA does not overlap with at least a part of the mark-formed area 186b may be referred to as the non-calibration position CP2.

In a case where the processing unit 1b irradiates at least two search marks 185b with the processing light EL in order, the light receiving element 182b may optically receive the processing light EL that has passed through each of at least two search marks 185b. For example, FIG. 15 is a A-A' cross-sectional view in FIG. 14, and illustrates five search marks 185b (specifically, search marks 185b#1 to 185b#5) that are irradiated with the processing light EL in order by the processing unit 1b. As illustrated in FIG. 15, the light receiving element 182b may optically receive the processing light EL that has passed through the search mark 185b#1, optically receive the processing light EL that has passed through the search mark 185b#2, optically receive the processing light EL that has passed through the search mark 185b#3, optically receive the processing light EL that has passed through the search mark 185b#4, and optically receive the processing light EL that has passed through the search mark 185b#5.

Similarly, in a case where the processing unit 1b irradiates at least two search marks 185b with the measurement light ML in order, the light receiving element 182b may optically receive the measurement light ML that has passed through each of at least two search marks 185b, although its detailed description is omitted to omit a redundant description.

In this case, the light receiving optical system 183b may change a direction of the processing light EL that has passed through each of at least two search marks 185b so that the processing light EL that has passed through each of at least two search marks 185b, which are formed at different positions on the beam passing member 181b, propagate toward the same light receiving element 182b. For example, as illustrated in FIG. 15, the light receiving optical system 183b may emit the processing light EL, which has passed through the search mark 185b#1, from a first emitting part RP#1 of the light receiving optical system 183b toward the light receiving element 182b. As a result, the processing light EL emitted from the first emitting part RP#1 of the light receiving optical system 183b may enter the light receiving element 182b by passing through an optical path directed from the first emitting part RP#1 to the light receiving element 182b. Moreover, the light receiving optical system 183b may emit the processing light EL, which has passed through the search mark 185b#2, from a second emitting part RP#2, which is different from the first emitting part RP#1, of the light receiving optical system 183b toward the light receiving element 182b. As a result, the processing light EL emitted from the second emitting part RP#2 of the light receiving optical system 183b may enter the light receiving element 182b by passing through an optical path directed from the second emitting part RP#2 to the light receiving element 182b. Moreover, the light receiving optical system 183b may emit the processing light EL, which has passed through the search mark 185b#3, from a third emitting part RP#3, which is different from the first emitting part RP#1 to the second emitting part RP#2, of the light receiving optical system 183b toward the light receiving element 182b. As a result, the processing light EL emitted from the third emitting part RP#3 of the light receiving optical system 183b may enter the light receiving element 182b by passing through an optical path directed from the third emitting part RP#3 to the light receiving element 182b. Moreover, the light receiving optical system 183b may emit the processing light EL, which has passed through the search mark 185b#4, from a fourth emitting part RP#4, which is different from the first emitting part RP#1 to the third emitting part RP#3, of the light receiving optical system 183b toward the light receiving element 182b. As a result, the processing light EL emitted from the fourth emitting part RP#4 of the light receiving optical system 183b may enter the light receiving element 182b by passing through an optical path directed from the fourth emitting part RP#4 to the light receiving element 182b. Moreover, the light receiving optical system 183b may emit the processing light EL, which has passed through the search mark 185b#5, from a fifth emitting part RP#5, which is different from the first emitting part RP#1 to the fourth emitting part RP#4, of the light receiving optical system 183b toward the light receiving element 182b. As a result, the processing light EL emitted from the fifth emitting part RP#5 of the light receiving optical system 183b may enter the light receiving element 182b by passing through an optical path directed from the fifth emitting part RP#5 to the light receiving element 182b. As a result, the light receiving element 182b can optically receive the processing light EL that has passed through each of at least two search marks 185b through the light receiving optical system 183b appropriately. Therefore, the optical measurement apparatus 18b may not include at least two light receiving elements 182b for optically receiving the processing lights EL that have passed through at least two search marks 185b, respectively. Namely, it is enough for the optical measurement apparatus 18b to include a single light receiving element 182b for optically receiving the processing lights EL that have passed through at least two search marks 185b, respectively. Incidentally, in this case, the light receiving optical system 183b may be considered to serve as a condensing optical system that condenses the processing light EL that has passed through the beam passing member 181b onto the light receiving element 182b. In this way, since the lights (the processing lights EL, the measurement lights ML) from the plurality of search marks 185b, which are at different spatial positions, are guided to the same position on the light receiving element 182b by the light receiving optical system 183b, an influence of a difference in a plane of a sensitivity of the light receiving element 182b and the like is reducible.

Similarly, in a case where the processing unit 1b irradiates at least two search marks 185b with the measurement light ML in order, the light receiving optical system 183b may change a direction of the measurement light ML that has passed through each of at least two search marks 185b so that the measurement light ML that has passed through each of at least two search marks 185b, which are formed at different positions on the beam passing member 181b, propagate toward the same light receiving element 182b, although its detailed description is omitted to omit a redundant description.

In a case where both of the processing light EL and the measurement light ML enter the light receiving element 182b through the light receiving optical system 183b, there is a possibility that an influence of a chromatic aberration occurs. Therefore, the optical measurement apparatus 18b may include an optical component for reducing the influence of chromatic aberration. An achromatic lens is one example of the optical component for reducing the influence of the chromatic aberration. A dichroic mirror is one example of the optical component for reducing the influence of the chromatic aberration. **In** a case where the dichroic mirror is used, the dichroic mirror may separate the processing light EL that has passed through the light receiving optical system 183b and the measurement light ML that has passed through the light receiving optical system 183b. The processing light EL and the measurement light ML separated by the dichroic mirror may be optically received by two different light receiving elements 182b.

Incidentally, the optical measurement apparatus 18b may not include a single light receiving element as the light receiving element 182b. The optical measurement apparatus 18b may include any type of light receiving element 182b, as long as it is possible to determine, based on the light receiving result by the light receiving element 182b, one search mark 185b that is irradiated with each of the processing light EL and the measurement light ML,. For example, the optical measurement apparatus 18b may include a two-dimensional sensor as the light receiving element 182b. For example, the optical measurement apparatus 18b may include a two-dimensional sensor in which plurality of light receiving elements are arranged in a matrix pattern as the light receiving element 182b. For example, the optical measurement apparatus 18b may include a two-dimensional sensor including a light receiving surface that extends in two-dimensional form as the light receiving element 182b.

Consider that the workpiece W is processed by the irradiation of the processing light EL, there is a possibility that at least a part of the optical measurement apparatus 18b is also processed (substantially, damaged) by the irradiation of the processing light EL. Therefore, the control unit 2 adjusts the intensity (for example, an energy amount per unit area in a plane intersecting the propagating direction of the processing light EL) of the processing light EL so that the intensity (for example, the energy amount per unit area in a plane intersecting the propagating direction of the processing light EL) of the processing light EL that is irradiated onto the optical measurement apparatus 18 is lower than the intensity (for example, the energy amount per unit area in a plane intersecting the propagating direction of the processing light EL) of the processing light EL that is irradiated onto the workpiece W to process the workpiece W. In this case, the control unit 2 may control the intensity of the processing light EL by controlling the processing light source 11 itself. Alternatively, the control unit 2 may control the intensity of the processing light EL by controlling a light attenuation member (not illustrated) positioned at an emission side of the processing light source 11. As a result, there is lower or no possibility that the optical measurement apparatus 18b is damaged.

### (2-3) Calibration Operation Performed Using Optical Measurement Apparatus 18b

Next, the calibration operation performed by using the optical measurement apparatus 18b will be described. Especially, in the below-described description, a flow of the calibration operation will be described.

### (2-3-1) Movement of Optical Measurement Apparatus 18b

First, as illustrated in FIG. 11A described above, the measurement driving system 191b moves the optical measurement apparatus 18b so that the optical measurement apparatus 18b is positioned at the calibration position CP1 at which the optical measurement apparatus 18b can optically receive at least one of the processing light EL and the measurement light ML. Namely, the measurement driving system 191b moves the optical measurement apparatus 18b so that the position of the optical measurement apparatus 18b is changed from the non-calibration position CP2 to the calibration position CP1.

Here, the calibration position CP1 may be set at or near a processing surface, which is a surface of the workpiece W irradiated with the processing light EL to process the workpiece W, in the Z-axis direction. For example, considering that the workpiece W is processed by irradiating the workpiece W placed on the placement surface 151 of stage 15 with the processing light EL, the processing surface of the workpiece W is positioned above (namely, at the +Z side from) the placement surface 151. Therefore, the calibration position CP1 at which the optical measurement apparatus 18b is positioned may be a position above the placement surface 151 of the stage 15. Namely, the calibration position CP1 may be a position between the placement surface 151 of the stage 15 and the processing head 13 (especially, the irradiation optical system 135).

However, the calibration position CP1 may be the same as a position of the placement surface 151 of the stage 15 in the Z-axis direction. Alternatively, the calibration position CP1 may be a position below (namely, at the -Z side from) the placement surface 151 of the stage 15 in the Z-axis direction. Even in this case, the processing system SYSb may change the calibration position CP1, at which the optical measurement apparatus 18b is positioned, along the Z-axis direction by rotating the stage 15 around at least one axis of the rotational axis along the X-axis direction (namely, the A-axis) and the rotational axis along the Y-axis direction (namely, the B-axis). Alternatively, the processing system SYSb may change the calibration position CP1, at which the optical measurement apparatus 18b is positioned, along the Z-axis direction by moving the stage 15 along the Z-axis direction. Therefore, the processing system SYSb may bring the calibration position CP1 closer to the processing surface of the workpiece W in at least a part of the calibration period.

Incidentally, the calibration position CP1 may be a position that is the same as a reference position of the stage 15 in at least one of the X-axis direction and the Y-axis direction. Alternatively, the calibration position CP1 may be a position that is different from the reference position of the stage 15. The reference position of stage 15 may be a center position of a movement stroke of stage 15. In a case where the stage 15 rotates around the rotational axis along the Z-axis direction (namely, the C-axis), the reference position of the stage 15 may be a position on the C-axis. The reference position of the stage 15 may be a position of a processing origin point of the processing head 13.

However, in a case where the irradiation optical system 135 reflects the processing light EL by using a mirror to emit the processing light EL, there is a possibility that the irradiation position PA of the processing light EL, which is emitted from the irradiation optical system 135 through at least one of the Galvano mirrors 1313 and 1341, may vary depending on the positional relationship between the processing head 13 (especially, the irradiation optical system 135) and the workpiece W. Similarly, in a case where the irradiation optical system 135 reflects the measurement light ML by using a mirror to emit the measurement light ML, there is a possibility that the irradiation position MA of the measurement light ML, which is emitted from the irradiation optical system 135 through at least one of the Galvano mirrors 1328 and 1341, may vary depending on the positional relationship between the processing head 13 (especially, the irradiation optical system 135) and the workpiece W. In this case, the calibration position CP1 may be the position that is the same as the reference position of the stage 15 in at least one of the X-axis direction and the Y-axis direction. As a result, even in a case where there is a possibility that the irradiation positions PA of the processing light EL and the irradiation position of the measurement light ML vary depending on the positional relationship between the processing head 13 (especially, the irradiation optical system 135) and the workpiece W, the processing system SYSb can perform the calibration operation appropriately.

Incidentally, the processing system SYSb may include a regulating member 4b that regulates the optical measurement apparatus 18a so that the optical measurement apparatus 18b is positioned at the calibration position CP1, as illustrated in FIG. 11. A stopper that limits the movement of the optical measurement apparatus 18a by contacting the optical measurement apparatus 18a positioned at the calibration position CP1 is one example of the regulating member 4a. In this case, the measurement driving system 191b can move the optical measurement apparatus 18b appropriately so that the optical measurement apparatus 18b is positioned at the calibration position CP1.

Furthermore, the head driving system 141 moves the processing head 13 so that the processing head 13 is positioned at a position at which the processing head 13 can irradiate the optical measurement apparatus 18b positioned at the calibration position CP1 with the processing light EL. In this case, the control unit 2 may calculate the position of the optical measurement apparatus 18b based on a measured result by the position measurement apparatus 192b, and control the head driving system 141 so that the processing head 13 moves to the position at which the processing head 13 can irradiate the optical measurement apparatus 18b positioned at the calculated position with the processing light EL.

The optical measurement apparatus 18b may move to a space below the stage 15. The optical measurement apparatus 18b may be positioned in a space below the stage 15. In this case, the stage 15 may move at a timing at which the processing head 13 irradiates the optical measurement apparatus 18b with at least one of the processing light EL and the measurement light ML. Specifically, the stage 15 may move from a position above the optical measurement apparatus 18b to another position. For example, the stage 15 may move from a position above the optical measurement apparatus 18b to another position by moving along at least one of the X-axis direction and the Y-axis direction. For example, the stage 15 may move from a position above the optical measurement apparatus 18b to another position by rotating around a rotation axis along at least one of the X-axis direction and the Y-axis direction. As a result, the optical measurement apparatus 18b, which was hidden by the stage 15, is exposed. Therefore, the processing head 13 can irradiate the optical measurement apparatus 18b with at least one of the processing light EL and the measurement light ML.

### (2-3-2) Irradiation Of Optical Measurement Apparatus 18b With Processing Light EL and Measurement Light ML

Then, the processing head 13 may irradiate the optical measurement apparatus 18b with the processing light EL under the control of the control unit 2. Specifically, the processing head 13 may irradiate at least one search mark 185b formed on the optical measurement apparatus 18b with the processing light EL.

Especially in the second example embodiment, the processing head 13 may irradiate at least one search mark 185b with the processing light EL in a state where the positional relationship between the processing head 13 (especially, the irradiation optical system 135) and the optical measurement apparatus 18b is fixed. In this case, the processing head 13 may irradiate a desired search mark 185b with the processing light EL by using at least one of the Galvano mirrors 1313 and 1341 to move the irradiation position PA of the processing light EL on the beam passing member 181b. Specifically, the control unit 2 may generate a Galvano control signal for controlling at least one of the Galvano mirrors 1313 and 1341 so as to irradiate the desired search mark 185b with the processing light EL. Then, the processing head 13 may irradiate the desired search mark 185b with the processing light EL by controlling at least one of the Galvano mirrors 1313 and 1341 based on the Galvano control signal.

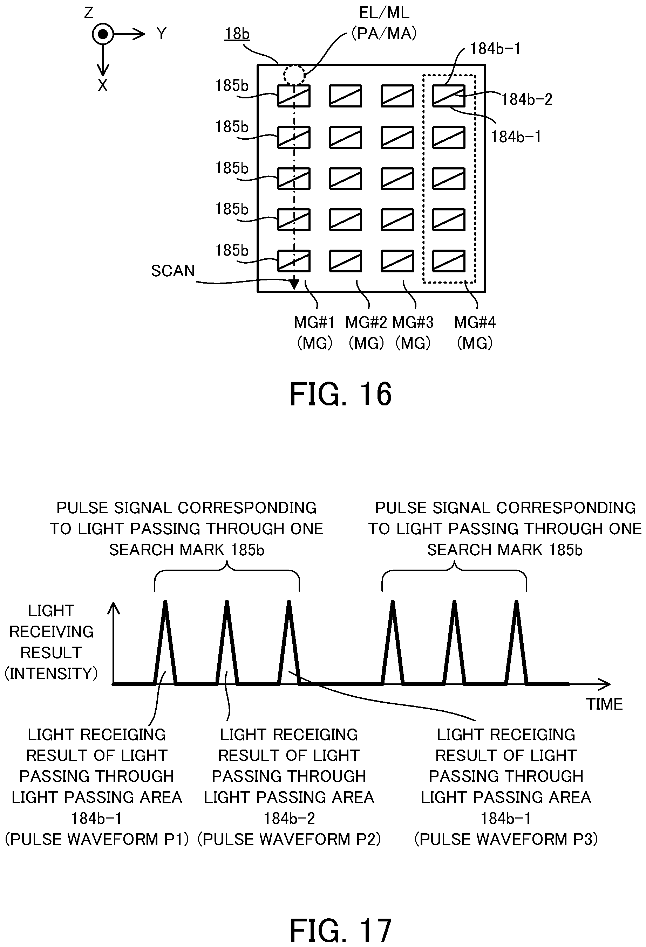

The processing head 13 may irradiate the search mark 185b with the processing light EL along a first scanning direction along which two first linear light passing areas 184b-1 and one second linear light passing area 184b-2 included in the search mark 185b are arranged, as illustrated in FIG. 16. Namely, the processing head 13 may irradiate the search mark 185b with the processing light EL by moving the irradiation position PA of the processing light EL along the first scanning direction. In an example illustrated in FIG. 16, the first scanning direction is the X-axis direction. Therefore, the processing head 13 may irradiate the search mark 185b with the processing light EL by moving the irradiation position PA of the processing light EL along the X-axis direction.

The processing head 13 may irradiate the search mark 185b with the processing light EL along a second scanning direction along which two third linear light passing areas 184b-3 and one second linear light passing area 184b-2 included in the search mark 185b are arranged. Namely, the processing head 13 may irradiate the search mark 185b with the processing light EL by moving the irradiation position PA of the processing light EL along the second scanning direction. In the example illustrated in FIG. 16, the second scanning direction is the Y-axis direction. Therefore, the processing head 13 may irradiate the search mark 185b with the processing light EL by moving the irradiation position PA of the processing light EL along the Y-axis direction.

In a case where a difference between a movement accuracy of the irradiation position PA along the first scanning direction and a movement accuracy of the irradiation position PA along the second scanning direction is smaller than an allowable amount, the processing head 13 may move the irradiation position PA along either one of the first and second scanning directions, but may not move the irradiation position PA along the other one of the first and second scanning directions. In this case, the below-described irradiation position information generated in a case where the irradiation position PA is moved along either one of the first and second scanning directions may be used as information related to the irradiation position PA moving along the first scanning direction, and may be used as information related to the irradiation position PA moving along the second scanning direction. Incidentally, in a case where the processing head 13 moves the irradiation position PA along the first scanning direction (the X-axis direction), the angle between the second linear aperture 1813b-2 and the Y-axis may be smaller than 45 degrees. In a case where the processing head 13 moves the irradiation position PA along the second scanning direction (the Y-axis direction), the angle between the second linear aperture 1813b-2 and the X-axis may be smaller than 45 degrees.

In a case where the difference between the movement accuracy of the irradiation position PA along the first scanning direction and the movement accuracy of the irradiation position PA along the second scanning direction is larger than the allowable amount, the processing head 13 may move irradiation position PA along each of the first and second scanning directions. In this case, the irradiation position information generated in a case where the irradiation position PA is moved along the first scanning direction may be used as the information related to the irradiation position PA moving along the first scanning direction, but may not be used as the information related to the irradiation position PA moving along the second scanning direction. The irradiation position information generated in a case where the irradiation position PA is moved along the second scanning direction may be used as the information related to the irradiation position PA moving along the second scanning direction, but may not be used as the information related to the irradiation position PA moving along the first scanning direction. Incidentally, in a case where the difference between the movement accuracy of the irradiation position PA along the first scanning direction and the movement accuracy of the irradiation position PA along the second scanning direction is smaller than the allowable amount, the angle between the second linear aperture 1813b-2 and the Y-axis may be the same as the angle between the second linear aperture 1813b-2 and the X-axis. For example, the angle between the second linear aperture 1813b-2 and the Y-axis and the angle between the second linear aperture 1813b-2 and the X-axis may be 45 degrees.

In a case where at least two search marks 185b that have different angles between the second linear aperture 1813b-2 and the X-axis are formed as described above, the processing head 13 may move the irradiation position PA along either one of the first and second scanning directions, but may not move the irradiation position PA along the other one of the first and second scanning directions, even in a case where the difference between the movement accuracy of the irradiation position PA along the first scanning direction and the movement accuracy of the irradiation position PA along the second scanning direction is larger than the allowable amount. In this case, the below-described irradiation position information generated in a case where the irradiation position PA is moved along either one of the first and second scanning directions may be used as information related to the irradiation position PA moving along the first scanning direction, and may be used as information related to the irradiation position PA moving along the second scanning direction.

The control unit 2 may move the optical measurement apparatus 18b along one scanning direction while using at least one of the Galvano mirrors 1313 and 1341 to move the irradiation position PA along the same one scanning direction. The control unit 2 may move the optical measurement apparatus 18b along one movement direction while using at least one of the Galvano mirrors 1313 and 1341 to move the irradiation position PA along the same one movement direction. In this case, the control unit 2 may control the optical measurement apparatus 18b and at least one of the Galvano mirrors 1313 and 1341 so that a movement speed of the irradiation position PA on the beam passing member 181b by at least one of the Galvano mirrors 1313 and 1341 is faster than a movement speed of the irradiation position PA on the beam passing member 181b by the movement of the optical measurement apparatus 18b. As a result, a light receiving time during which the light receiving element 182b can optically receive the processing light EL is increased, compared to a case where the optical measurement apparatus 18b does not move. As a result, a signal-to-noise ratio of the light receiving element 182b can be improved. For example, if it is necessary to rotate the scanning mirror of at least one of the Galvano mirrors 1313 and 1341 at a relatively high speed due to a velocity dependency of at least one of the Galvano mirrors 1313 and 1341, the light receiving time is short. Even in this case, the processing system SYSb can increase the light receiving time by moving the optical measurement apparatus 18b. As a result, the signal-to-noise ratio of the light receiving element 182b can be improved.

The control unit 2 may control the movement speed of the irradiation position PA on the beam passing member 181b (namely, a scanning speed of the processing light EL). For example, the control unit 2 may set the movement speed of the irradiation position PA on the beam passing member 181b to a first speed that is faster than a second speed, thereby reducing a time required for measuring the processing light EL, compared to a case where the movement speed of the irradiation position PA is set to the second speed. For example, the control unit 2 may set the movement speed of the irradiation position PA on the beam passing member 181b to the second speed that is slower than the first speed, thereby improving the measurement accuracy of the processing light EL, compared to a case where the movement speed of the irradiation position PA is set to the first speed.

In a case where the plurality of search marks 185b are formed on the optical measurement apparatus 18b as described above, the processing head 13 may irradiate the plurality of search marks 185b with the processing light EL in order. Namely, the processing head 13 may irradiate the plurality of search marks 185b with the processing light EL in order along a direction along the surface of the beam passing member 181b on which the plurality of search marks 185b are formed. In other words, the processing head 13 may scan the plurality of search marks 185b with the processing light EL in order. Namely, the processing head 13 may scan the plurality of search marks 185b with the processing light EL in order along a direction along the surface of the beam passing member 181b on which the plurality of search marks 185b are formed.

The processing head 13 may irradiate the plurality of search marks 185b with the processing light EL in order along the scanning direction, as illustrated in FIG. 16. Namely, the processing head 13 may irradiate the plurality of search marks 185b with the processing light EL in order along the scanning direction by moving the irradiation position PA of the processing light EL along the scanning direction. In the example illustrated in FIG. 16, the scanning direction is the X-axis direction. Therefore, the processing head 13 may irradiate the plurality of search marks 185b with the processing light EL in order by moving the irradiation position PA of the processing light EL along the X-axis direction.

In a case where a plurality of mark groups MG, each of which includes the plurality of search marks 185b arranged along the scanning direction (for example, the X-axis direction), are formed along a direction (for example, the Y-axis direction) intersecting the scanning direction, the processing head 13 may repeat an operation for irradiating the plurality of search marks 185b included in each mark group MG with the processing light EL in order for the plurality of mark groups MG. For example, the processing head 13 may irradiate the plurality of search marks 185b included in a first mark group MG#1 with the processing light EL in order, irradiate the plurality of search marks 185b included in a second mark group MG#2 with the processing light EL in order, irradiate the plurality of search marks 185b included in a third mark group MG#3 with the processing light EL in order, and irradiate the plurality of search marks 185b included in a fourth mark group MG#4 with the processing light EL in order.

When the search mark 185b is irradiated with the processing light EL, the light receiving element 182b optically receives the processing light EL that has passed through the light passing area 184b that forms the search mark 185b. Namely, the light receiving element 182b optically receives the processing light EL through the search mark 185b. The light receiving element 182b optically receives the processing light EL that has passed through the search mark 185b. As a result, the light receiving element 182b optically receives the processing light EL that has passed through one of the two first linear light passing areas 184b-1 included in the search mark 185b, and then optically receives the processing light EL that has passed through the second linear light passing area 184b-2 included in the search mark 185b, and then optically receives the processing light EL that has passed through the other one of the two first linear light passing areas 184b-1 included in the search mark 185b. Therefore, the light receiving element 182b outputs the light receiving information that indicates, as the light receiving result, a light receiving signal including a pulse signal in which a pulse waveform P1 corresponding to the processing light EL that has passed through one of the two first linear light passing areas 184b-1, a pulse waveform P2 corresponding to the processing light EL that has passed through the second linear light passing area 184b-2, and a pulse waveform P3 corresponding to the processing light EL that has passed through the other one of the two first linear light passing areas 184b-1 appear in order, as illustrated in FIG. 17 that is a graph illustrating the light receiving result of the processing light EL by the light receiving element 182b. In a case where the plurality of search marks 185b are irradiated with the processing light EL in order, the light receiving element 182b outputs the light receiving information that indicates, as the light receiving result, the light receiving signal including a plurality of pulse signals in each of which the pulse waveforms P1 to P3 appear in order.

Furthermore, the processing head 13 may irradiate the optical measurement apparatus 18b with the measurement light ML, in addition to or instead of irradiating the optical measurement apparatus 18b with the processing light EL, under the control of the control unit 2. Specifically, the processing head 13 may irradiate at least one search mark 185b formed on the optical measurement apparatus 18b with the measurement light ML.

Especially in the second example embodiment, the processing head 13 may irradiate at least one search mark 185b with the measurement light ML in a state where the positional relationship between the processing head 13 (especially, the irradiation optical system 135) and the optical measurement apparatus 18b is fixed. In this case, the processing head 13 may irradiate a desired search mark 185b with the measurement light ML by using at least one of the Galvano mirrors 1328 and 1341 to move the irradiation position MA of the measurement light ML on the beam passing member 181b. Specifically, the control unit 2 may generate a Galvano control signal for controlling at least one of the Galvano mirrors 1328 and 1341 so as to irradiate the desired search mark 185b with the measurement light ML. Then, the processing head 13 may irradiate the desired search mark 185b with the measurement light ML by controlling at least one of the Galvano mirrors 1328 and 1341 based on the Galvano control signal.

The processing head 13 may irradiate the search mark 185b with the measurement light ML along a first scanning direction along which two first linear light passing areas 184b-1 and one second linear light passing area 184b-2 included in the search mark 185b are arranged, as illustrated in FIG. 16. Namely, the processing head 13 may irradiate the search mark 185b with the measurement light ML by moving the irradiation position MA of the measurement light ML along the first scanning direction. In the example illustrated in FIG. 16, the first scanning direction is the X-axis direction. Therefore, the processing head 13 may irradiate the search mark 185b with the measurement light ML by moving the irradiation position MA of the measurement light ML along the X-axis direction.

The processing head 13 may irradiate the search mark 185b with the measurement light ML along a second scanning direction along which two third linear light passing areas 184b-3 and one second linear light passing area 184b-2 included in the search mark 185b are arranged. Namely, the processing head 13 may irradiate the search mark 185b with the measurement light ML by moving the irradiation position MA of the measurement light ML along the second scanning direction. In the example illustrated in FIG. 16, the second scanning direction is the Y-axis direction. Therefore, the processing head 13 may irradiate the search mark 185b with the measurement light ML by moving the irradiation position MA of the measurement light ML along the Y-axis direction.

In a case where a difference between a movement accuracy of the irradiation position MA along the first scanning direction and a movement accuracy of the irradiation position MA along the second scanning direction is smaller than an allowable amount, the processing head 13 may move the irradiation position MA along either one of the first and second scanning directions, but may not move the irradiation position MA along the other one of the first and second scanning directions. In this case, the below-described irradiation position information generated in a case where the irradiation position MA is moved along either one of the first and second scanning directions may be used as information related to the irradiation position MA moving along the first scanning direction, and may be used as information related to the irradiation position MA moving along the second scanning direction. Incidentally, in a case where the processing head 13 moves the irradiation position MA along the first scanning direction (the X-axis direction), the angle between the second linear aperture 1813b-2 and the Y-axis may be smaller than 45 degrees. In a case where the processing head 13 moves the irradiation position MA along the second scanning direction (the Y-axis direction), the angle between the second linear aperture 1813b-2 and the X-axis may be smaller than 45 degrees.

In a case where the difference between the movement accuracy of the irradiation position MA along the first scanning direction and the movement accuracy of the irradiation position MA along the second scanning direction is larger than the allowable amount, the processing head 13 may move irradiation position MA along each of the first and second scanning directions. In this case, the irradiation position information generated in a case where the irradiation position MA is moved along the first scanning direction may be used as the information related to the irradiation position MA moving along the first scanning direction, but may not be used as the information related to the irradiation position MA moving along the second scanning direction. The irradiation position information generated in a case where the irradiation position MA is moved along the second scanning direction may be used as the information related to the irradiation position MA moving along the second scanning direction, but may not be used as the information related to the irradiation position MA moving along the first scanning direction. Incidentally, in a case where the difference between the movement accuracy of the irradiation position MA along the first scanning direction and the movement accuracy of the irradiation position MA along the second scanning direction is smaller than the allowable amount, the angle between the second linear aperture 1813b-2 and the Y-axis may be the same as the angle between the second linear aperture 1813b-2 and the X-axis. For example, the angle between the second linear aperture 1813b-2 and the Y-axis and the angle between the second linear aperture 1813b-2 and the X-axis may be 45 degrees.

In a case where at least two search marks 185b that have different angles between the second linear aperture 1813b-2 and the X-axis are formed as described above, the processing head 13 may move the irradiation position MA along either one of the first and second scanning directions, but may not move the irradiation position MA along the other one of the first and second scanning directions, even in a case where the difference between the movement accuracy of the irradiation position MA along the first scanning direction and the movement accuracy of the irradiation position MA along the second scanning direction is larger than the allowable amount. In this case, the below-described irradiation position information generated in a case where the irradiation position MA is moved along either one of the first and second scanning directions may be used as information related to the irradiation position MA moving along the first scanning direction, and may be used as information related to the irradiation position MA moving along the second scanning direction.

The control unit 2 may move the optical measurement apparatus 18b along one scanning direction while using at least one of the Galvano mirrors 1328 and 1341 to move the irradiation position MA along the same one scanning direction. The control unit 2 may move the optical measurement apparatus 18b along one movement direction while using at least one of the Galvano mirrors 1328 and 1341 to move the irradiation position MA along the same one movement direction. In this case, the control unit 2 may control the optical measurement apparatus 18b and at least one of the Galvano mirrors 1328 and 1341 so that a movement speed of the irradiation position MA on the beam passing member 181b by at least one of the Galvano mirrors 1328 and 1341 is faster than a movement speed of the irradiation position MA on the beam passing member 181b by the movement of the optical measurement apparatus 18b. As a result, a light receiving time during which the light receiving element 182b can optically receive the measurement light ML is increased, compared to a case where the optical measurement apparatus 18b does not move. As a result, a signal-to-noise ratio of the light receiving element 182b can be improved. For example, if it is necessary to rotate the scanning mirror of at least one of the Galvano mirrors 1328 and 1341 at a relatively high speed due to a velocity dependency of at least one of the Galvano mirrors 1328 and 1341, the light receiving time is short. Even in this case, the processing system SYSb can increase the light receiving time by moving the optical measurement apparatus 18b. As a result, the signal-to-noise ratio of the light receiving element 182b can be improved.

The control unit 2 may control the movement speed of the irradiation position MA on the beam passing member 181b (namely, a scanning speed of the processing light EL). For example, the control unit 2 may set the movement speed of the irradiation position MA on the beam passing member 181b to a first speed that is faster than a second speed, thereby reducing a time required for measuring the measurement light ML, compared to a case where the movement speed of the irradiation position MA is set to the second speed. For example, the control unit 2 may set the movement speed of the irradiation position MA on the beam passing member 181b to the second speed that is slower than the first speed, thereby improving the measurement accuracy of the measurement light ML, compared to a case where the movement speed of the irradiation position MA is set to the first speed.

In a case where the plurality of search marks 185b are formed on the optical measurement apparatus 18b as described above, the processing head 13 may irradiate the plurality of search marks 185b with the measurement light ML in order. Namely, the processing head 13 may irradiate the plurality of search marks 185b with the measurement light ML in order along a direction along the surface of the beam passing member 181b on which the plurality of search marks 185b are formed. In other words, the processing head 13 may scan the plurality of search marks 185b with the measurement light ML in order. Namely, the processing head 13 may scan the plurality of search marks 185b with the measurement light ML in order along a direction along the surface of the beam passing member 181b on which the plurality of search marks 185b are formed.

The processing head 13 may irradiate the plurality of search marks 185b with the measurement light ML in order along the scanning direction, as illustrated in FIG. 16. Namely, the processing head 13 may irradiate the plurality of search marks 185b with the measurement light ML in order along the scanning direction by moving the irradiation position MA of the measurement light ML along the scanning direction. In the example illustrated in FIG. 16, the scanning direction is the X-axis direction. Therefore, the processing head 13 may irradiate the plurality of search marks 185b with the measurement light ML in order by moving the irradiation position MA of the measurement light ML along the X-axis direction.

In a case where the plurality of mark groups MG, each of which includes the plurality of search marks 185b arranged along the scanning direction (for example, the X-axis direction), are formed along the direction (for example, the Y-axis direction) intersecting the scanning direction, the processing head 13 may repeat an operation for irradiating the plurality of search marks 185b included in each mark group MG with the measurement light ML in order for the plurality of mark groups MG. For example, the processing head 13 may irradiate the plurality of search marks 185b included in the first mark group MG#1 with the measurement light ML in order, irradiate the plurality of search marks 185b included in the second mark group MG#2 with the measurement light ML in order, irradiate the plurality of search marks 185b included in the third mark group MG#3 with the measurement light ML in order, and irradiate the plurality of search marks 185b included in the fourth mark group MG#4 with the measurement light ML in order.

When the search mark 185b is irradiated with the measurement light ML, the light receiving element 182b optically receives the measurement light ML that has passed through the light passing area 184b that forms the search mark 185b. Namely, the light receiving element 182b optically receives the measurement light ML through the search mark 185b. The light receiving element 182b optically receives the measurement light ML that has passed through the search mark 185b. As a result, the light receiving element 182b optically receives the measurement light ML that has passed through one of the two first linear light passing areas 184b-1 included in the search mark 185b, and then optically receives the measurement light ML that has passed through the second linear light passing area 184b-2 included in the search mark 185b, and then optically receives the measurement light ML that has passed through the other one of the two first linear light passing areas 184b-1 included in the search mark 185b. Therefore, the light receiving element 182b outputs the light receiving information that indicates, as the light receiving result, the light receiving signal including a pulse signal in which a pulse waveform P1 corresponding to the measurement light ML that has passed through one of the two first linear light passing areas 184b-1, a pulse waveform P2 corresponding to the measurement light ML that has passed through the second linear light passing area 184b-2, and a pulse waveform P3 corresponding to the measurement light ML that has passed through the other one of the two first linear light passing areas 184b-1 appear in order, as illustrated in FIG. 17 that is a graph illustrating the light receiving result of the measurement light ML by the light receiving element 182b. In a case where the plurality of search marks 185b are irradiated with the measurement light ML in order, the light receiving element 182b outputs the light receiving information that indicates, as the light receiving result, the light receiving signal including a plurality of pulse signals in each of which the pulse waveforms P1 to P3 appear in order.

Incidentally, FIG. 17 illustrates an example in which a horizontal axis of the graph represents a light receiving timing (namely, a time) of each of the processing light EL and the measurement light ML, but the horizontal axis of the graph may be considered to represent the position of each of the processing light EL and the measurement light ML. Namely, it is also possible to develop the above-described description on the assumption that the horizontal axis of the graph illustrated in FIG. 17 represents the position of each of the processing light EL and the measurement light ML.

The processing head 13 does not irradiate the optical measurement apparatus 18b with the processing light EL and the measurement light ML simultaneously. In this case, the processing head 13 may not irradiate the optical measurement apparatus 18b with the measurement light ML in a period during which the optical measurement apparatus 18b is irradiated with the processing light EL. The processing head 13 may not irradiate the optical measurement apparatus 18b with the processing light EL in a period during which the optical measurement apparatus 18b is irradiated with the measurement light ML. In this case, even in a case where the optical measurement apparatus 18b includes a single light receiving element 182b, the light receiving element 182b can optically receive the processing light EL that has passed through the search mark 185b and the measurement light ML that has passed through the search mark 185b appropriately. Namely, the light receiving element 182b can output the light receiving information indicating the light receiving result of the processing light EL that has passed through the search mark 185b and the light receiving information indicating the light receiving result of the measurement light ML that has passed through the search mark 185b in an output aspect that allows them to be distinguished from each other.

However, the processing head 13 may irradiate the optical measurement apparatus 18b with the processing light EL and the measurement light ML simultaneously. In this case, the processing head 13 may irradiate one search mark 185b with the measurement light ML in at least a part of a period during which the same one search mark 185b is irradiated with the processing light EL. Alternatively, the processing head 13 may irradiate another search mark 185b, which is different from one search mark 185b, with the measurement light ML in at least a part of a period during which the same one search mark 185b is irradiated with the processing light EL.

In a case where the processing head 13 irradiates the optical measurement apparatus 18b with the processing light EL and the measurement light ML simultaneously, the optical measurement apparatus 18b may include a plurality of light receiving elements 182b. For example, the optical measurement apparatus 18b may separately include a light receiving element 182b for optically receiving the processing light EL that has passed through the search mark 185b and a light receiving element 182b for optically receiving the measurement light ML that has passed through the search mark 185b. As a result, even in a case where the processing head 13 irradiates the optical measurement apparatus 18b with the processing light EL and the measurement light ML simultaneously, the light receiving element 182b can output the light receiving information indicating the light receiving result of the processing light EL that has passed through the search mark 185b and the light receiving information indicating the light receiving result of the measurement light ML that has passed through the search mark 185b in an output aspect that allows them to be distinguished from each other.

In a case where the optical measurement apparatus 18b separately includes the light receiving element 182b for optically receiving the processing light EL and the light receiving element 182b for optically receiving the measurement light ML, the processing head 13 may irradiate the optical measurement apparatus 18b with the processing light EL and the measurement light ML simultaneously. Alternatively, the processing head 13 may not irradiate the optical measurement apparatus 18b with the processing light EL and the measurement light ML simultaneously.

### (2-3-3) Generation (Acquisition) of Irradiation Position Information

Then, the control unit 2 calculates (in other words, acquires) at least one of the irradiation positions PA of the processing light EL and the irradiation position MA of the measurement light ML based on the light receiving information output from the light receiving element 182b. Namely, the control unit 2 generates (acquires) the irradiation position information related to at least one of the irradiation positions PA of the processing light EL and the irradiation position MA of the measurement light ML based on the light receiving information.

### (2-3-3-1) First Specific Example of Irradiation Position Information

The control unit 2 may generate, as the irradiation position information, information related to a relative positional relationship between a base irradiation position BPA of the processing light EL and an actual irradiation position PA of the processing light EL (in the below-described description, it is referred to as an "actual irradiation position APA"). Specifically, as described above, the processing head 13 irradiates one search mark 185b with the processing light EL based on the Galvano control signal for controlling at least one of the Galvano mirrors 1313 and 1341 to irradiate the one search mark 185b with the processing light EL, in order to perform the calibration operation. The base irradiation position BPA may be an ideal irradiation position PA (in other words, a designed or target irradiation position PA) of the processing light EL when the processing head 13 irradiates the one search mark 185b with the processing light EL based on the Galvano control signal for irradiating the one search mark 185b with the processing light EL. On the other hand, the actual irradiation position APA may be the actual irradiation position PA of the processing light EL when the processing head 13 irradiates the same one search mark 185b with the processing light EL based on the same Galvano control signal for irradiating the same one search mark 185b with the processing light EL. The light receiving information acquired by the calibration operation includes information related to this actual irradiation position APA. Therefore, the control unit 2 may calculate the actual irradiation position APA based on the light receiving information. On the other hand, the information related to the base irradiation position BPA may be information known to the control unit 2. As a result, the control unit 2 may generate the irradiation position information that includes the information related to the relative positional relationship between the base irradiation position BPA and the actual irradiation position APA, based on the light receiving information and the information related to the base irradiation position BPA.

In a case where the plurality of search marks 185b distributed in the processing shot area PSA are irradiated with the processing light EL in order by the calibration operation as described above, the control unit 2 may generate, as the irradiation position information, the information related to the relative positional relationship between the base irradiation position BPA and the actual irradiation position APA at each of a plurality of different positions in the processing shot area PSA. Specifically, the control unit 2 may generate, as the irradiation position information, the information related to the relative positional relationship between the base irradiation position BPA and the actual irradiation position APA at a position of each of the plurality of search marks 185b distributed in the processing shot area PSA.

The information related to the base irradiation position BPAmay be generated in advance based on the light receiving information acquired by the processing unit 1b in an initial processing state irradiating the optical measurement apparatus 18b with the processing light EL before the calibration operation is performed. Therefore, the processing system SYSb may perform an initial operation for generating the information related to the base irradiation position BPA before the calibration operation is performed.

Specifically, first, the processing unit 1b is set to be in the initial processing state. The initial processing state of the processing unit 1b is a state in which the processing unit 1b can actually irradiate one position in the processing shot area PSA with the processing light EL in a case where the Galvano control signal for controlling the Galvano mirrors 1313 and 1341 to irradiate one position in the processing shot area PSA with the processing light EL is input to the Galvano mirrors 1313 and 1341. Namely, the initial processing state of processing unit 1b may be a state in which the ideal irradiation position PA of the processing light EL indicated by the Galvano control signal is the same as the actual irradiation position PA of the processing light EL emitted by processing unit 1b that operates based on the Galvano control signal.

In this case, in order to set the processing unit 1b to be in the initial processing state, the control unit 2 may adjust a sensitivity (a driving amount) of at least one of the Galvano mirrors 1313 and 1341 relative to the Galvano control signal. Incidentally, in a case where the irradiation optical system 135 is exchangeable as described above, the control unit 2 may adjust the sensitivity of at least one of the Galvano mirrors 1313 and 1341 relative to the Galvano control signal for each irradiation optical system 135. For example, in a case where a first irradiation optical system 135 is attached to the processing head 13, the control unit 2 may set the sensitivity of at least one of the Galvano mirrors 1313 and 1341 to a first sensitivity corresponding to the first irradiation optical system 135. For example, in a case where a second irradiation optical system 135 different from the first irradiation optical system 135 is attached to the processing head 13, the control unit 2 may set the sensitivity of at least one of the Galvano mirrors 1313 and 1341 to a second sensitivity corresponding to the second irradiation optical system 135. Alternatively, even in a case where the irradiation optical system 135 is exchangeable as described above, the control unit 2 may adjust the sensitivity of at least one of the Galvano mirrors 1313 and 1341 to a predetermined sensitivity that is common to the plurality of irradiation optical systems 135.

In addition, the measurement driving system 191b moves the optical measurement apparatus 18b to the calibration position CP1 under the control of the control unit 2. Furthermore, the head driving system 141 moves the processing head 13 to a position at which the processing head 13 can irradiate the optical measurement apparatus 18b positioned at the calibration position CP1 with the processing light EL under the control of the control unit 2. In this case, the control unit 2 may acquire initial position information related to a relative positional relationship between the optical measurement apparatus 18b and at least one of the processing head 13 and the stage 15. Specifically, the control unit 2 may calculate the relative positional relationship between the optical measurement apparatus 18b and at least one of the processing head 13 and the stage 15 based on the measured result by at least one of the position measurement apparatus 142 and 162 and the measured result by the position measurement apparatus 192b. For example, the control unit 2 may calculate the relative positional relationship between the optical measurement apparatus 18b positioned at the calibration position CP1 and the processing head 13 positioned at the position at which the processing head 13 can irradiate the optical measurement apparatus 18b positioned at the calibration position CP1 with the processing light EL, based on the measured result by each of the position measurement apparatus 142 and the position measurement apparatus 192b. The control unit 2 may calculate the relative positional relationship between the optical measurement apparatus 18b positioned at the calibration position CP1 and the stage 15 based on the measured result of each of the position measurement apparatus 162 and the position measurement apparatus 192b. The initial position information acquired here may be used to move the optical measurement apparatus 18b to the calibration position CP1 in the calibration operation. The initial position information may be used to move the processing head 13b to the position at which the processing head 13 can irradiate the optical measurement apparatus 18b positioned at the calibration position CP1 with the processing light EL. The initial position information may be used to move the stage 15 in the calibration operation. Namely, the processing system SYSb may perform the calibration operation based on the initial position information acquired in the initial operation.

Then, the processing unit 1b irradiates the optical measurement apparatus 18b with the processing light EL. Specifically, the processing unit 1b irradiates the desired search mark 185b formed on the optical measurement apparatus 18b with the processing light EL. As a result, the optical measurement apparatus 18b outputs the light receiving information indicating the measured result of the processing light EL that has passed through the desired search mark 185b. This light receiving information includes information related to the actual irradiation position PA of the processing light EL at a desired position at which the desired search mark 185b is positioned in the processing shot area PSA. As described above, the actual irradiation position PA of the processing light EL is the same as the ideal irradiation position PA of the processing light EL by the processing unit 1b in the initial processing state. Therefore, the light receiving information includes information related to the ideal irradiation position PA (namely, the base irradiation position BPA) of the processing light EL at the desired position at which the desired search mark 185b is positioned in the processing shot area PSA. Therefore, the control unit 2 may generate the information related to the base irradiation position BPA based on the light receiving information acquired by the initial operation. Alternatively, the control unit 2 may use the light receiving information acquired by the initial operation as the information related to the base irradiation position BPA.

Even in the initial operation, the processing unit 1b may irradiate the plurality of search marks 185b formed on the optical measurement apparatus 18b with the processing light EL. In this case, the control unit 2 may generate the information related to the ideal irradiation position PA (namely, the base irradiation position BPA) of the processing light EL at a plurality of positions at which the plurality of search marks 185b distributed in the processing shot area PSA are positioned, based on the light receiving information acquired by the initial operation.

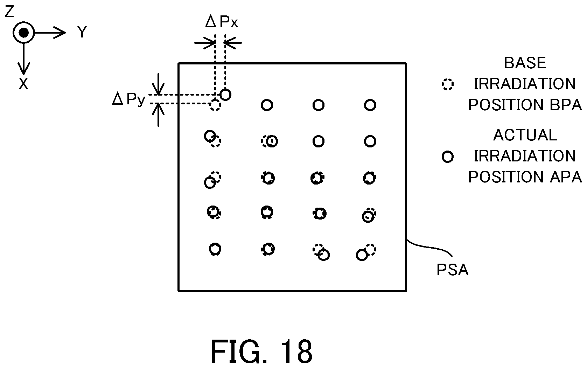

The control unit 2 may calculate, as the relative positional relationship between the base irradiation position BPA and the actual irradiation position APA, a distance (in other words, a positional deviation) between the base irradiation position BPA and the actual irradiation position APA in a direction along the surface of the beam passing member 181b. Especially, the control unit 2 may calculate the distance between the base irradiation position BPA and the actual irradiation position APA at each of the plurality of positions in the processing shot area PSA. For example, FIG. 18 illustrates the relative positional relationship between the base irradiation position BPA and the actual irradiation position APA at each of the plurality of positions in the processing shot area PSA. Considering that the surface of the beam passing member 181b is a surface that is along the XY plane, the control unit 2 may calculate a distance ΔPx between the base irradiation position BPA and the actual irradiation position APA in the X-axis direction as the relative positional relationship between the base irradiation position BPA and the actual irradiation position APA, as illustrated in FIG. 18. Especially, the control unit 2 may calculate the distance ΔPx at each of the plurality of positions in the processing shot area PSA. Furthermore, the control unit 2 may calculate a distance ΔPy between the base irradiation position BPA and the actual irradiation position APA in the Y-axis direction as the relative positional relationship between the base irradiation position BPA and the actual irradiation position APA. Especially, the control unit 2 may calculate the distance ΔPy at each of the plurality of positions in the processing shot area PSA.

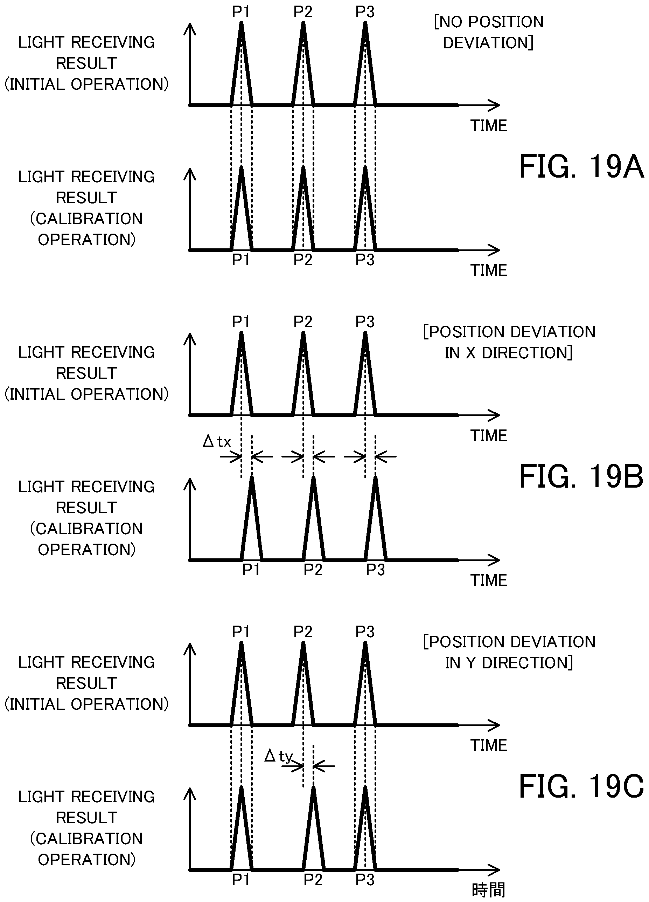

Next, with reference to FIG. 19A to FIG. 19B, one example of an operation for calculating the distances ΔPx and ΔPy based on the light receiving information indicating the light receiving result of the processing light EL irradiated onto the desired search mark 185b will be described. However, the control unit 2 may calculate the distances ΔPx and ΔPy by performing an operation that is different from the below-described operation.

FIG. 19A illustrates the light receiving information (especially, the pulse signal in which the pulse waveforms P1 to P3 appear in order) in a case where the actual irradiation position APA is the same as the base irradiation position BPA. Especially, an upper drawing of FIG. 19A illustrates the light receiving information acquired in a case where the desired search mark 185b is irradiated with the processing light EL in the initial operation, and a lower drawing of FIG. 19A illustrates the light receiving information acquired in a case where the same desired search mark 185b is irradiated with the processing light EL in the calibration operation. In a case where the actual irradiation position APA is the same as the base irradiation position BPA, timings at which the pulse waveforms P1 to P3 appear in the initial operation are the same as timings at which the pulse waveforms P1 to P3 appear in the calibration operation, respectively.

FIG. 19B illustrates the light receiving information (especially the pulse signal in which the pulse waveforms P1 to P3 appear in order) in a case where the actual irradiation position APA and the base irradiation position BPA are away from each other along the X-axis direction. Especially, an upper drawing of FIG. 19B illustrates the light receiving information acquired in a case where the desired search mark 185b is irradiated with the processing light EL in the initial operation, and a lower drawing of FIG. 19B illustrates the light receiving information acquired in a case where the same desired search mark 185b is irradiated with the processing light EL in the calibration operation. In a case where the actual irradiation position APA and the base irradiation position BPA are away from each other along the X-axis direction, the timings at which the pulse waveforms P1 to P3 appear in the initial operation are advanced or delayed by a time Δtx corresponding to the distance ΔPx from the timing at which the pulse waveforms P1 to P3 appear in the calibration operation.

FIG. 19C illustrates the light receiving information (especially the pulse signal in which the pulse waveforms P1 to P3 appear in order) in a case where the actual irradiation position APA and the base irradiation position BPA are away from each other along the Y-axis direction. Especially, an upper drawing of FIG. 19C illustrates the light receiving information acquired in a case where the desired search mark 185b is irradiated with the processing light EL in the initial operation, and a lower drawing of FIG. 19C illustrates the light receiving information acquired in a case where the same desired search mark 185b is irradiated with the processing light EL in the calibration operation. In a case where the actual irradiation position APA and the base irradiation position BPA are away from each other along the Y-axis direction, a difference between the timing at which the pulse waveform P2 appears in the initial operation and the timing at which the pulse waveform P2 appears in the calibration operation is advanced or delayed by a time Δty corresponding to the distance ΔPy, compared to a difference between the timings at which the pulse waveforms P1 and P3 appear in the initial operation and the timings at which the pulse waveforms P1 and P3 appear in the calibration operation.

Therefore, the control unit 2 may calculate the distance ΔPx based on the time Δtx corresponding to the difference between the timings at which the pulse waveforms P1 to P3 appear in the initial operation and the timings at which the pulse waveforms P1 to P3 appear in the calibration operation. The control unit 2 may calculate the distance ΔPy based on the time Δty corresponding to a difference between the difference of the timing at which the pulse waveform P2 appears in the initial operation and the timing at which the pulse waveform P2 appears in the calibration operation, and the difference of the timings at which the pulse waveform P1 and P3 appear in the initial operation and the timings at which the pulse waveform P1 and P3 appear in the calibration operation.

Incidentally, FIG. 19 illustrates an example in which a horizontal axis of the graph represents the light receiving timing (namely, the time) of each of the processing light EL and the measurement light ML, but the horizontal axis of the graph may be considered to represent the position of each of the processing light EL and the measurement light ML. Namely, it is also possible to develop the above-described description on the assumption that the horizontal axis of the graph illustrated in FIG. 19 represents the position of each of the processing light EL and the measurement light ML.

### (2-3-3-2) Second Specific Example of Irradiation Position Information

The control unit 2 may generate, as the irradiation position information, information related to a relative positional relationship between a base irradiation position BMA of the measurement light ML and an actual irradiation position MA of the measurement light ML (in the below-described description, it is referred to as an "actual irradiation position AMA"). Specifically, as described above, the processing head 13 irradiates one search mark 185b with the measurement light ML based on the Galvano control signal for controlling at least one of the Galvano mirrors 1328 and 1341 to irradiate the one search mark 185b with the measurement light ML, in order to perform the calibration operation. The base irradiation position BMA may be an ideal irradiation position MA (in other words, a designed or target irradiation position MA) of the measurement light ML when the processing head 13 irradiates the one search mark 185b with the measurement light ML based on the Galvano control signal for irradiating the one search mark 185b with the measurement light ML. On the other hand, the actual irradiation position AMA may be the actual irradiation position MA of the measurement light ML when the processing head 13 irradiates the same one search mark 185b with the measurement light ML based on the same Galvano control signal for irradiating the same one search mark 185b with the measurement light ML. The light receiving information acquired by the calibration operation includes information related to this actual irradiation position AMA. Therefore, the control unit 2 may calculate the actual irradiation position AMA based on the light receiving information. On the other hand, the information related to the base irradiation position BMA may be information known to the control unit 2. As a result, the control unit 2 may generate the irradiation position information that includes the information related to the relative positional relationship between the base irradiation position BMA and the actual irradiation position AMA, based on the light receiving information and the information related to the base irradiation position BMA.

In a case where the plurality of search marks 185b distributed in the measurement shot area MSA are irradiated with the measurement light ML in order by the calibration operation as described above, the control unit 2 may generate, as the irradiation position information, the information related to the relative positional relationship between the base irradiation position BMA and the actual irradiation position AMA at each of a plurality of different positions in the measurement shot area MSA. Specifically, the control unit 2 may generate, as the irradiation position information, the information related to the relative positional relationship between the base irradiation position BMA and the actual irradiation position AMA at a position of each of the plurality of search marks 185b distributed in the measurement shot area MSA.

The information related to the base irradiation position BMA may be generated in advance based on the light receiving information acquired by the processing unit 1b in an initial measurement state irradiating the optical measurement apparatus 18b with the measurement light ML before the calibration operation is performed. Therefore, the processing system SYSb may perform an initial operation for generating the information related to the base irradiation position BMA before the calibration operation is performed.

Specifically, first, the processing unit 1b is set to be in the initial measurement state. The initial measurement state of the processing unit 1b is a state in which the processing unit 1b can actually irradiate one position in the measurement shot area MSA with the measurement light ML in a case where the Galvano control signal for controlling the Galvano mirrors 1328 and 1341 to irradiate one position in the measurement shot area MSA with the measurement light ML is input to the Galvano mirrors 1328 and 1341. Namely, the initial measurement state of processing unit 1b may be a state in which the ideal irradiation position MA of the measurement light ML indicated by the Galvano control signal is the same as the actual irradiation position MA of the measurement light ML emitted by processing unit 1b that operates based on the Galvano control signal.

In this case, in order to set the processing unit 1b to be in the initial measurement state, the control unit 2 may adjust a sensitivity (a driving amount) of at least one of the Galvano mirrors 1328 and 1341 relative to the Galvano control signal. Incidentally, in a case where the irradiation optical system 135 is exchangeable as described above, the control unit 2 may adjust the sensitivity of at least one of the Galvano mirrors 1328 and 1341 relative to the Galvano control signal for each irradiation optical system 135. For example, in a case where a first irradiation optical system 135 is attached to the processing head 13, the control unit 2 may set the sensitivity of at least one of the Galvano mirrors 1328 and 1341 to a third sensitivity corresponding to the first irradiation optical system 135. For example, in a case where a second irradiation optical system 135 different from the first irradiation optical system 135 is attached to the processing head 13, the control unit 2 may set the sensitivity of at least one of the Galvano mirrors 1328 and 1341 to a fourth sensitivity corresponding to the second irradiation optical system 135. Alternatively, even in a case where the irradiation optical system 135 is exchangeable as described above, the control unit 2 may adjust the sensitivity of at least one of the Galvano mirrors 1328 and 1341 to a predetermined sensitivity that is common to the plurality of irradiation optical systems 135.

In addition, the measurement driving system 191b moves the optical measurement apparatus 18b to the calibration position CP1 under the control of the control unit 2. Furthermore, the head driving system 141 moves the processing head 13 to a position at which the processing head 13 can irradiate the optical measurement apparatus 18b positioned at the calibration position CP1 with the measurement light ML under the control of the control unit 2. In this case, the control unit 2 may acquire initial position information related to a relative positional relationship between the optical measurement apparatus 18b and at least one of the processing head 13 and the stage 15. Specifically, the control unit 2 may calculate the relative positional relationship between the optical measurement apparatus 18b and at least one of the processing head 13 and the stage 15 based on the measured result by at least one of the position measurement apparatus 142 and 162 and the measured result by the position measurement apparatus 192b. For example, the control unit 2 may calculate the relative positional relationship between the optical measurement apparatus 18b positioned at the calibration position CP1 and the processing head 13 positioned at the position at which the processing head 13 can irradiate the optical measurement apparatus 18b positioned at the calibration position CP1 with the measurement light ML, based on the measured result by each of the position measurement apparatus 142 and the position measurement apparatus 192b. The control unit 2 may calculate the relative positional relationship between the optical measurement apparatus 18b positioned at the calibration position CP1 and the stage 15 based on the measured result of each of the position measurement apparatus 162 and the position measurement apparatus 192b. The initial position information acquired here may be used to move the optical measurement apparatus 18b to the calibration position CP1 in the calibration operation. The initial position information may be used to move the processing head 13b to the position at which the processing head 13 can irradiate the optical measurement apparatus 18b positioned at the calibration position CP1 with the measurement light ML. The initial position information may be used to move the stage 15 in the calibration operation. Namely, the processing system SYSb may perform the calibration operation based on the initial position information acquired in the initial operation.

Then, the processing unit 1b irradiates the optical measurement apparatus 18b with the measurement light ML. Specifically, the processing unit 1b irradiates the desired search mark 185b formed on the optical measurement apparatus 18b with the measurement light ML. As a result, the optical measurement apparatus 18b outputs the light receiving information indicating the measured result of the measurement light ML that has passed through the desired search mark 185b. This light receiving information includes information related to the actual irradiation position MA of the measurement light ML at a desired position at which the desired search mark 185b is positioned in the measurement shot area MSA. As described above, the actual irradiation position MA of the measurement light ML is the same as the ideal irradiation position MA of the measurement light ML by the processing unit 1b in the initial measurement state. Therefore, the light receiving information includes information related to the ideal irradiation position MA (namely, the base irradiation position BMA) of the measurement light ML at the desired position at which the desired search mark 185b is positioned in the measurement shot area MSA. Therefore, the control unit 2 may generate the information related to the base irradiation position BMA based on the light receiving information acquired by the initial operation. Alternatively, the control unit 2 may use the light receiving information acquired by the initial operation as the information related to the base irradiation position BMA.

Even in the initial operation, the processing unit 1b may irradiate the plurality of search marks 185b formed on the optical measurement apparatus 18b with the measurement light ML. In this case, the control unit 2 may generate the information related to the ideal irradiation position MA (namely, the base irradiation position BMA) of the measurement light ML at a plurality of positions at which the plurality of search marks 185b distributed in the measurement shot area MSA are positioned, based on the light receiving information acquired by the initial operation.

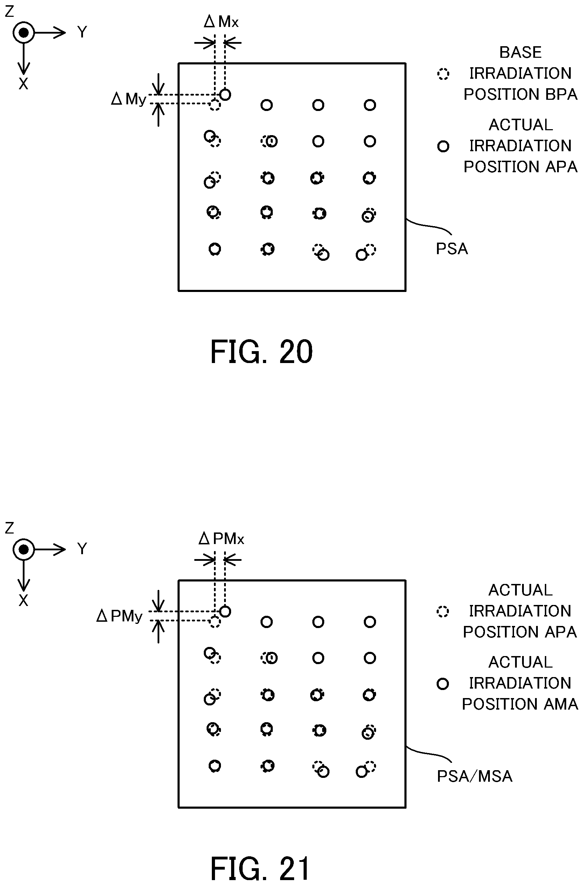

The control unit 2 may calculate, as the relative positional relationship between the base irradiation position BMA and the actual irradiation position AMA, a distance (in other words, a positional deviation) between the base irradiation position BMA and the actual irradiation position AMA in a direction along the surface of the beam passing member 181b. Especially, the control unit 2 may calculate the distance between the base irradiation position BMA and the actual irradiation position AMA at each of the plurality of positions in the measurement shot area MSA. For example, FIG. 20 illustrates the relative positional relationship between the base irradiation position BMA and the actual irradiation position AMA at each of the plurality of positions in the measurement shot area MSA. Considering that the surface of the beam passing member 181b is a surface that is along the XY plane, the control unit 2 may calculate a distance ΔMx between the base irradiation position BMA and the actual irradiation position AMA in the X-axis direction as the relative positional relationship between the base irradiation position BMA and the actual irradiation position AMA, as illustrated in FIG. 20. Especially, the control unit 2 may calculate the distance ΔMx at each of the plurality of positions in the measurement shot area MSA. Furthermore, the control unit 2 may calculate a distance ΔMy between the base irradiation position BMA and the actual irradiation position AMA in the Y-axis direction as the relative positional relationship between the base irradiation position BMA and the actual irradiation position AMA. Especially, the control unit 2 may calculate the distance ΔMy at each of the plurality of positions in the measurement shot area MSA.

The control unit 2 may calculate the distances ΔMx and ΔMy based on the light receiving information indicating the light receiving result of the measurement light ML by performing an operation that is the same as an operation for calculate the distances ΔPx and ΔPy based on the light receiving information indicating the light receiving result of the processing light EL. Namely, an above-described description of one example of the operation for calculating the distances ΔPx and ΔPy based on the light receiving information indicating the light receiving result of the processing light EL may be used as a description of one example of the operation for calculating the distances ΔMx and ΔMy based on the light receiving information indicating the light receiving result of the measurement light ML by replacing the terms "actual irradiation position APA", "base irradiation position BPA", "processing light EL", "distance ΔPx", and "distance ΔPy" with the terms "actual irradiation position AMA", 'base irradiation position BMA", "measuring light ML", "distance ΔMx", and "distance ΔMy". Therefore, the description of one example of the operation for calculating the distances ΔMx and ΔMy based on the light receiving information indicating the light receiving result of the measurement light ML is omitted.

### (2-3-3-3) Third Specific Example of Irradiation Position Information

In a case where the processing head 13 irradiates the same search mark 185b with the processing light EL and the measurement light ML, the control unit 2 may generate, as the irradiation position information, information related to a relative positional relationship between the actual irradiation position APA of the processing light EL and the actual irradiation position AMA of the measurement light ML. Specifically, the light receiving information acquired by the processing head 13 irradiating one search mark 185b with the processing light EL includes information related to the actual irradiation position APA of the processing light EL irradiated onto one search mark 185b. Similarly, the light receiving information acquired by the processing head 13 irradiating one search mark 185b with the measurement light ML includes information related to the actual irradiation position AMA of the measurement light ML irradiated onto one search mark 185b. Therefore, the control unit 2 may generate irradiation position information that includes the information related to the relative positional relationship between the actual irradiation position APA and the actual irradiation position AMA based on the light receiving information.

In a case where, the plurality of search marks 185b are irradiated with the processing light EL and the measurement light ML in order by the calibration operation as described above, the control unit 2 may generate, as the irradiation position information, information related to the relative positional relationship between the actual irradiation position APA and the actual irradiation position AMA at each of a plurality of different positions in at least one of the processing shot area PSA and the measurement shot area MSA. Specifically, the control unit 2 may include, as the irradiation position information, the information related to the relative positional relationship between the actual irradiation position APA and the actual irradiation position AMA at a position of each of the plurality of search marks 185b distributed in at least one of the processing shot area PSA and the measurement shot area MSA.

The control unit 2 may calculate, as the relative positional relationship between the actual irradiation position APA and the actual irradiation position AMA, a distance (in other words, a positional deviation) between the actual irradiation position APA and the actual irradiation position APA in a direction along the surface of the beam passing member 181b. Especially, the control unit 2 may calculate the distance between the actual irradiation position APA and the actual irradiation position AMA at each of plurality of positions in at least one of the processing shot area PSA and the measurement shot area MSA. For example, FIG. 21 illustrates the relative positional relationship between the actual irradiation position APA and the actual irradiation position AMA at each of the plurality of positions in at least one of the processing shot area PSA and the measurement shot area MSA. Considering that the surface of the beam passing member 181b is a surface that is along the XY plane, the control unit 2 may calculate a distance ΔPMx between the actual irradiation position APA and the actual irradiation position AMA in the X-axis direction as the relative positional relationship between the actual irradiation position APA and the actual irradiation position AMA, as illustrated in FIG. 21. Especially, the control unit 2 may calculate the distance ΔPMx at each of the plurality of positions in at least one of the processing shot area PSA and the measurement shot area MSA. Furthermore, the control unit 2 may calculate a distance ΔPMy between the actual irradiation position APA and the actual irradiation position AMA in the Y-axis direction as the relative positional relationship between the actual irradiation position APA and the actual irradiation position AMA. Especially, the control unit 2 may calculate the distance ΔPMy at each of plurality of positions in at least one of the processing shot area PSA and the measurement shot area MSA.

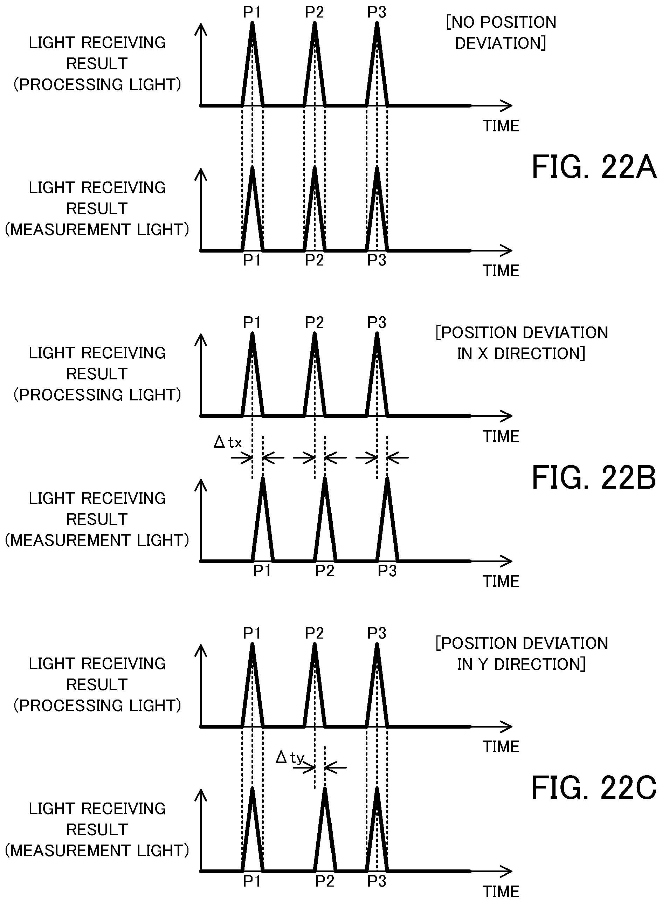

Next, with reference to FIG. 22A to FIG. 22B, one example of an operation for calculating the distances ΔPMx and ΔPMy based on the light receiving information indicating the light receiving result of the processing light EL and the measurement light ML irradiated onto the desired search mark 185b will be described.

FIG. 22A illustrates the light receiving information (especially, the pulse signal in which the pulse waveforms P1 to P3 appear in order) in a case where the actual irradiation position APA is the same as the actual irradiation position AMA. Especially, an upper drawing of FIG. 22A illustrates the light receiving information acquired in a case where the desired search mark 185b is irradiated with the processing light EL, and a lower drawing of FIG. 22A illustrates the light receiving information acquired in a case where the same desired search mark 185b is irradiated with the measurement light ML. In a case where the actual irradiation position APA is the same as the actual irradiation position AMA, the timings at which the pulse waveforms P1 to P3 appear in the light receiving result of the processing light EL are the same as the timings at which the pulse waveforms P1 to P3 appear in the light receiving result of the measurement light ML, respectively.

FIG. 22B illustrates the light receiving information (especially, the pulse signal in which the pulse waveforms P1 to P3 appear in order) in a case where the actual irradiation position APA and the actual irradiation position AMA are away from each other along the X-axis direction. Especially, an upper drawing of FIG. 22B illustrates the light receiving information acquired in a case where the desired search mark 185b is irradiated with the processing light EL, and a lower drawing of FIG. 22B illustrates the light receiving information acquired in a case where the same desired search mark 185b is irradiated with the measurement light ML. In a case where the actual irradiation position APA and the actual irradiation position AMA are away from each other along the X-axis direction, the timings at which the pulse waveforms P1 to P3 appear in the light receiving result of the processing light EL are advanced or delayed by a time Δtx corresponding to the distance ΔPMx from the timings at which the pulse waveforms P1 to P3 appear in the light receiving result of the measurement light ML, respectively.

FIG. 22C illustrates the light receiving information (especially, the pulse signal in which the pulse waveforms P1 to P3 appear in order) in a case where the actual irradiation position APA and the actual irradiation position AMA are away from each other along the Y-axis direction. Especially, an upper drawing of FIG. 22C illustrates the light receiving information acquired in a case where the desired search mark 185b is irradiated with the processing light EL, and a lower drawing of FIG. 22C illustrates the light receiving information acquired in a case where the same desired search mark 185b is irradiated with the measurement light ML. In a case where the actual irradiation position APA and the actual irradiation position AMA are away from each other along the Y-axis direction, a difference between the timing at which the pulse waveform P2 appears in the light receiving result of the processing light EL and the timing at which the pulse waveform P2 appears in the light receiving result of the measurement light ML is advanced or delayed by a time Δty corresponding to the distance ΔPMy, compared to a difference between the timings at which the pulse waveforms P1 and P3 appear in the light receiving result of the processing light EL and the timings at which the pulse waveforms P1 and P3 appear in the light receiving result of the measurement light ML.

Therefore, the control unit 2 may calculate the distance ΔPMx based on the time Δtx corresponding to the difference between the timings at which the pulse waveforms P1 to P3 appear in the light receiving result of the processing light EL and the timings at which the pulse waveforms P1 to P3 appear in the light receiving result of the measurement light ML. The control unit 2 may calculate the distance ΔPMy based on the time Δty corresponding to a difference between the difference of the timing at which the pulse waveform P2 appears in the light receiving result of the processing light EL and the timing at which the pulse waveform P2 appears in the light receiving result of the measurement light ML, and the difference of the timings at which the pulse waveform P1 and P3 appear in the light receiving result of the processing light EL and the timings at which the pulse waveform P1 and P3 appear in the light receiving result of the measurement light ML.

### (2-3-4) Calibration of Irradiation Position PA of Processing Light EL and Irradiation Position of Measurement Light ML based on Irradiation Position Information

Then, the control unit 2 calibrates (in other words, controls or adjusts) at least one of the irradiation position PA of the processing light EL and the irradiation position MA of the measurement light ML based on the irradiation position information.

### (2-3-4-1) Calibration of Irradiation Position PA of Processing Light EL based on Irradiation Position Information related to Relative Positional Relationship Between Base Irradiation Position BPA of Processing Light EL and Actual Irradiation Position APA of Processing Light EL

For example, in a case where the irradiation position information includes the information related to the relative positional relationship between the base irradiation position BPA of the processing light EL and the actual irradiation position APA of the processing light EL, the control unit 2 may calibrate, based on the irradiation position information, the irradiation position PA of the processing light EL based on the irradiation position information. Specifically, the control unit 2 may control the position change apparatus, which is configured to change the irradiation position PA of the processing light EL, based on the irradiation position information so that the irradiation position PA of the processing light EL is a desired first irradiation position. Incidentally, at least one of the Galvano mirrors 1313 and 1341 that is configured to change the irradiation position PA of the processing light EL is one example of the position change apparatus that is configured to change the irradiation position PA of the processing light EL. Therefore, the control unit 2 may control at least one of the Galvano mirrors 1313 and 1341 based on the irradiation position information so that the irradiation position PA of the processing light EL is the desired first irradiation position.

As one example, the control unit 2 may calibrate the irradiation position PA of the processing light EL so that the actual irradiation position APA is closer to the base irradiation position BPA than before the irradiation position PA of the processing light EL is calibrated. Namely, the control unit 2 may control at least one of the Galvano mirrors 1313 and 1341 so that the actual irradiation position APA is closer to the base irradiation position BPA than before the irradiation position PA of the processing light EL is calibrated. Specifically, the control unit 2 may calibrate the irradiation position PA of the processing light EL so that the actual irradiation position APA, which is actually irradiated with the processing light EL based on the Galvano control signal for controlling at least one of the Galvano mirrors 1313 and 1341 to irradiate the base irradiation position BPA with the processing light EL, is closer to the base irradiation position BPA. In other words, the control unit 2 may calibrate the irradiation position PA of the processing light EL so that the actual irradiation position APA, which is actually irradiated with the processing light EL based on the Galvano control signal for controlling at least one of the Galvano mirrors 1313 and 1341 to irradiate a desired position with the processing light EL, is closer to the desired position.

In this case, the control unit 2 may calibrate the irradiation position PA of the processing light EL at each of the plurality of positions in the processing shot area PSA based on the information related to the relative positional relationship between the base irradiation position BPA and the actual irradiation position APA at each of the plurality of positions in the processing shot area PSA so that the actual irradiation position APA is closer to the base irradiation position BPA at each of the plurality of positions in the processing shot area PSA. Namely, the control unit 2 may calibrate the irradiation position PA of the processing light EL at one position in the processing shot area PSA based on the information related to the relative positional relationship between the base irradiation position BPA and the actual irradiation position APA at the one position in the processing shot area PSA so that the actual irradiation position APA is closer to the base irradiation position BPA at the one position in the processing shot area PSA.

As another example, the control unit 2 may calibrate the irradiation position PA of the processing light EL so that the actual irradiation position APA is the same as the base irradiation position BPA. Namely, the control unit 2 may control at least one of the Galvano mirrors 1313 and 1341 so that the actual irradiation position APA is the same as the base irradiation position BPA. Specifically, the control unit 2 may calibrate the irradiation position PA of the processing light EL so that the base irradiation position BPA is actually irradiated with the processing light EL based on the Galvano control signal for controlling at least one of the Galvano mirrors 1313 and 1341 to irradiate the base irradiation position BPA with the processing light EL. In other words, the control unit 2 may calibrate the irradiation position PA of the processing light EL so that a desired position is actually irradiated with the processing light EL based on the Galvano control signal for controlling at least one of the Galvano mirrors 1313 and 1341 to irradiate the desired position with the processing light EL.

In this case, the control unit 2 may calibrate the irradiation position PA of the processing light EL at each of the plurality of positions in the processing shot area PSA based on the information related to the relative positional relationship between the base irradiation position BPA and the actual irradiation position APA at each of the plurality of positions in the processing shot area PSA so that the actual irradiation position APA is the same as the base irradiation position BPA at each of the plurality of positions in the processing shot area PSA. Namely, the control unit 2 may calibrate the irradiation position PA of the processing light EL at one position in the processing shot area PSA based on the information related to the relative positional relationship between the base irradiation position BPA and the actual irradiation position APA at the one position in the processing shot area PSA so that the actual irradiation position APA is the same as the base irradiation position BPA at the one position in the processing shot area PSA.

### (2-3-4-2) Calibration of Irradiation Position MA of Measurement Light ML based on Irradiation Position Information related to Relative Positional Relationship Between Base Irradiation Position BMA of Measurement Light ML and Actual Irradiation Position AMA of Measurement Light ML

For example, in a case where the irradiation position information includes the information related to the relative positional relationship between the base irradiation position BMA of the measurement light ML and the actual irradiation position AMA of the measurement light ML, the control unit 2 may calibrate, based on the irradiation position information, the irradiation position MA of the measurement light ML based on the irradiation position information. Specifically, the control unit 2 may control the position change apparatus, which is configured to change the irradiation position MA of the measurement light ML, based on the irradiation position information so that the irradiation position MA of the measurement light ML is a desired second irradiation position. Incidentally, at least one of the Galvano mirrors 1328 and 1341 that is configured to change the irradiation position MA of the measurement light ML is one example of the position change apparatus that is configured to change the irradiation position MA of the measurement light ML. Therefore, the control unit 2 may control at least one of the Galvano mirrors 1328 and 1341 based on the irradiation position information so that the irradiation position MA of the measurement light ML is the desired first irradiation position.

As one example, the control unit 2 may calibrate the irradiation position MA of the measurement light ML so that the actual irradiation position AMA is closer to the base irradiation position BMA than before the irradiation position MA of the measurement light ML is calibrated. Namely, the control unit 2 may control at least one of the Galvano mirrors 1328 and 1341 so that the actual irradiation position AMA is closer to the base irradiation position BMAthan before the irradiation position MA of the measurement light ML is calibrated. Specifically, the control unit 2 may calibrate the irradiation position MA of the measurement light ML so that the actual irradiation position AMA, which is actually irradiated with the measurement light ML based on the Galvano control signal for controlling at least one of the Galvano mirrors 1328 and 1341 to irradiate the base irradiation position BMA with the measurement light ML, is closer to the base irradiation position BMA. In other words, the control unit 2 may calibrate the irradiation position MA of the measurement light ML so that the actual irradiation position AMA, which is actually irradiated with the measurement light ML based on the Galvano control signal for controlling at least one of the Galvano mirrors 1328 and 1341 to irradiate a desired position with the measurement light ML, is closer to the desired position.

In this case, the control unit 2 may calibrate the irradiation position MA of the measurement light ML at each of the plurality of positions in the measurement shot area MSA based on the information related to the relative positional relationship between the base irradiation position BMA and the actual irradiation position AMA at each of the plurality of positions in the measurement shot area MSA so that the actual irradiation position AMA is closer to the base irradiation position BMA at each of the plurality of positions in the measurement shot area MSA. Namely, the control unit 2 may calibrate the irradiation position MA of the measurement light ML at one position in the measurement shot area MSA based on the information related to the relative positional relationship between the base irradiation position BMA and the actual irradiation position AMA at the one position in the measurement shot area MSA so that the actual irradiation position AMA is closer to the base irradiation position BMA at the one position in the measurement shot area MSA.

As another example, the control unit 2 may calibrate the irradiation position MA of the measurement light ML so that the actual irradiation position AMA is the same as the base irradiation position BMA. Namely, the control unit 2 may control at least one of the Galvano mirrors 1328 and 1341 so that the actual irradiation position AMA is the same as the base irradiation position BMA. Specifically, the control unit 2 may calibrate the irradiation position MA of the measurement light ML so that the base irradiation position BMA is actually irradiated with the measurement light ML based on the Galvano control signal for controlling at least one of the Galvano mirrors 1328 and 1341 to irradiate the base irradiation position BMA with the measurement light ML. In other words, the control unit 2 may calibrate the irradiation position MA of the measurement light ML so that a desired position is actually irradiated with the measurement light ML based on the Galvano control signal for controlling at least one of the Galvano mirrors 1328 and 1341 to irradiate the desired position with the measurement light ML.

In this case, the control unit 2 may calibrate the irradiation position MA of the measurement light ML at each of the plurality of positions in the measurement shot area MSA based on the information related to the relative positional relationship between the base irradiation position BMA and the actual irradiation position AMA at each of the plurality of positions in the measurement shot area MSA so that the actual irradiation position AMA is the same as the base irradiation position BMA at each of the plurality of positions in the measurement shot area MSA. Namely, the control unit 2 may calibrate the irradiation position MA of the measurement light ML at one position in the measurement shot area MSA based on the information related to the relative positional relationship between the base irradiation position BMA and the actual irradiation position AMA at the one position in the measurement shot area MSA so that the actual irradiation position AMA is the same as the base irradiation position BMA at the one position in the measurement shot area MSA.

### (2-3-4-3) Calibration of At Least One of Irradiation Position PA of Processing Light EL and Irradiation Position MA of Measurement Light ML based on Irradiation Position Information related to Relative Positional Relationship Between Actual Irradiation Position APA of Processing Light EL and Actual Irradiation Position AMA of Measurement Light ML

For example, in a case where the irradiation position information includes the information related to the relative positional relationship between the actual irradiation position APA of the processing light EL and the actual irradiation position AMA of the measurement light ML, the control unit 2 may calibrate at least one of the irradiation positions PA of the processing light EL and the irradiation position MA of the measurement light ML based on the irradiation position information. Specifically, the control unit 2 may control the position change apparatus that is configured to change at least one of the irradiation position PA of the processing light EL and the irradiation position MA of the measurement light ML based on the irradiation position information so that the relative positional relationship between the irradiation position PA of the processing light EL and the irradiation position MA of the measurement light ML is a predetermined positional relationship. For example, the control unit 2 may control at least one of the Galvano mirrors 1313, 1328 and 1341 based on the irradiation position information so that the relative positional relationship between the irradiation position PA of the processing light EL and the irradiation position MA of the measurement light ML is the predetermined positional relationship.

As one example, the control unit 2 may calibrate at least one of the irradiation position PA of the processing light EL and the irradiation position MA of the measurement light ML so that the actual irradiation position APA of the processing light EL is closer to the actual irradiation position AMA of the measurement light ML than before at least one of the irradiation position PA of the processing light EL and the irradiation position MA of the measurement light ML is calibrated. Namely, the control unit 2 may control at least one of the Galvano mirrors 1313, 1328 and 1341 so that the actual irradiation position APA of the processing light EL is closer to the actual irradiation position AMA of the measurement light ML than before at least one of the irradiation position PA of the processing light EL and the irradiation position MA of the measurement light ML is calibrated. Specifically, the control unit 2 may calibrate at least one of the irradiation position PA of the processing light EL and the irradiation position MA of the measurement light ML so that the actual irradiation position APA, which is actually irradiated with the processing light EL based on the Galvano control signal for controlling at least one of the Galvano mirrors 1313 and 1341 to irradiate a desired position with the processing light EL, is closer to the actual irradiation position AMA, which is actually irradiated with the measurement light ML based on the Galvano control signal for controlling at least one of the Galvano mirrors 1328 and 1341 to irradiate the same desired position with the measurement light ML.

In this case, the control unit 2 may calibrate at least one of the irradiation position PA of the processing light EL at each of the plurality of positions in the processing shot area PSA and the irradiation position MA of the measurement light ML at each of the plurality of positions in the measurement shot area MSA based on the information related to the relative positional relationship between the actual irradiation position APA and the actual irradiation position AMA at each of the plurality of positions in the processing shot area PSA and the measurement shot area MSA so that the actual irradiation position APA is closer to the actual irradiation position AMA at each of the plurality of positions in the processing shot area PSA and the measurement shot area MSA. Namely, the control unit 2 may calibrate at least one of the irradiation position PA of the processing light EL at one position in the processing shot area PSA and the irradiation position MA of the measurement light ML at the one position in the measurement shot area MSA based on the information related to the relative positional relationship between the actual irradiation position APA and the actual irradiation position AMA at the one position in the processing shot area PSA and the measurement shot area MSA so that the actual irradiation position APA is closer to the actual irradiation position AMA at the one position in the processing shot area PSA and the measurement shot area MSA.

As another example, the control unit 2 may calibrate at least one of the irradiation position PA of the processing light EL and the irradiation position MA of the measurement light ML so that the actual irradiation position APA of the processing light EL is the same as the actual irradiation position AMA of the measurement light ML. Namely, the control unit 2 may control at least one of the Galvano mirrors 1313, 1328 and 1341 so that the actual irradiation position APA of the processing light EL is the same the actual irradiation position AMA of the measurement light ML. Specifically, the control unit 2 may calibrate at least one of the irradiation position PA of the processing light EL and the irradiation position MA of the measurement light ML so that the actual irradiation position APA, which is actually irradiated with the processing light EL based on the Galvano control signal for controlling at least one of the Galvano mirrors 1313 and 1341 to irradiate a desired position with the processing light EL, is the same as the actual irradiation position AMA, which is actually irradiated with the measurement light ML based on the Galvano control signal for controlling at least one of the Galvano mirrors 1328 and 1341 to irradiate the same desired position with the measurement light ML.

In this case, the control unit 2 may calibrate at least one of the irradiation position PA of the processing light EL at each of the plurality of positions in the processing shot area PSA and the irradiation position MA of the measurement light ML at each of the plurality of positions in the measurement shot area MSA based on the information related to the relative positional relationship between the actual irradiation position APA and the actual irradiation position AMA at each of the plurality of positions in the processing shot area PSA and the measurement shot area MSA so that the actual irradiation position APA is the same as the actual irradiation position AMA at each of the plurality of positions in the processing shot area PSA and the measurement shot area MSA. Namely, the control unit 2 may calibrate at least one of the irradiation position PA of the processing light EL at one position in the processing shot area PSA and the irradiation position MA of the measurement light ML at the one position in the measurement shot area MSA based on the information related to the relative positional relationship between the actual irradiation position APA and the actual irradiation position AMA at the one position in the processing shot area PSA and the measurement shot area MSA so that the actual irradiation position APA is the same as the actual irradiation position AMA at the one position in the processing shot area PSA and the measurement shot area MSA.

### (2-3-5) Timing at which Calibration Operation is performed

The processing system SYSb may perform the calibration operation before starting the processing of the workpiece W. The processing system SYSa may perform the calibration operation before starting the measurement of the measurement target object M. The processing system SYSb may perform the calibration operation after completing the processing of the workpiece W. The processing system SYSb may perform the calibration operation after completing the measurement of the measurement target object M. The processing system SYSb may perform the calibration operation after starting the processing of the workpiece W and before completing the processing of the workpiece W. Namely, the processing system SYSb may perform the calibration operation in at least a part of the processing period during which the workpiece W is processed. The processing system SYSb may perform the calibration operation after starting the measurement of the measurement target object M and before completing the measurement of the measurement target object M. Namely, the processing system SYSB may perform the calibration operation during at least a part of the measurement period during which the measurement target object M is measured.

In a case where the irradiation position PA of the processing light EL does not change, there is not necessarily a high need to perform the above-described calibration operation in order to calibrate the irradiation position PA of the processing light EL. On the other hand, in a case where the irradiation position PA of the processing light EL changes, there is a high need to perform the above-described calibration operation in order to calibrate the irradiation position PA of the processing light EL. Therefore, the processing system SYSb may perform the calibration operation for calibrating the irradiation position PA of the processing light EL in a case where it is estimated that the irradiation position PA of the processing light EL changes.

As one example, there is a possibility that the irradiation position PA of the processing light EL changes over time. For example, there is a possibility that a temperature of the optical system (specifically, at least one of the processing optical system 131, the combining optical system 133, the deflection optical system 134, and the irradiation optical system 135, which are used to irradiate the workpiece W with the processing light EL) changes over time after the processing system SYSb starts operating. As a result, there is a possibility that the irradiation position PA of the processing light EL changes due to a variation of the temperature of the optical system of the processing system SYSb. Therefore, the processing system SYSb may perform the calibration operation for calibrating the irradiation position PA of the processing light EL in a case where a predetermined time has elapsed since the last performed calibration operation for calibrating the irradiation position PA of the processing light EL.

As another example, the processing system SYSb may detect the temperature of the optical system (especially, the optical system used to irradiate the measurement target object M with the processing light EL) of the processing system SYSb, and perform the calibration operation for calibrating the irradiation position PA of the processing light EL in a case where the variation of the detected temperature is larger than a predetermined temperature threshold value. In this case, the processing system SYSb may include a temperature sensor for detecting the temperature of the optical system of the processing system SYSb. Incidentally, in a case where the irradiation optical system 135 is exchangeable, the temperature sensor for detecting the temperature of the irradiation optical system 135 may be positioned in the head housing 137 that contains the irradiation optical system 135. In this case, a detected result by the temperature sensor may be output to the control unit 2 through a signal interface formed at the head housing 137. Specifically, the detected result by the temperature sensor may be output to the control unit 2 through an output signal line, which is formed by a first signal interface that is formed at the head housing 137 and a second signal interface that is formed at the attachment adapter 138 and that electrically contacts the first signal interface.

As another example, in a case where the irradiation optical system 135 is exchangeable, there is a possibility that the irradiation position of the processing light EL changes due to the exchange of the irradiation optical system 135. This is because an optical characteristic of the irradiation optical system 135 detached from the processing head 13 by the exchange of the irradiation optical system 135 (namely, the irradiation optical system 135 before the exchange) is not necessarily the same as an optical characteristic of the irradiation optical system 135 newly attached to the processing head 13 by the exchange of the irradiation optical system 135 (namely, the irradiation optical system 135 after the exchange). Therefore, the processing system SYSb may perform the calibration operation for calibrating the irradiation position PA of the processing light EL in a case where the irradiation optical system 135 is exchanged.

Incidentally, in the calibration operation performed in a case where the irradiation optical system 135 is exchanged, the actual irradiation position APA of the processing light EL before the irradiation optical system 135 is exchanged may be used as the base irradiation position BPA of the processing light EL. In this case, the control unit 2 may generate, as the irradiation position information, information related to a relative positional relationship between the actual irradiation position APA of the processing light EL before the irradiation optical system 135 is exchanged and the actual irradiation position APA of the processing light EL after the irradiation optical system 135 is exchanged. The control unit 2 may calibrate the irradiation position PA of the processing light EL so that the actual irradiation position APA of the processing light EL after the irradiation optical system 135 is exchanged is closer to the actual irradiation position APA of the processing light EL before the irradiation optical system 135 is exchanged. The control unit 2 may calibrate the irradiation position PA of the processing light EL so that the actual irradiation position APA of the processing light EL after the irradiation optical system 135 is exchanged is the same as the actual irradiation position APA of the processing light EL before the irradiation optical system 135 is exchanged.

Incidentally, the irradiation position information related to the relative positional relationship between the base irradiation position BPA and the actual irradiation position APA may be considered to be equivalent to information related to a change of the actual irradiation position APA relative to the base irradiation position BPA. In this case, the control unit 2 may be considered to calculate (acquire) information related to the change of the irradiation position PA of the processing light EL as the irradiation position information related to the irradiation position PA of the processing light EL.

Similarly, in a case where the irradiation position MA of the measurement light ML does not change, there is not necessarily a high need to perform the above-described calibration operation in order to calibrate the irradiation position MA of the measurement light ML. On the other hand, in a case where the irradiation position MA of the measurement light ML changes, there is a high need to perform the above-described calibration operation in order to calibrate the irradiation position MA of the measurement light ML. Therefore, the processing system SYSb may perform the calibration operation for calibrating the irradiation position MA of the measurement light ML in a case where it is estimated that the irradiation position MA of the measurement light ML changes.

As one example, there is a possibility that the irradiation position MA of the measurement light ML changes over time. For example, there is a possibility that the temperature of the optical system (specifically, at least one of the measurement optical system 132, the combining optical system 133, the deflection optical system 134, and the irradiation optical system 135, which are used to irradiate the measurement target object M with the measurement light ML) changes over time after the processing system SYSb starts operating. As a result, there is a possibility that the irradiation position MA of the measurement light ML changes due to a variation of the temperature of the optical system of the processing system SYSb. Therefore, the processing system SYSb may perform the calibration operation for calibrating the irradiation position MA of the measurement light ML in a case where a predetermined time has elapsed since the last performed calibration operation for calibrating the irradiation position MA of the measurement light ML.

As another example, the processing system SYSb may detect the temperature of the optical system (especially, the optical system used to irradiate the measurement target object M with the measurement light ML) of the processing system SYSb, and perform the calibration operation for calibrating the irradiation position MA of the measurement light ML in a case where the variation of the detected temperature is larger than a predetermined temperature threshold value. In this case, the processing system SYSb may include a temperature sensor for detecting the temperature of the optical system of the processing system SYSb.

As another example, in a case where the irradiation optical system 135 is exchangeable, there is a possibility that the irradiation position of the measurement light ML changes due to the exchange of the irradiation optical system 135. This is because the optical characteristic of the irradiation optical system 135 detached from the processing head 13 by the exchange of the irradiation optical system 135 (namely, the irradiation optical system 135 before the exchange) is not necessarily the same as the optical characteristic of the irradiation optical system 135 newly attached to the processing head 13 by the exchange of the irradiation optical system 135 (namely, the irradiation optical system 135 after the exchange). Therefore, the processing system SYSb may perform the calibration operation for calibrating the irradiation position MA of the measurement light ML in a case where the irradiation optical system 135 is exchanged.

Incidentally, in the calibration operation performed in a case where the irradiation optical system 135 is exchanged, the actual irradiation position AMA of the measurement light ML before the irradiation optical system 135 is exchanged may be used as the base irradiation position BMA of the measurement light ML. In this case, the control unit 2 may generate, as the irradiation position information, information related to a relative positional relationship between the actual irradiation position AMA of the measurement light ML before the irradiation optical system 135 is exchanged and the actual irradiation position AMA of the measurement light ML after the irradiation optical system 135 is exchanged. Furthermore, the control unit 2 may calibrate the irradiation position MA of the measurement light ML so that the actual irradiation position AMA of the measurement light ML after the irradiation optical system 135 is exchanged is closer to the actual irradiation position AMA of the measurement light ML before the irradiation optical system 135 is exchanged. The control unit 2 may calibrate the irradiation position MA of the measurement light ML so that the actual irradiation position AMA of the measurement light ML after the irradiation optical system 135 is exchanged is the same as the actual irradiation position AMA of the measurement light ML before the irradiation optical system 135 is exchanged.

Incidentally, the irradiation position information related to the relative positional relationship between the base irradiation position BMA and the actual irradiation position AMA may be considered to be equivalent to information related to a change of the actual irradiation position AMA relative to the base irradiation position BMA. In this case, the control unit 2 may be considered to calculate (acquire) information related to the change of the irradiation position MA of the measurement light ML as the irradiation position information related to the irradiation position MA of the measurement light ML.

### (2-4) Technical Effect of Processing System SYSb

As described above, the processing system SYSb in the second example embodiment may perform the calibration operation by using the optical measurement apparatus 18b. Namely, the processing system SYSb may calibrate at least one of the irradiation positions PA of the processing light EL and the irradiation position MA of the measurement light ML. As a result, the processing system SYSb can irradiate an appropriate position with the processing light EL. As a result, the processing system SYSb can process the workpiece W appropriately. Moreover, the processing system SYSb can irradiate an appropriate position with the measurement light ML. As a result, the processing system SYSb can measure the measurement target object M appropriately.

### (3) Processing System SYS in Third Example Embodiment

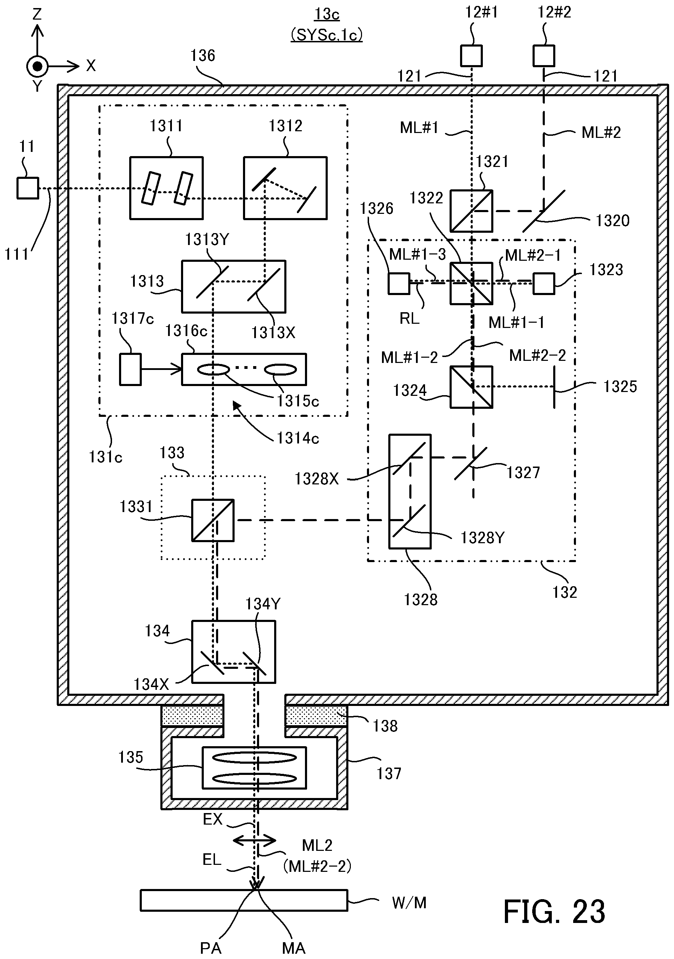

Next, the processing system in a third example embodiment will be described. Incidentally, in the below-described description, the processing system in the third example embodiment is referred to as a "processing system SYSc". The processing system SYSc in the third example embodiment is different from each of the processing system SYSa in the first example embodiment and the processing system SYSb in the second example embodiment described above in that it includes a processing unit 1c instead of the above-described processing unit 1 or 1b. Other feature of the processing system SYSc may be the same as other feature of each of the processing system SYSa to SYSb. The processing unit 1c is different from the processing unit 1 or 1b in that it includes a processing head 13c instead of the processing head 13. Other feature of the processing unit 1c may be the same as other feature of the processing unit 1 or 1b. Therefore, in the below-described description, with reference to FIG. 23, a configuration of the processing head 13c in the third example embodiment will be described. FIG. 23 is a cross-sectional view that illustrates the configuration of the processing head 13c in the third example embodiment.

As illustrated in FIG. 23, the processing head 13c is different from the processing head 13 in that it includes a processing optical system 131c instead of the processing optical system 131. Other feature of the processing head 13c may be the same as other feature of the processing head 13.

The processing optical system 131c is different from the processing optical system 131 in that it further includes a focus control optical system 1314c. Other feature of the processing optical system 131c may be the same as other feature of the processing optical system 131.

The focus control optical system 1314c is an optical system that is configured to adjust (in other words, change) the condensed position of the processing light EL. Specifically, the focus control optical system 1314c is an optical system that is configured to adjust the condensed position of the processing light EL along the irradiation direction of the processing light EL (for example, the Z-axis direction). Therefore, the focus control optical system 1314c includes a focus lens 1315c that is configured to change the condensed position of the processing light EL. Incidentally, the focus lens 1315c may also be referred to as a condensed position adjustment optical system.

Here, the irradiation optical system 135 is exchangeable in the third example embodiment, as in the first or second example embodiment described above. In this case, there is a possibility that a relative positional relationship between the condensed position of the processing light EL and the condensed position of the measurement light ML changes due to the exchange of the irradiation optical system 135. Especially, there is a possibility that a relative positional relationship between the condensed position of the processing light EL and the condensed position of the measurement light ML changes in the Z-axis direction, which is the irradiation direction of the processing light EL (alternatively, the irradiation direction of the measurement light ML), due to the exchange of the irradiation optical system 135. As a result, there is a possibility that the relative positional relationship between the condensed position of the processing light EL and the condensed position of the measurement light ML is a positional relationship that is different from a desired positional relationship. For example, there is a possibility that the relative positional relationship between the condensed position of the processing light EL and the condensed position of the measurement light ML is the positional relationship that is different from the desired positional relationship after the irradiation optical system 135 is exchanged, although the relative positional relationship between the condensed position of the processing light EL and the condensed position of the measurement light ML is desired positional relationship before the irradiation optical system 135 is exchanged. Namely, in a case where the irradiation optical system 135 attached to the processing head 13 is exchanged from a first irradiation optical system 135 to a second irradiation optical system 135, there is a possibility that the relative positional relationship between the condensed positions of the processing light EL and the measurement light ML emitted from the second irradiation optical system 135 is the positional relationship that is different from the desired positional relationship, although the relative positional relationship between the condensed positions of the processing light EL and the measurement light ML emitted from the first irradiation optical system 135 is desired positional relationship. Incidentally, a relative positional relationship that allows the condensed position of the processing light EL and the condensed position of the measurement light ML to be the same as each other in the Z-axis direction is one example of the desired relative positional relationship. Namely, a relative positional relationship that allows the condensed position of the processing light EL and the condensed position of the measurement light ML to be positioned at the same position in the Z-axis direction is one example of the desired relative positional relationship.

In a case where the relative positional relationship between the condensed positions of the processing light EL and the measurement light ML is different from the desired positional relationship, there is a possibility that the processing system SYSc measures the workpiece W by using the measurement light ML whose condensed position is not positioned on the surface of the workpiece W (namely, the measurement light ML in a defocused state), while processing the workpiece W by using the processing light EL whose condensed position is positioned on the surface of the workpiece W, for example. As a result, the processing system SYSc has a technical problem that it cannot appropriately measure the workpiece W (alternatively, any measurement target object M). As one example, the processing system SYSc has a technical problem that the measurement accuracy deteriorates. Alternatively, there is a possibility that the processing system SYSc measures the workpiece W by using the processing light EL whose condensed position is positioned on the surface of the workpiece W, while processing the workpiece W by using the processing light EL whose condensed position is not positioned on the surface of the workpiece W (namely, the processing light EL in a defocused state), for example. As a result, the processing system SYSc has a technical problem that it cannot process the workpiece W appropriately. As one example, the processing system SYSc has a technical problem that the processing accuracy deteriorates.

Therefore, in the third example embodiment, in order to solve such technical problem, the focus control optical system 1314c includes a plurality of focus lenses 1315c. Especially, the focus control optical system 1314c includes the plurality of focus lenses 1315c whose focal lengths are different from each other.

A first focus lens 1315c of the plurality of focus lenses 1315c is used as one focus lens 1315c for actually adjusting the condensed position of the processing light EL in a case where a first irradiation optical system 135 of the plurality of irradiation optical systems 135, which are attachable to the processing head 13, is attached to the processing head 13. Therefore, in a case where the first irradiation optical system 135 is attached to the processing head 13, the first focus lens 1315c is positioned on the optical path of the processing light EL. On the other hand, the other focus lens 1315c, which is different from the first focus lens 1315c, of the plurality of focus lenses 1315c is not positioned on optical path of the processing light EL. Namely, the other focus lens 1315c is away from the optical path of the processing light EL.

The first focus lens 1315c may be configured to adjust the condensed position of the processing light EL so that the relative positional relationship between the condensed position of the processing light EL and the condensed position of the measurement light ML is the desired positional relationship in a situation where the first irradiation optical system 135 is attached to the processing head 13. In a case where the desired positional relationship is the positional relationship that allows the condensed position of the processing light EL and the condensed position of the measurement light ML to be the same as each other in the Z-axis direction as described above, the first focus lens 1315c may be configured to adjust the condensed position of the processing light EL so that a distance (namely, a positional deviation) between the condensed position of the processing light EL and the condensed position of the measurement light ML in the Z-axis direction in a situation where the first irradiation optical system 135 is attached to the processing head 13 is shorter than that in a situation where another focus lens 1351c different from the first focus lens 1351c is positioned on the optical path of the processing light EL. Alternatively, the first focus lens 1315c may be configured to adjust the condensed position of the processing light EL so that the condensed position of the processing light EL and the condensed position of the measurement light ML are the same as each other in the Z-axis direction in a situation where the first irradiation optical system 135 is attached to the processing head 13.

On the other hand, a second focus lens 1315c, which is different from the first focus lens 1315c, of the plurality of focus lenses 1315c is used as one focus lens 1315c for actually adjusting the condensed position of the processing light EL in a case where a second irradiation optical system 135, which is different from the first irradiation optical system 135, of the plurality of irradiation optical systems 135, which are attachable to the processing head 13, is attached to the processing head 13. Therefore, in a case where the second irradiation optical system 135 is attached to the processing head 13, the second focus lens 1315c is positioned on the optical path of the processing light EL. On the other hand, the other focus lens 1315c, which is different from the second focus lens 1315c, of the plurality of focus lenses 1315c is not positioned on optical path of the processing light EL. Namely, the other focus lens 1315c is away from the optical path of the processing light EL.

The second focus lens 1315c may be configured to adjust the condensed position of the processing light EL so that the relative positional relationship between the condensed position of the processing light EL and the condensed position of the measurement light ML is the desired positional relationship in a situation where the second irradiation optical system 135 is attached to the processing head 13. In a case where the desired positional relationship is the positional relationship that allows the condensed position of the processing light EL and the condensed position of the measurement light ML to be the same as each other in the Z-axis direction as described above, the second focus lens 1315c may be configured to adjust the condensed position of the processing light EL so that the distance (namely, the positional deviation) between the condensed position of the processing light EL and the condensed position of the measurement light ML in the Z-axis direction in a situation where the second irradiation optical system 135 is attached to the processing head 13 is shorter than that in a situation where another focus lens 1351c different from the second focus lens 1351c is positioned on the optical path of the processing light EL. The second focus lens 1315c may be configured to adjust the condensed position of the processing light EL so that the condensed position of the processing light EL and the condensed position of the measurement light ML are the same as each other in the Z-axis direction in a situation where the second irradiation optical system 135 is attached to the processing head 13.

The plurality of focus lenses 1315c may correspond to the plurality of irradiation optical systems 135, which are attachable to the processing head 13, respectively. Namely, the plurality of focus lenses 1315c and the plurality of irradiation optical systems 135 that are attachable to the processing head 13 may correspond to each other on a one-to-one basis. In other words, the number of focus lenses 1315c included in the focus control optical system 1314c may be the same as the number of irradiation optical systems 135 that are attachable to the processing head 13. However, the number of focus lenses 1315c included in the focus control optical system 1314c may not be the same as the number of irradiation optical systems 135 that are attachable to the processing head 13.

The control unit 2 may identify a type of the irradiation optical system 135 attached to the processing head 13, and select one focus lens 1315c for actually adjusting the condensed position of the processing light EL from among the plurality of focus lenses 1315c based on the identified type. For example, in a case where it is identified that the type of the irradiation optical system 135 attached to the processing head 13 is the first irradiation optical system 135, the control unit 2 may select the first focus lens 1315c corresponding to the first irradiation optical system 135 from among the plurality of focus lenses 1315c as one focus lens 1315c for actually adjusting the condensed position of the processing light EL. For example, in a case where it is identified that the type of the irradiation optical system 135 attached to the processing head 13 is the second irradiation optical system 135, the control unit 2 may select the second focus lens 1315c corresponding to the second irradiation optical system 135 from among the plurality of focus lenses 1315c as one focus lens 1315c for actually adjusting the condensed position of the processing light EL. Then, the control unit 2 may control the focus control optical system 1314 so that the selected focus lens 1315c is positioned on the optical pat of the processing light EL and the other unselected focus lens 1315c is away from the optical path of the processing light EL.

In order to identify the type of the irradiation optical system 135 attached to the processing head 13, the irradiation optical system 135 may output, to the control unit 2, information (for example, information such as a model number) from which the type of the irradiation optical system 135 can be identified. As one example, the irradiation optical system 135 may output the information from which the type of the irradiation optical system 135 can be identified, to the control unit 2 through a signal interface formed at the head housing 137. Specifically, the irradiation optical system 135 may output the information from which the type of the irradiation optical system 135 can be identified, to the control unit 2 through an output signal line, which is formed by a first signal interface that is formed at the head housing 137 and a second signal interface that is formed at the attachment adapter 138 and that electrically contacts the first signal interface. In this case, the control unit 2 may identify the type of the irradiation optical system 135 based on the information from which the type of the irradiation optical system 135 can be identified.

In order to position one focus lens 1315c of the plurality of focus lenses 1315c on the optical path of the processing light EL, the focus control optical system 1314c may include a lens holder 1316c and an actuator 1317c. The lens holder 1316c is a holding member that is configured to hold the plurality of focus lenses 1315c. Especially, the lens holder 1316c may hold the plurality of focus lenses 1315c so that the plurality of focus lenses 1315c are arranged in a direction intersecting the optical path of the processing light EL. The actuator 1317c is a movement apparatus that is configured to move the lens holder 1316c under the control of the control unit 2. Especially, the actuator 1317c may move the lens holder 1316c along a direction intersecting the optical path of the processing light EL. In this case, the control unit 2 may use the actuator 1317c to move the lens holder 1316c so that one focus lens 1315c corresponding to one irradiation optical system 135 attached to the processing head 13 is positioned on the optical path of the processing light EL and the other focus lens 1315c is away from the optical path of the processing light EL.

As described above, the processing system SYSc in the third example embodiment may exchange the focus lens 1315c, which adjusts the condensed position of the processing light EL, in accordance with the exchange of the irradiation optical system 135 attached to the processing head 13. Therefore, even in a case where the irradiation optical system 135 is exchangeable, the processing system SYSc can maintain the relative positional relationship between the condensed position of the processing light EL and the condensed position of the measurement light ML at the desired positional relationship. Therefore, compared to a case where the focus lens 1315c is not exchanged, the processing system SYSc can process the workpiece W appropriately. Moreover, compared to a case where the focus lens 1315c is not exchanged, the processing system SYSc can measure the measurement target object M appropriately.

Incidentally, in the above-described description, the processing optical system 131 includes the focus control optical system 1314c. However, in addition to or instead of the processing optical system 131, the measurement optical system 132 may include the focus control optical system 1314c. In this case, the processing system SYSc may exchange the focus lens 1315c, which adjusts the condensed position of the measurement light ML, in accordance with the exchange of the irradiation optical system 135 attached to the processing head 13.

In a case where the processing optical system 131 includes a focus variable beam expander that is configured to change the condensed position of the processing light EL, the processing optical system 131 may not include the focus control optical system 1314c. In this case, the processing system SYSc may control the focus variable beam expander so that the condensed position of the processing light EL is positioned at a desired position in accordance with the exchange of the irradiation optical system 135 attached to the processing head 13.

In a case where the measurement optical system 132 includes a focus variable beam expander that is configured to change the condensed position of the measurement light ML, the measurement optical system 132 may not include the focus control optical system. In this case, the processing system SYSc may control the focus variable beam expander so that the condensed position of the measurement light ML is positioned at a desired position in accordance with the exchange of the irradiation optical system 135 attached to the processing head 13.

Moreover, in the above-described description, the focus control optical system 1314c includes the plurality of focus lenses 1315c whose focal lengths are different from each other. However, the focus control optical system 1314c may be a variable focal length optical system (typically a zoom optical system) that is configured to continuously change its focal length. In this case, the focal length of the focus control optical system 1314c may be changed in accordance with the exchange of the irradiation optical system 135 attached to the processing head 13.

### (4) Processing System SYS in Fourth Example Embodiment

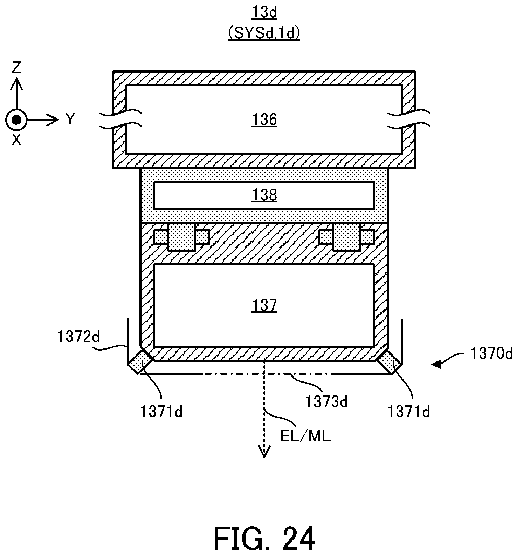

Next, the processing system in a fourth example embodiment will be described. Incidentally, in the below-described description, the processing system in the fourth example embodiment is referred to as a "processing system SYSd". The processing system SYSd in the fourth example embodiment is different from each of the processing system SYSa in the first example embodiment to the processing system SYSc in the third example embodiment described above in that it includes a processing unit 1d instead of the above-described processing unit 1, 1b or 1c. Other feature of the processing system SYSd may be the same as other feature of each of the processing system SYSa to SYSc. The processing unit 1d is different from the processing unit 1, 1b or 1c in that it includes a processing head 13d instead of the processing head 13 or 13c. Other feature of the processing unit 1d may be the same as other feature of the processing unit 1, 1b or 1c. Therefore, in the below-described description, with reference to FIG. 24, a configuration of the processing head 13d in the fourth example embodiment will be described. FIG. 24 is a cross-sectional view that illustrates the configuration of the processing head 13d in the fourth example embodiment.

As illustrated in FIG. 24, the processing head 13d is different from the processing head 13 or 13c in that, a contact sensor 1370d is attached to the head housing 137, instead of the processing optical system 131. Other feature of the processing head 13d may be the same as other feature of the processing head 13 or 13c.

The contact sensor 1370d is a detection apparatus for detecting a contact between the contact sensor 1370d and another object. Since the contact sensor 1370d is attached to the head housing 137, the contact sensor 1370d may be considered to detect a contact between the head housing 137 and another object. Since the head housing 137 is a part of the processing head 13, the contact sensor 1370d may be considered to detect a contact between the processing head 13 and another object. Incidentally, at least one of the workpiece W, the measurement target M, and the stage 15 is one example of another object which the contact sensor 1370d contacts.

In a case where the contact sensor 1370d detects the contact between the contact sensor 1370d and another object, there is a possibility that the head housing 137 (alternatively, the processing head 13) is in contact with another object. Alternatively, there is a possibility that the head housing 137 (alternatively, the processing head 13) is too close to another object. In this case, the control unit 2 may control the head driving system 141 so that the head housing 137 (alternatively, the processing head 13) moves away from another object.

The contact sensor 1370d may have any configuration as long as it is configured to detect the contact between the contact sensor 1370d and another object. FIG. 24 illustrates one example of the configuration of the contact sensor 1370d. In an example illustrated in FIG. 24, the contact sensor 1370d includes a support member 1371d and a protection bumper 1372d. The support member 1371d is attached to the head housing 137. The support member 1371d is a pressure sensitive conductive member (for example, a pressure sensitive conductive rubber). The support member 1371d supports the protection bumper 1372d. The protection bumper 1372d is a member for protecting the head housing 137. Incidentally, an aperture 1373d, through which each of the processing light EL and the measurement light ML is allowed to pass, may be formed at the protection bumper 1372d.

In this case, when the protection bumper 1372d is in contact with another object, the support member 1371d is pressurized by a force applied to the protection bumper 1372d from another object. As a result, a conduction path is formed in the support member 1371d. On the other hand, in a case where the protection bumper 1372d is not in contact with another object, the conduction path is not formed in the support member 1371d. Therefore, the contact sensor 1370d detects the contact between the contact sensor 1370d and another object by using the presence or absence of the conductive path in the support member 1371d. In this case, the control unit 2 may determine whether or not the contact sensor 1370d is in contact with another object by determining whether or not the conductive path is formed in the support member 1371d.

The control unit 2 may acquire information related to the presence or absence of the conductive path in the support member 1371d through a signal interface formed at the head housing 137. Specifically, the control unit 2 may acquire the information related to the presence or absence of the conductive path in the support member 1371d through an output signal line, which is formed by a first signal interface that is formed at the head housing 137 and a second signal interface that is formed at the attachment adapter 138 and that electrically contacts the first signal interface.

As described above, the processing system SYSd in the fourth example embodiment includes the contact sensor 1370d. Therefore, the processing system SYSD may determine whether or not the head housing 137 (alternatively, the processing head 13) is in contact with another object. Alternatively, the processing system SYSd may determine whether or not the head housing 137 (alternatively, the processing head 13) is too close to another object. As a result, the processing system SYSd can prevent a damage of the processing head 13 caused by the contact between the head housing 137 (alternatively, the processing head 13) and another object.

Incidentally, the processing system Syd may include a non-contact sensor such as a proximity sensor, in addition to or instead of the contact sensor 1370d. In this case, in a case where the non-contact sensor detects a proximity between the non-contact sensor and another object, there is a possibility that the head housing 137 (alternatively, the processing head 13) will be in contact with another object. Alternatively, there is a possibility that the head housing 137 (alternatively, the processing head 13) is too close to another object. In this case, the control unit 2 may control the head driving system 141 so that the head housing 137 (alternatively, the processing head 13) moves away from another object.

### (5) Processing System SYS in Fifth Example Embodiment

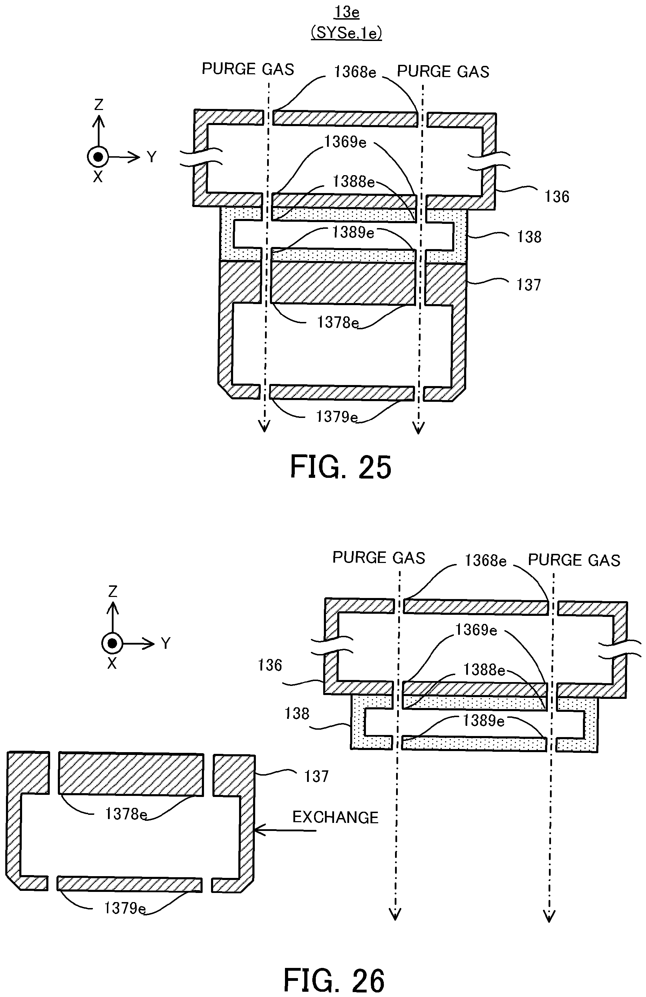

Next, the processing system in a fifth example embodiment will be described. Incidentally, in the below-described description, the processing system in the fifth example embodiment is referred to as a "processing system SYSe". The processing system SYS3 in the fifth example embodiment is different from each of the processing system SYSa in the first example embodiment to the processing system SYSd in the fourth example embodiment described above in that it includes a processing unit 1e instead of the above-described processing unit 1, 1b, 1c, or 1d. Other feature of the processing system SYSe may be the same as other feature of each of the processing system SYSa to SYSd. The processing unit 1e is different from the processing unit 1, 1b, 1c, or 1d in that it includes a processing head 13e instead of the processing head 13, 13c, or 13d. Other feature of the processing unit 1e may be the same as other feature of the processing unit 1, 1b, 1c, or 1d. Therefore, in the below-described description, with reference to FIG. 25, a configuration of the processing head 13e in the fifth example embodiment will be described. FIG. 25 is a cross-sectional view that illustrates the configuration of the processing head 13e in the fifth example embodiment.

As illustrated in FIG. 25, the processing head 13e is different from the processing heads 13, 13c, or 13d in that the purge gas is supplied an inner space of each of the head housings 136 and 137. Other feature of the processing head 13e may be the same as other feature of the processing heads 13, 13c, or 13d.

Specifically, a gas supply port 1368e and a gas supply port 1369e may be formed at the head housing 136. The gas supply port 1368e may be formed at an upper surface of the head housing 136. The gas supply port 1369e may be formed at a lower surface of the head housing 136. The purge gas may be supplied to the inner space of the head housing 136 from at least one of the gas supply ports 1368e and 1369e. As a result, the inner space of the head housing 136 (namely, a space in which the processing optical system 131, the measurement optical system 132, the combining optical system 133, and the deflection optical system 134 are contained) is purged with the purge gas. In this case, the purge gas may be used to cool at least one of the processing optical system 131, the measurement optical system 132, the combining optical system 133, and the deflection optical system 134. The purge gas may be used to prevent an unnecessary substance from entering the inner space of the head housing 136. The purge gas supplied to an inside of the head housing 136 may flow out of the head housing 136 through at least one of the gas supply ports 1368e and 1369e.

Incidentally, a non-illustrated aperture, through which each of the processing light EL and the measurement light ML is allowed to pass is formed at the head housing 136. In this case, this aperture may be used as at least one of the gas supply ports 1368e and 1369e.

Furthermore, a gas supply port 1378e and a gas supply port 1379e may be formed at the head housing 137. The gas supply port 1378e may be formed at an upper surface of the head housing 137. The gas supply port 1379e may be formed at a lower surface of the head housing 137. The purge gas may be supplied to the inner space of the head housing 137 from at least one of the gas supply ports 1378e and 1379e. As a result, the inner space of the head housing 137 (namely, a space in which the deflection optical system 134 is contained) is purged with the purge gas. In this case, the purge gas may be used to cool at least one of the deflection optical system 134. The purge gas may be used to prevent an unnecessary substance from entering the inner space of the head housing 137. The purge gas supplied to an inside of the head housing 137 may flow out of the head housing 137 through at least one of the gas supply ports 1378e and 1379e.

Incidentally, a non-illustrated aperture, through which each of the processing light EL and the measurement light ML is allowed to pass is formed at the head housing 137. In this case, this aperture may be used as at least one of the gas supply ports 1368e and 1369e.

In an example illustrated in FIG. 25, the purge gas is supplied to the inner space of the head housing 136 through the gas supply port 1368e. The purge gas supplied to the inside of the head housing 136 flows out of the head housing 136 through the gas supply port 1369e. More specifically, the purge gas supplied to the inside of the head housing 136 is supplied to the inside space of the head housing 137 through the gas supply ports 1369e and 1378e. Therefore, the head housings 136 and 137 may be aligned with each other so that a flow path of the purge gas through the gas supply ports 1369e and 1378e is formed. The purge gas supplied to the inner space of the head housing 137 flows out of the head housing 137 through the gas supply port 1379e. Thus, a path of the purge gas from the head housing 136 to the head housing 137 may be formed.

The purge gas that has flown out of the head housing 137 through the gas supply port 1379e may be used to prevent an unnecessary substance generated by processing the workpiece W from adhering to the processing head 13. For example, the purge gas that has flown out of the head housing 137 through the gas supply port 1379e may be used to form an air curtain that prevents the unnecessary substance from adhering to the processing head 13.

In a case where the head housing 137 is attached to the head housing 136 through the attachment adapter 138 as described above, the path of the purge gas flowing from the head housing 136 to the head housing 137 may be formed at the attachment adapter 138. For example, a gas supply port 1388e and a gas supply port 1388e may be formed at the attachment adapter 138. In this case, the purge gas supplied to the inside of the head housing 136 may be supplied to an inner space of the attachment adapter 138 through the gas supply ports 1369e and 1388e. The purge gas supplied to the inside of the attachment adapter 138 may be supplied to the inner space of the head housing 137 through the gas supply ports 1389e and 1378e. As a result, even in a case where the head housing 137 is attached to the head housing 136 through the attachment adapter 138, the path of the purge gas flowing from the head housing 136 to the head housing 137 can be formed.

In a case where the irradiation optical system 135 is exchangeable as described above, the purge gas may be supplied even in a case where the irradiation optical system 135 is detached (namely, the head housing 137 is detached) from the processing head 13 as illustrated in FIG. 26. For example, as illustrated in FIG. 26, the purge gas may be supplied to the inner space of the head housing 136 through the gas supply port 1368e. The purge gas supplied to the inside of the head housing 136 flows out of the head housing 136 through the gas supply port 1369e. More specifically, the purge gas supplied to the inside of the head housing 136 may be supplied to the inner space of the attachment adapter 138 through the gas supply ports 1369e and 1388e. The purge gas supplied to the inner space of the attachment adapter 138 may flow out of the attachment adapter 138 through the gas supply port 1389e. In this case, even in a case where the irradiation optical system 135 is detached (namely, the head housing 137 is detached) from the processing head 13, the purge gas may be used to prevent the unnecessary substance generated by processing the workpiece W from adhering to the processing head 13.

In FIG. 25 and FIG. 26, the path of the purge gas is illustrated as a straight line for simplicity of drawing, however, the path of the purge gas may not be the straight line.

### (6) Other Modified Example

In the above-described description, the processing unit 1 includes the head driving system 141. However, the processing unit 1 may not include the head driving system 141. Namely, the processing head 13 may not be movable. Moreover, in the above-described description, the processing unit 1 includes the stage driving system 161. However, the processing unit 1 may not include the stage driving system 161. Namely, the stage 15 may not be movable.

In the above-described description, the processing system SYS processes the workpiece W by irradiating the workpiece W with the processing light EL. Namely, the processing system SYS processes the workpiece W by irradiating the workpiece W with an energy beam in a form of light. However, the processing system SYS may process the workpiece W by irradiating the workpiece W with any energy beam that is different from the light. At least one of a charged particle beam, an electromagnetic wave and the like is one example of any energy beam. A least one of an electron beam, an ion beam and the like is one example of the charged particle beam. Moreover, in the above-described description, the processing system SYS measures the workpiece W by irradiating the workpiece W with the measurement light ML. However, the processing system SYS may measure the workpiece W by irradiating the workpiece W with any energy beam that is different from the light.

### (7) Supplementary Note

Regarding the above-described example embodiment, below described Supplementary notes are further disclosed.

### [Supplementary Note 1]

A processing system including:
an irradiation optical system that is configured to irradiate an object with an energy beam that is for processing the object;
a placing apparatus that is configured to place the object on a placement surface;
a first change apparatus that is configured to change at least one of a positional relationship and a postural relationship between the irradiation optical system and the object placed on the placing apparatus;
a light receiving apparatus that is configured to optically receive the energy beam emitted from the irradiation optical system;
a second change apparatus that is configured to change a positional relationship between the light receiving apparatus and the irradiation optical system; and
a control apparatus,
wherein
a position of the light receiving apparatus is changed to a first position at which it is possible to optically receive the energy beam from a second position that is different from the first position by the second change apparatus under a control of the control apparatus.

### [Supplementary Note 2]

The processing system according to the Supplementary Note 1, wherein
the second position is a position that is outside an area that can be processed by the processing system.

### [Supplementary Note 3]

The processing system according to the Supplementary Note 1 or 2, wherein
the first position is a position that can be irradiated with the energy beam, and
the second position is at which an irradiation of the energy beam is prohibited.

### [Supplementary Note 4]

The processing system according to any one of the Supplementary Notes 1 to 3, wherein
the second change apparatus is configured to change the positional relationship between the light receiving apparatus and the irradiation optical system in a direction that intersects a direction along which the energy beam is emitted.

### [Supplementary Note 5]

The processing system according to any one of the Supplementary Notes 1 to 4, wherein
the processing system includes a storage apparats that is configured to store the light receiving apparatus,
the first position is a position outside the storage apparatus, and
the second position is a position in the storage apparatus.

### [Supplementary Note 6]

The processing system according to any one of the Supplementary Notes 1 to 4, wherein
the irradiation optical system is a first irradiation optical system,
the first irradiation optical system is exchangeable with a second irradiation optical system that is different from the first irradiation optical system, and
the second change apparatus changes the positional relationship between the light receiving apparatus and the irradiation optical system in a case where the first irradiation optical system is exchanged with the second irradiation optical system.

### [Supplementary Note 7]

The processing system according to the Supplementary Note 5, wherein
the irradiation optical system is a first irradiation optical system,
the first irradiation optical system is exchangeable with a second irradiation optical system that is different from the first irradiation optical system, and
the second change apparatus changes the positional relationship between the light receiving apparatus and the irradiation optical system in a case where the first irradiation optical system is exchanged with the second irradiation optical system.

### [Supplementary Note 8]

The processing system according to the Supplementary Note 7, wherein
the storage apparatus is configured to store the first irradiation optical system and the second irradiation optical system.

### [Supplementary Note 9]

The processing system according to any one of the Supplementary Note 7 or 8, wherein
the processing system includes a change apparatus that is configured to exchange the first irradiation optical system with the second irradiation optical system,
the change apparatus includes a housing in which a housing space, in which the storage apparatus is positioned, is formed, and
a gas supply port, which his configured to supply gas to the housing space, is formed at the housing.

### [Supplementary Note 10]

The processing system according to the Supplementary Note 9, wherein
the gas is supplied from the gas supply port toward at least one of the first and second irradiation optical systems stored in the storage apparatus.

### [Supplementary Note 11]

The processing system according to the Supplementary Note 9 or 10, wherein
an air pressure in the housing space is higher than an air pressure in a space in which the object is placed by the gas supplied from the gas supply port to the housing space.

### [Supplementary Note 12]

The processing system according to any one of the Supplementary Notes 9 to 11, wherein
the processing system includes an emission optical system that emits the energy beam toward the irradiation optical system,
the change apparatus exchanges the irradiation optical system by detaching, from the emission optical system, the irradiation optical system attached to the emission optical system.

### [Supplementary Note 13]

The processing system according to any one of the Supplementary Notes 1 to 12, wherein
the control apparatus acquires information related to an irradiation position of the energy beam based on a light receiving result by the light receiving apparatus.

### [Supplementary Note 14]

The processing system according to the Supplementary Note 13, wherein
the information related to the irradiation position includes information related to a change of the irradiation position of the energy beam.

### [Supplementary Note 15]

The processing system according to any one of the Supplementary Notes 1 to 14, wherein
the energy beam is a processing beam,
the irradiation optical system is configured to irradiate the object with a measurement beam that is different from the processing beam and that is for measuring the object,
the light receiving apparatus positioned at the first position is allowed to optically receive the measurement beam emitted from the irradiation optical system.

### [Supplementary Note 16]

The processing system according to the Supplementary Note 15, wherein
the control apparatus acquires information related to an irradiation position of the measurement beam based on a light receiving result by the light receiving apparatus.

### [Supplementary Note 17]

The processing system according to the Supplementary Note 16, wherein
the information related to the irradiation position of the measurement beam includes information related to a change of the irradiation position of the measurement beam.

### [Supplementary Note 18]

The processing system according to any one of the Supplementary Notes 15 to 17, wherein
the light receiving apparatus is positioned on an optical path of at least one of the processing beam and the measurement beam in at least a part of a period during which the light receiving apparatus optically receives the processing beam and the measurement beam, and is positioned at a position that is away from the optical path of each of the processing beam and the measurement beam in at least a part of each of a period during which the object is processed by the processing beam and a period during which the object is measured by the measurement beam.

### [Supplementary Note 19]

The processing system according to any one of the Supplementary Notes 1 to 14, wherein
the processing system includes a position change apparatus that is configured to change an incident position of the energy beam to the irradiation optical system, and
the control apparatus controls the position change apparatus based on a light receiving result by the light receiving apparatus.

### [Supplementary Note 20]

The processing system according to the Supplementary Note 19, wherein
the position change apparatus includes a first position change optical system that is configured to deflect the energy beam to change an irradiation position of the energy beam on the object.

### [Supplementary Note 21]

The processing system according to any one of the Supplementary Notes 15 to 17, wherein
the processing system includes a position change apparatus that is configured to change an incident position of the energy beam to the irradiation optical system, and
the control apparatus controls the position change apparatus based on a light receiving result by the light receiving apparatus.

### [Supplementary Note 22]

The processing system according to the Supplementary Note 21, wherein
the control apparatus controls the position change apparatus so that a difference between an irradiation position of the processing beam on the object and an irradiation position of the measurement beam on the object is smaller than that before the position change apparatus is controlled.

### [Supplementary Note 23]

The processing system according to the Supplementary Note 21 or 22, wherein
the control apparatus controls the position change apparatus so that an irradiation position of the processing beam on the object is the same as an irradiation position of the measurement beam on the object.

### [Supplementary Note 24]

The processing system according to any one of the Supplementary Notes 21 to 23, wherein
the position change apparatus includes a first position change optical system that is configured to deflect the energy beam to change an irradiation position of the energy beam on the object.

### [Supplementary Note 25]

The processing system according to any one of the Supplementary Notes 21 to 24, wherein
the position change apparatus includes a second position change optical system that is configured to deflect the measurement beam to change an irradiation position of the measurement beam on the object.

### [Supplementary Note 26]

The processing system according to any one of the Supplementary Notes 21 to 25, wherein
the light receiving apparatus includes:
a beam passing member having a formed passing area through which at least one of the processing beam and the measurement beam emitted from the irradiation optical system is allowed to pass; and
a light receiving unit that is configured to optically receive each of the processing beam and the measurement beam that has passed through the passing area, and
the control apparatus controls the position change apparatus based on a light receiving result of the processing beam and a light receiving result of the measurement beam by the light receiving unit of the light receiving apparatus that is positioned at the first position.

### [Supplementary Note 27]

The processing system according to the Supplementary Note 26, wherein
the beam passing member has a plurality of passing areas, and
the light receiving unit optically receives the processing beam that has passed through each of the plurality of passing areas and optically receives the measurement beam that has passed through each of the plurality of passing areas.

### [Supplementary Note 28]

The processing system according to the Supplementary Note 27, wherein
the position change apparatus includes a deflection optical system that is configured to deflect the processing beam to change an irradiation position of the processing beam on the object and that is configured to deflect the measurement beam to change an irradiation position of the measurement beam on the object,
the deflection optical system deflects each of the processing beam and the measurement beam so that the plurality of passing areas are scanned with each of the processing beam and the measurement beam, and
the control apparatus controls the position change apparatus based on the light receiving result of the processing beam by the light receiving apparatus in a period during which the plurality of passing areas are scanned with the processing beam and the light receiving result of the measurement beam by the light receiving apparatus in a period during which the plurality of passing areas are scanned with the measurement beam.

### [Supplementary Note 29]

The processing system according to the Supplementary Note 28, wherein
each of the plurality of passing areas includes: a linear first area which extends in a first direction intersecting a direction along which the plurality of passing areas are arranged, and through which each of the processing beam and the measurement beam is allowed to pass; and a linear second area which extends in a second direction obliquely intersecting the first direction, and through which each of the processing beam and the measurement beam is allowed to pass,
the control apparatus:
   calculates a first timing at which the processing beam passes through the first area and a second timing at which the processing beam passes through the second area based on the light receiving result of the processing beam by the light receiving apparatus;
   calculates a third timing at which the measurement beam passes through the first area and a fourth timing at which the measurement beam passes through the second area based on the light receiving result of the measurement beam by the light receiving apparatus; and
   controls the position change apparatus based on at least one of a difference between the first timing and the third timing and a difference between the second timing and the fourth timing.

### [Supplementary Note 30]

The processing system according to any one of the Supplementary Notes 21 to 29, wherein
the position change apparatus is configured to change a relative positional relationship between an irradiation position of the processing beam on the object and an irradiation position of the measurement beam on the object in a first direction that intersects an irradiation direction of the measurement beam.

### [Supplementary Note 31]

The processing system according to any one of the Supplementary Notes 1 to 30, wherein
the first change apparatus changes at least one of the positional relationship and the postural relationship between the object and the irradiation optical system by moving a position of the placing apparatus.

### [Supplementary Note 32]

The processing system according to any one of the Supplementary Notes 1 to 31, wherein
the second change apparatus changes the positional relationship between the light receiving apparatus and the irradiation optical system by moving a position of the light receiving apparatus.

### [Supplementary Note 33]

The processing system according to any one of the Supplementary Notes 1 to 32, wherein
the position of the light receiving apparatus is changed from the second position to the first position that is between the placement surface and the irradiation optical system by the second change apparatus.

### [Supplementary Note 34]

The processing system according to any one of the Supplementary Notes 1 to 33, wherein
the processing system includes a regulating member that performs a regulation so that the light receiving apparatus is positioned at the second position by the second change apparatus.

### [Supplementary Note 35]

The processing system according to any one of the Supplementary Notes 1 to 34, wherein
the processing system includes a position measurement apparatus that measures the position of the light receiving apparatus changed by the second change apparatus.

### [Supplementary Note 36]

The processing system according to the Supplementary Note 35, wherein
the position measurement apparatus is a first position measurement apparatus, and
the processing system includes a second position measurement apparatus that measures a position of the irradiation optical system.

### [Supplementary Note 37]

The processing system according to the Supplementary Note 35 or 36, wherein
the control apparatus controls a position that is irradiated with the energy beam based on a measured result by the position measurement apparatus.

### [Supplementary Note 38]

The processing system according to the Supplementary Note 37, wherein
the position measurement apparatus includes at least one of an encoder, an interference measurement apparatus, and a potentiometer.

### [Supplementary Note 39]

The processing system according to any one of the Supplementary Notes 1 to 38, wherein
the control apparatus is configured to acquire information related to a positional relationship between the placing apparatus and the light receiving apparatus.

### [Supplementary Note 40]

The processing system according to the Supplementary Note 39, wherein
the control apparatus controls a position that is irradiated with the energy beam based on the information related to the positional relationship between the placing apparatus and the light receiving apparatus.

### [Supplementary Note 41]

A processing system including:
an irradiation optical system that is configured to irradiate an object with a processing beam that is for processing the object, that is configured to irradiate the object with a measurement beam that is for measuring the object, and that includes at least an objective optical system;
a placing apparatus that is configured to place the object on a placement surface;
a light receiving apparatus that is configured to optically receive the processing beam and the measurement beam emitted from the irradiation optical system;
a position change apparatus that is configured to change at least one of an irradiation position of the processing beam on the object and an irradiation position of the measurement beam on the object; and
a control apparatus,
wherein
the control apparatus controls the position change apparatus based on a light receiving result of the processing beam by the light receiving apparatus and a light receiving result of the measurement beam by the light receiving apparatus.

### [Supplementary Note 42]

The processing system according to the Supplementary Note 41, wherein
the control apparatus acquires the irradiation position of the processing beam and the irradiation position of the measurement beam based on the light receiving result by the light receiving apparatus, and
the control apparatus controls the position change apparatus based on the irradiation position of the processing beam and the irradiation position of the measurement beam that have been acquired.

### [Supplementary Note 43]

The processing system according to the Supplementary Note 41 or 42, wherein
the control apparatus controls the position change apparatus so that a difference between the irradiation position of the processing beam on the object and the irradiation position of the measurement beam on the object is smaller than that before the position change apparatus is controlled.

### [Supplementary Note 44]

The processing system according to any one of the Supplementary Notes 41 to 43, wherein
the control apparatus controls the position change apparatus so that the irradiation position of the processing beam on the object is the same as the irradiation position of the measurement beam on the object.

### [Supplementary Note 45]

The processing system according to any one of the Supplementary Notes 41 to 44, wherein
the position change apparatus includes a first position change optical system that is configured to deflect the processing beam to change the irradiation position of the processing beam on the object.

### [Supplementary Note 46]

The processing system according to any one of the Supplementary Notes 41 to 45, wherein
the position change apparatus includes a second position change optical system that is configured to deflect the measurement beam to change the irradiation position of the measurement beam on the object.

### [Supplementary Note 47]

The processing system according to any one of the Supplementary Notes 41 to 46, wherein
the light receiving apparatus includes:
a beam passing member having a formed passing area through which at least one of the processing beam and the measurement beam emitted from the irradiation optical system is allowed to pass; and
a light receiving unit that is configured to optically receive each of the processing beam and the measurement beam that has passed through the passing area, and
the control apparatus controls the position change apparatus based on the light receiving result of the processing beam by the light receiving unit and the light receiving result of the measurement beam by the light receiving unit.

### [Supplementary Note 48]

The processing system according to the Supplementary Note 47, wherein
the beam passing member has a plurality of passing areas, and
the light receiving unit optically receives the processing beam that has passed through each of the plurality of passing areas and optically receives the measurement beam that has passed through each of the plurality of passing areas.

### [Supplementary Note 49]

The processing system according to the Supplementary Note 48, wherein
the processing system includes a deflection optical system that is configured to deflect the processing beam to change the irradiation position of the processing beam on the object and that is configured to deflect the measurement beam to change the irradiation position of the measurement beam on the object,
the deflection optical system deflects each of the processing beam and the measurement beam so that the plurality of passing areas are scanned with each of the processing beam and the measurement beam along one direction that is along a surface of the beam passing member, and
the control apparatus controls the position change apparatus based on the light receiving result of the processing beam by the light receiving apparatus in a period during which the plurality of passing areas are scanned with the processing beam and the light receiving result of the measurement beam by the light receiving apparatus in a period during which the plurality of passing areas are scanned with the measurement beam.

### [Supplementary Note 50]

The processing system according to the Supplementary Note 49, wherein
each of the plurality of passing areas includes: a linear first area which extends in a first direction intersecting a direction along which the plurality of passing areas are arranged, and through which each of the processing beam and the measurement beam is allowed to pass; and a linear second area which extends in a second direction obliquely intersecting the first direction, and through which each of the processing beam and the measurement beam is allowed to pass,
the control apparatus:
   calculates a first timing at which the processing beam passes through the first area and a second timing at which the processing beam passes through the second area based on the light receiving result of the processing beam by the light receiving apparatus;
   calculates a third timing at which the measurement beam passes through the first area and a fourth timing at which the measurement beam passes through the second area based on the light receiving result of the measurement beam by the light receiving apparatus; and
   controls the position change apparatus based on at least one of a difference between the first timing and the third timing and a difference between the second timing and the fourth timing.

### [Supplementary Note 51]

The processing system according to any one of the Supplementary Notes 41 to 50, wherein
the irradiation optical system is a first irradiation optical system,
the first irradiation optical system is exchangeable with a second irradiation optical system that is different from the first irradiation optical system, and
the light receiving apparatus optically receive each of the processing beam and the measurement beam emitted from the second irradiation optical system in a case where the first irradiation optical system is exchanged with the second irradiation optical system.

### [Supplementary Note 52]

The processing system according to any one of the Supplementary Notes 41 to 51, wherein
the light receiving apparatus is positioned on an optical path of at least one of the processing beam and the measurement beam in at least a part of a period during which the light receiving apparatus optically receives the processing beam and the measurement beam, and is positioned at a position that is away from the optical path of each of the processing beam and the measurement beam in at least a part of each of a period during which the object is processed by the processing beam and a period during which the object is measured by the measurement beam.

### [Supplementary Note 53]

The processing system according to any one of the Supplementary Notes 41 to 52, wherein
the position change apparatus is configured to change a relative positional relationship between the irradiation position of the processing beam on the object and the irradiation position of the measurement beam on the object in a first direction that intersects an irradiation direction of the measurement beam.

### [Supplementary Note 54]

The processing system according to any one of the Supplementary Notes 41 to 53, wherein
the position change apparatus is configured to change a relative positional relationship between the irradiation position of the processing beam on the object and the irradiation position of the measurement beam on the object.

### [Supplementary Note 55]

A processing system including:
a deflection optical system that is configured to deflect an energy beam, which is for processing or measuring an object, to change an irradiation position of the energy beam on the object;
an irradiation optical system that is configured to irradiate the object with the energy beam emitted from the deflection optical system;
a light receiving apparatus that is configured to optically receive the energy beam emitted from the irradiation optical system;
a position change apparatus that is configured to change the irradiation position of the energy beam on the object by changing a position or a pose of the deflection optical system; and
a control apparatus that controls the position change apparatus based on a light receiving result of the energy beam by the light receiving apparatus,
wherein
the light receiving apparatus includes:
   a beam passing member having a plurality of formed passing areas through each of which the energy beam emitted from the irradiation optical system is allowed to pass; and
   a light receiving unit that is configured to optically receive each energy beam that has passed through each of the plurality of passing areas,
   the deflection optical system deflects the energy beam so that the plurality of passing areas are scanned with the energy beam along one direction that is along a surface of the beam passing member, and
   the control apparatus controls the position change apparatus based on the light receiving result of the energy beam by the light receiving apparatus.

### [Supplementary Note 56]

The processing system according to the Supplementary Note 55, wherein
the light receiving unit optically receives, through a light receiving optical system, the energy beam that has passed through each of the plurality of passing areas.

### [Supplementary Note 57]

The processing system according to the Supplementary Note 56, wherein
the light receiving optical system emits, from a first part of the light receiving optical system, the energy beam that has passed through a first passing area of the plurality of passing areas,
the light receiving optical system emits, from a second part of the light receiving optical system that is different from the first part, the energy beam that has passed through a second passing area of the plurality of passing areas that is different from the first passing area,
the energy beam emitted from the first part enters the light receiving unit by passing through a first optical path that is directed from the first part to the light receiving unit, and
the energy beam emitted from the second part enters the light receiving unit by passing through a second optical system that is directed from the first part to the light receiving unit and that is different from the first optical path.

### [Supplementary Note 58]

The processing system according to any one of the Supplementary Notes 55 to 57, wherein
the light receiving apparatus includes single light receiving unit.

### [Supplementary Note 59]

The processing system according to any one of the Supplementary Notes 55 to 58, wherein
the plurality of passing areas are formed on the beam passing member to distribute in a scan area in which the irradiation position of the energy beam is allowed to be set by means of the deflection optical system deflecting the energy beam on a surface of the beam passing member.

### [Supplementary Note 60]

The processing system according to any one of the Supplementary Notes 55 to 59, wherein
the deflection optical system deflects the energy beam so that the plurality of passing areas are scanned with the energy beam along the one direction in a state where a positional relationship between the light receiving apparatus and the irradiation optical system is fixed.

### [Supplementary Note 61]

The processing system according to any one of the Supplementary Notes 55 to 60, wherein
each of the plurality of passing areas includes: a linear first area which extends in a first direction intersecting a direction along which the plurality of passing areas are arranged, and through which the energy beam is allowed to pass; and a linear second area which extends in a second direction obliquely intersecting the first direction, and through which the energy beam is allowed to pass.

### [Supplementary Note 62]

The processing system according to the Supplementary Note 61, wherein
the control apparatus calculates a first timing at which the energy beam passes through the first area and a second timing at which the energy beam passes through the second area based on the light receiving result of the energy beam by the light receiving apparatus, and controls the position change apparatus based on the first and second timings.

### [Supplementary Note 63]

The processing system according to any one of the Supplementary Notes 55 to 62, wherein
the position change apparatus includes a position change optical system that is configured to deflect the energy beam to change the irradiation position of the energy beam on the object.

### [Supplementary Note 64]

The processing system according to any one of the Supplementary Notes 55 to 63, wherein
the irradiation optical system is a first irradiation optical system,
the first irradiation optical system is exchangeable with a second irradiation optical system that is different from the first irradiation optical system, and
the light receiving apparatus optically receive the energy beam emitted from the second irradiation optical system in a case where the first irradiation optical system is exchanged with the second irradiation optical system.

### [Supplementary Note 65]

The processing system according to any one of the Supplementary Notes 55 to 64, wherein
the light receiving apparatus is positioned on an optical path of the energy beam in at least a part of a period during which the light receiving apparatus optically receives the energy beam, and is positioned at a position that is away from the optical path of the energy beam in at least a part of each of a period during which the object is processed or measured by the energy beam.

### [Supplementary Note 66]

A processing system including:
an emission optical system that is configured to emit an energy beam, which is for processing or measuring an object, and that includes a plurality of condensed position adjustment optical systems each of which is configured to adjusts a condensed position of the energy beam and whose focal lengths are different from each other;
a plurality of irradiation optical systems each of which is configured to irradiate the object with the energy beam emitted from the emission optical system, each of which is attachable to and detachable from the emission optical system, and each of which includes at least an objective optical system;
a change apparatus that is configured to exchange the irradiation optical system attached to the emission optical system; and
a control apparatus that identifies a type of the irradiation optical system attached to the emission optical system, selects one condensed position adjustment optical system from among the plurality of condensed position adjustment optical systems based on the identified type, and moves the one condensed position adjustment optical system so that the selected one condensed position adjustment optical system is positioned on an optical system of the energy beam.

### [Supplementary Note 67]

The processing system according to the Supplementary Note 66, wherein
in a case where a first exchange optical system, which is usable as the irradiation optical system, is attached to the emission optical system as the irradiation optical system, the control apparatus selects, as the one condensed position adjustment optical system, a first condensed position adjustment optical system of the plurality of condensed position adjustment optical systems, and
in a case where a second exchange optical system, which is usable as the irradiation optical system and which is different from the first exchange optical system, is attached to the emission optical system as the irradiation optical system, the control apparatus selects, as the one condensed position adjustment optical system, a second condensed position adjustment optical system of the plurality of condensed position adjustment optical systems that is different from the first condensed position adjustment optical system.

### [Supplementary Note 68]

The processing system according to the Supplementary Note 66 or 67, wherein
the change apparatus exchanges the irradiation optical system by attaching one of a plurality of exchange optical systems, each of which is usable as the irradiation optical system, to the emission optical system as the irradiation optical system, and
the plurality of condensed position adjustment optical system correspond to the plurality of exchange optical systems on a one-to-one basis.

### [Supplementary Note 69]

The processing system according to any one of the Supplementary Notes 66 to 68, wherein
the emission optical system is configured to emit, as the energy beam, a processing beam that is for processing the object and a measurement beam that is for measuring the object,
the control apparatus selects the one condensed position adjustment optical system of the plurality of condensed position adjustment optical systems so that a difference between a condensed position of the processing beam and a condensed position of the measurement beam is smaller in a direction along an optical axis of the irradiation optical system, compared to a case where another condensed position adjustment optical system, which is different from the one condensed position adjustment optical system, of the plurality of condensed position adjustment optical systems is selected.

### [Supplementary Note 70]

The processing system according to any one of the Supplementary Notes 66 to 69, wherein
the emission optical system is configured to emit, as the energy beam, a processing beam that is for processing the object and a measurement beam that is for measuring the object,
the control apparatus selects the one condensed position adjustment optical system of the plurality of condensed position adjustment optical systems so that a condensed position of the processing beam is the same as a condensed position of the measurement beam in a direction along an optical axis of the irradiation optical system.

### [Supplementary Note 71]

The processing system according to the Supplementary Note 69 or 70, wherein
the control apparatus moves the one condensed position adjustment optical system so that the selected one condensed position adjustment optical system is positioned on an optical system of at least one of the processing beam and the measurement beam.

### [Supplementary Note 72]

A processing system including:
an irradiation optical system that is configured to irradiate an object with an energy beam;
a first change apparatus that is configured to change at least one of a positional relationship and a postural relationship between the object and the irradiation optical system;
a light receiving apparatus that is configured to optically receive the energy beam emitted from the irradiation optical system;
a second change apparatus that is configured to change a positional relationship between the light receiving apparatus and the irradiation optical system; and
a control apparatus,
wherein
a position of the light receiving apparatus is changed to a first position at which it is possible to optically receive the energy beam from a second position that is different from the first position by the second change apparatus under a control of the control apparatus.

### [Supplementary Note 73]

A processing system including:
an irradiation optical system that is configured to irradiate an object with a first beam and that is configured to irradiate the object with a second beam different from the first beam;
a light receiving apparatus that is configured to optically receive the first beam and the second beam emitted from the irradiation optical system;
a position change apparatus that is configured to change at least one of an irradiation position of the first beam on the object and an irradiation position of the second beam on the object; and
a control apparatus,
wherein
the control apparatus controls the position change apparatus based on a light receiving result of the first beam by the light receiving apparatus and a light receiving result of the second beam by the light receiving apparatus.

### [Supplementary Note 74]

A processing system including:
a deflection optical system that is configured to deflect an energy beam to change an irradiation position of the energy beam on the object;
an irradiation optical system that is configured to irradiate the object with the energy beam emitted from the deflection optical system;
a light receiving apparatus that is configured to optically receive the energy beam emitted from the irradiation optical system;
a position change apparatus that is configured to change the irradiation position of the energy beam on the object by changing a position or a pose of the deflection optical system; and
a control apparatus that controls the position change apparatus based on a light receiving result of the energy beam by the light receiving apparatus,
wherein
the light receiving apparatus includes:
   a beam passing member having a plurality of formed passing areas through each of which the energy beam emitted from the irradiation optical system is allowed to pass; and
   a light receiving unit that is configured to optically receive each energy beam that has passed through each of the plurality of passing areas,
   the control apparatus controls the position change apparatus based on the light receiving result of the energy beam by the light receiving apparatus.

### [Supplementary Note 75]

A processing system including:
an emission optical system that is configured to emit an energy beam and that includes a plurality of condensed position adjustment optical systems each of which is configured to adjusts a condensed position of the energy beam and whose focal lengths are different from each other;
a plurality of irradiation optical systems each of which is configured to irradiate the object with the energy beam emitted from the emission optical system, each of which is attachable to and detachable from the emission optical system, and each of which includes at least an objective optical system;
a change apparatus that is configured to exchange the irradiation optical system attached to the emission optical system; and
a control apparatus that identifies a type of the irradiation optical system attached to the emission optical system, selects one condensed position adjustment optical system from among the plurality of condensed position adjustment optical systems based on the identified type, and moves the one condensed position adjustment optical system so that the selected one condensed position adjustment optical system is positioned on an optical system of the energy beam.

### [Supplementary Note 76]

A processing method including:
irradiating an object with an energy beam, which is for processing the object placed on a placement surface of a placing apparatus, by using an irradiation optical system;
changing at least one of a positional relationship and a postural relationship between the irradiation optical system and the object placed on the placing apparatus;
optically receiving the energy beam emitted from the irradiation optical system by using a light receiving apparatus; and
changing a positional relationship between the light receiving apparatus and the irradiation optical system,
wherein
the changing the positional relationship between the light receiving apparatus and the irradiation optical system includes changing a position of the light receiving apparatus to a first position at which it is possible to optically receive the energy beam from a second position that is different from the first position.

### [Supplementary Note 77]

A processing method including:
irradiating an object with a processing beam, which is for processing the object, by using an irradiation optical system;
irradiating the object with a measurement beam, which is for measuring the object, by using the irradiation optical system;
optically receiving the processing beam and the measurement beam emitted from the irradiation optical system by using a light receiving apparatus; and
changing at least one of an irradiation position of the processing beam on the object and an irradiation position of the measurement beam on the object,
wherein
the changing at least one of the irradiation position of the processing beam and the irradiation position of the measurement beam includes changing at least one of the irradiation position of the processing beam and the irradiation position of the measurement beam based on a light receiving result of the processing beam by the light receiving apparatus and a light receiving result of the measurement beam by the light receiving apparatus.

### [Supplementary Note 78]

A processing method including:
changing an irradiation position of an energy beam on an object by using a deflection optical system that is configured to deflect the energy beam, which is for processing or measuring the object;
irradiating the object with the energy beam emitted from the deflection optical system through an irradiation optical system; and
optically receiving the energy beam emitted from the irradiation optical system by using a light receiving apparatus,
wherein
the changing the irradiation position of the energy beam includes changing the irradiation position of the energy beam by changing a position or a pose of the deflection optical system based on a light receiving result of the energy beam by the light receiving apparatus,
the light receiving apparatus includes:
   a beam passing member having a plurality of formed passing areas through each of which the energy beam emitted from the irradiation optical system is allowed to pass; and
   a light receiving unit that is configured to optically receive each energy beam that has passed through each of the plurality of passing areas,
   the changing the irradiation position of the energy beam includes changing the irradiation position of the energy beam deflecting the energy beam by using the deflection optical system so that the plurality of passing areas are scanned with the energy beam along one direction that is along a surface of the beam passing member.

### [Supplementary Note 79]

A processing method including:
emitting an energy beam from an emission optical system that is configured to emit the energy beam, which is for processing or measuring an object, and that includes a plurality of condensed position adjustment optical systems each of which is configured to adjusts a condensed position of the energy beam and whose focal lengths are different from each other;
irradiating the object with the energy beam emitted from the emission optical system by using a plurality of irradiation optical systems each of which is configured to irradiate the object with the energy beam emitted from the emission optical system, each of which is attachable to and detachable from the emission optical system, and each of which includes at least an objective optical system;
exchanging the irradiation optical system attached to the emission optical system; and
identifying a type of the irradiation optical system attached to the emission optical system, selecting one condensed position adjustment optical system from among the plurality of condensed position adjustment optical systems based on the identified type, and moving the one condensed position adjustment optical system so that the selected one condensed position adjustment optical system is positioned on an optical system of the energy beam.

### [Supplementary Note 80]

A processing method including:
irradiating an object with an energy beam by using an irradiation optical system;
changing at least one of a positional relationship and a postural relationship between the object and the irradiation optical system;
optically receiving the energy beam emitted from the irradiation optical system by using a light receiving apparatus; and
changing a positional relationship between the light receiving apparatus and the irradiation optical system,
wherein
the changing the positional relationship between the light receiving apparatus and the irradiation optical system includes changing a position of the light receiving apparatus to a first position at which it is possible to optically receive the energy beam from a second position that is different from the first position.

### [Supplementary Note 81]

A processing method including:
irradiating an object with a first beam by using an irradiation optical system;
irradiating the object with a second beam, which is different from the first beam, by using the irradiation optical system;
optically receiving the first beam and the second beam emitted from the irradiation optical system by using a light receiving apparatus; and
changing at least one of an irradiation position of the first beam on the object and an irradiation position of the second beam on the object,
wherein
the changing at least one of the irradiation position of the first beam and the irradiation position of the second beam includes changing at least one of the irradiation position of the first beam and the irradiation position of the second beam based on a light receiving result of the first beam by the light receiving apparatus and a light receiving result of the second beam by the light receiving apparatus.

### [Supplementary Note 82]

A processing method including:
changing an irradiation position of an energy beam on an object by using a deflection optical system that is configured to deflect the energy beam;
irradiating the object with the energy beam emitted from the deflection optical system through an irradiation optical system; and
optically receiving the energy beam emitted from the irradiation optical system by using a light receiving apparatus,
wherein
the changing the irradiation position of the energy beam includes changing the irradiation position of the energy beam by changing a position or a pose of the deflection optical system based on a light receiving result of the energy beam by the light receiving apparatus,
the light receiving apparatus includes:
   a beam passing member having a plurality of formed passing areas through each of which the energy beam emitted from the irradiation optical system is allowed to pass; and
   a light receiving unit that is configured to optically receive each energy beam that has passed through each of the plurality of passing areas.

### [Supplementary Note 83]

A processing method including:
emitting an energy beam from an emission optical system that is configured to emit the energy beam, and that includes a plurality of condensed position adjustment optical systems each of which is configured to adjusts a condensed position of the energy beam and whose focal lengths are different from each other;
irradiating the object with the energy beam emitted from the emission optical system by using a plurality of irradiation optical systems each of which is configured to irradiate the object with the energy beam emitted from the emission optical system, each of which is attachable to and detachable from the emission optical system, and each of which includes at least an objective optical system;
exchanging the irradiation optical system attached to the emission optical system; and
identifying a type of the irradiation optical system attached to the emission optical system, selecting one condensed position adjustment optical system from among the plurality of condensed position adjustment optical systems based on the identified type, and moving the one condensed position adjustment optical system so that the selected one condensed position adjustment optical system is positioned on an optical system of the energy beam.

At least a part of the feature of each example embodiment described above may be combined with at least another part of the feature of each example embodiment described above. A part of the feature of each example embodiment described above may not be used. Moreover, the disclosures of all publications and United States patents related to the apparatus that is cited in each example embodiment described above are incorporated in the disclosures of the present application by reference if it is legally permitted.

The present invention is allowed to be changed, if desired, without departing from the essence or spirit of the invention which can be read from the claims and the entire specification, and a processing system, which involves such changes, is also intended to be within the technical scope of the present invention.

### Description of Reference Codes

- SYS: processing system
- 1: processing unit
- 13: processing head
- 131: processing optical system
- 1313: Galvano mirror
- 132: measurement optical system
- 1328: Galvano mirror
- 133: combining optical system
- 134: deflection optical system
- 1341: Galvano mirror
- 135: irradiation optical system
- 1351: fθ lens
- 17: head change apparatus
- 18b: optical measurement apparatus
- 181b: beam passing member
- 182b: light receiving element
- 183b: light receiving optical system
- 184b: light passing area
- 2: control unit
- W: workpiece
- M: measurement target object
- EL: processing light
- ML: measurement light
- PA, MA: irradiation position
- PSA: processing shot area
- MSA: measurement shot area

## Claims

1. A processing system comprising:
an irradiation optical system that is configured to irradiate an object with an energy beam that is for processing the object;
a placing apparatus that is configured to place the object on a placement surface;
a first change apparatus that is configured to change at least one of a positional relationship and a postural relationship between the irradiation optical system and the object placed on the placing apparatus;
a light receiving apparatus that is configured to optically receive the energy beam emitted from the irradiation optical system;
a second change apparatus that is configured to change a positional relationship between the light receiving apparatus and the irradiation optical system; and
a control apparatus,
wherein
a position of the light receiving apparatus is changed to a first position at which it is possible to optically receive the energy beam from a second position that is different from the first position by the second change apparatus under a control of the control apparatus.

2. The processing system according to claim 1, wherein
the second position is a position that is outside an area that can be processed by the processing system.

3. The processing system according to claim 1 or 2, wherein
the first position is a position that can be irradiated with the energy beam, and
the second position is at which an irradiation of the energy beam is prohibited.

4. The processing system according to any one of claims 1 to 3, wherein
the second change apparatus is configured to change the positional relationship between the light receiving apparatus and the irradiation optical system in a direction that intersects a direction along which the energy beam is emitted.

5. The processing system according to any one of claims 1 to 4, wherein
the processing system comprises a storage apparats that is configured to store the light receiving apparatus,
the first position is a position outside the storage apparatus, and
the second position is a position in the storage apparatus.

6. The processing system according to any one of claims 1 to 4, wherein
the irradiation optical system is a first irradiation optical system,
the first irradiation optical system is exchangeable with a second irradiation optical system that is different from the first irradiation optical system, and
the second change apparatus changes the positional relationship between the light receiving apparatus and the irradiation optical system in a case where the first irradiation optical system is exchanged with the second irradiation optical system.

7. The processing system according to claim 5, wherein
the irradiation optical system is a first irradiation optical system,
the first irradiation optical system is exchangeable with a second irradiation optical system that is different from the first irradiation optical system, and
the second change apparatus changes the positional relationship between the light receiving apparatus and the irradiation optical system in a case where the first irradiation optical system is exchanged with the second irradiation optical system.

8. The processing system according to claim 7, wherein
the storage apparatus is configured to store the first irradiation optical system and the second irradiation optical system.

9. The processing system according to any one of claim 7 or 8, wherein
the processing system comprises a change apparatus that is configured to exchange the first irradiation optical system with the second irradiation optical system,
the change apparatus includes a housing in which a housing space, in which the storage apparatus is positioned, is formed, and
a gas supply port, which his configured to supply gas to the housing space, is formed at the housing.

10. The processing system according to claim 9, wherein
the gas is supplied from the gas supply port toward at least one of the first and second irradiation optical systems stored in the storage apparatus.

11. The processing system according to claim 9 or 10, wherein
an air pressure in the housing space is higher than an air pressure in a space in which the object is placed by the gas supplied from the gas supply port to the housing space.

12. The processing system according to any one of claims 9 to 11, wherein
the processing system comprises an emission optical system that emits the energy beam toward the irradiation optical system,
the change apparatus exchanges the irradiation optical system by detaching, from the emission optical system, the irradiation optical system attached to the emission optical system.

13. The processing system according to any one of claims 1 to 12, wherein
the control apparatus acquires information related to an irradiation position of the energy beam based on a light receiving result by the light receiving apparatus.

14. The processing system according to claim 13, wherein
the information related to the irradiation position includes information related to a change of the irradiation position of the energy beam.

15. The processing system according to any one of claims 1 to 14, wherein
the energy beam is a processing beam,
the irradiation optical system is configured to irradiate the object with a measurement beam that is different from the processing beam and that is for measuring the object,
the light receiving apparatus positioned at the first position is allowed to optically receive the measurement beam emitted from the irradiation optical system.

16. The processing system according to claim 15, wherein
the control apparatus acquires information related to an irradiation position of the measurement beam based on a light receiving result by the light receiving apparatus.

17. The processing system according to claim 16, wherein
the information related to the irradiation position of the measurement beam includes information related to a change of the irradiation position of the measurement beam.

18. The processing system according to any one of claims 15 to 17, wherein
the light receiving apparatus is positioned on an optical path of at least one of the processing beam and the measurement beam in at least a part of a period during which the light receiving apparatus optically receives the processing beam and the measurement beam, and is positioned at a position that is away from the optical path of each of the processing beam and the measurement beam in at least a part of each of a period during which the object is processed by the processing beam and a period during which the object is measured by the measurement beam.

19. The processing system according to any one of claims 1 to 14, wherein
the processing system comprises a position change apparatus that is configured to change an incident position of the energy beam to the irradiation optical system, and
the control apparatus controls the position change apparatus based on a light receiving result by the light receiving apparatus.

20. The processing system according to claim 19, wherein
the position change apparatus includes a first position change optical system that is configured to deflect the energy beam to change an irradiation position of the energy beam on the object.

21. The processing system according to any one of claims 15 to 17, wherein
the processing system comprises a position change apparatus that is configured to change an incident position of the energy beam to the irradiation optical system, and
the control apparatus controls the position change apparatus based on a light receiving result by the light receiving apparatus.

22. The processing system according to claim 21, wherein
the control apparatus controls the position change apparatus so that a difference between an irradiation position of the processing beam on the object and an irradiation position of the measurement beam on the object is smaller than that before the position change apparatus is controlled.

23. The processing system according to claim 21 or 22, wherein
the control apparatus controls the position change apparatus so that an irradiation position of the processing beam on the object is the same as an irradiation position of the measurement beam on the object.

24. The processing system according to any one of claims 21 to 23, wherein
the position change apparatus includes a first position change optical system that is configured to deflect the energy beam to change an irradiation position of the energy beam on the object.

25. The processing system according to any one of claims 21 to 24, wherein
the position change apparatus includes a second position change optical system that is configured to deflect the measurement beam to change an irradiation position of the measurement beam on the object.

26. The processing system according to any one of claims 21 to 25, wherein
the light receiving apparatus includes:
a beam passing member having a formed passing area through which at least one of the processing beam and the measurement beam emitted from the irradiation optical system is allowed to pass; and
a light receiving unit that is configured to optically receive each of the processing beam and the measurement beam that has passed through the passing area, and
the control apparatus controls the position change apparatus based on a light receiving result of the processing beam and a light receiving result of the measurement beam by the light receiving unit of the light receiving apparatus that is positioned at the first position.

27. The processing system according to claim 26, wherein
the beam passing member has a plurality of passing areas, and
the light receiving unit optically receives the processing beam that has passed through each of the plurality of passing areas and optically receives the measurement beam that has passed through each of the plurality of passing areas.

28. The processing system according to claim 27, wherein
the position change apparatus includes a deflection optical system that is configured to deflect the processing beam to change an irradiation position of the processing beam on the object and that is configured to deflect the measurement beam to change an irradiation position of the measurement beam on the object,
the deflection optical system deflects each of the processing beam and the measurement beam so that the plurality of passing areas are scanned with each of the processing beam and the measurement beam, and
the control apparatus controls the position change apparatus based on the light receiving result of the processing beam by the light receiving apparatus in a period during which the plurality of passing areas are scanned with the processing beam and the light receiving result of the measurement beam by the light receiving apparatus in a period during which the plurality of passing areas are scanned with the measurement beam.

29. The processing system according to claim 28, wherein
each of the plurality of passing areas includes: a linear first area which extends in a first direction intersecting a direction along which the plurality of passing areas are arranged, and through which each of the processing beam and the measurement beam is allowed to pass; and a linear second area which extends in a second direction obliquely intersecting the first direction, and through which each of the processing beam and the measurement beam is allowed to pass,
the control apparatus:
calculates a first timing at which the processing beam passes through the first area and a second timing at which the processing beam passes through the second area based on the light receiving result of the processing beam by the light receiving apparatus;
calculates a third timing at which the measurement beam passes through the first area and a fourth timing at which the measurement beam passes through the second area based on the light receiving result of the measurement beam by the light receiving apparatus; and
controls the position change apparatus based on at least one of a difference between the first timing and the third timing and a difference between the second timing and the fourth timing.

30. The processing system according to any one of claims 21 to 29, wherein
the position change apparatus is configured to change a relative positional relationship between an irradiation position of the processing beam on the object and an irradiation position of the measurement beam on the object in a first direction that intersects an irradiation direction of the measurement beam.

31. The processing system according to any one of claims 1 to 30, wherein
the first change apparatus changes at least one of the positional relationship and the postural relationship between the object and the irradiation optical system by moving a position of the placing apparatus.

32. The processing system according to any one of claims 1 to 31, wherein
the second change apparatus changes the positional relationship between the light receiving apparatus and the irradiation optical system by moving a position of the light receiving apparatus.

33. The processing system according to any one of claims 1 to 32, wherein
the position of the light receiving apparatus is changed from the second position to the first position that is between the placement surface and the irradiation optical system by the second change apparatus.

34. The processing system according to any one of claims 1 to 33, wherein
the processing system comprises a regulating member that performs a regulation so that the light receiving apparatus is positioned at the second position by the second change apparatus.

35. The processing system according to any one of claims 1 to 34, wherein
the processing system comprises a position measurement apparatus that measures the position of the light receiving apparatus changed by the second change apparatus.

36. The processing system according to claim 35, wherein
the position measurement apparatus is a first position measurement apparatus, and
the processing system comprises a second position measurement apparatus that measures a position of the irradiation optical system.

37. The processing system according to claim 35 or 36, wherein
the control apparatus controls a position that is irradiated with the energy beam based on a measured result by the position measurement apparatus.

38. The processing system according to claim 37, wherein
the position measurement apparatus includes at least one of an encoder, an interference measurement apparatus, and a potentiometer.

39. The processing system according to any one of claims 1 to 38, wherein
the control apparatus is configured to acquire information related to a positional relationship between the placing apparatus and the light receiving apparatus.

40. The processing system according to claim 39, wherein
the control apparatus controls a position that is irradiated with the energy beam based on the information related to the positional relationship between the placing apparatus and the light receiving apparatus.

41. A processing system comprising:
an irradiation optical system that is configured to irradiate an object with a processing beam that is for processing the object, that is configured to irradiate the object with a measurement beam that is for measuring the object, and that includes at least an objective optical system;
a placing apparatus that is configured to place the object on a placement surface;
a light receiving apparatus that is configured to optically receive the processing beam and the measurement beam emitted from the irradiation optical system;
a position change apparatus that is configured to change at least one of an irradiation position of the processing beam on the object and an irradiation position of the measurement beam on the object; and
a control apparatus,
wherein
the control apparatus controls the position change apparatus based on a light receiving result of the processing beam by the light receiving apparatus and a light receiving result of the measurement beam by the light receiving apparatus.

42. The processing system according to claim 41, wherein
the control apparatus acquires the irradiation position of the processing beam and the irradiation position of the measurement beam based on the light receiving result by the light receiving apparatus, and
the control apparatus controls the position change apparatus based on the irradiation position of the processing beam and the irradiation position of the measurement beam that have been acquired.

43. The processing system according to claim 41 or 42, wherein
the control apparatus controls the position change apparatus so that a difference between the irradiation position of the processing beam on the object and the irradiation position of the measurement beam on the object is smaller than that before the position change apparatus is controlled.

44. The processing system according to any one of claims 41 to 43, wherein
the control apparatus controls the position change apparatus so that the irradiation position of the processing beam on the object is the same as the irradiation position of the measurement beam on the object.

45. The processing system according to any one of claims 41 to 44, wherein
the position change apparatus includes a first position change optical system that is configured to deflect the processing beam to change the irradiation position of the processing beam on the object.

46. The processing system according to any one of claims 41 to 45, wherein
the position change apparatus includes a second position change optical system that is configured to deflect the measurement beam to change the irradiation position of the measurement beam on the object.

47. The processing system according to any one of claims 41 to 46, wherein
the light receiving apparatus includes:
a beam passing member having a formed passing area through which at least one of the processing beam and the measurement beam emitted from the irradiation optical system is allowed to pass; and
a light receiving unit that is configured to optically receive each of the processing beam and the measurement beam that has passed through the passing area, and
the control apparatus controls the position change apparatus based on the light receiving result of the processing beam by the light receiving unit and the light receiving result of the measurement beam by the light receiving unit.

48. The processing system according to claim 47, wherein
the beam passing member has a plurality of passing areas, and
the light receiving unit optically receives the processing beam that has passed through each of the plurality of passing areas and optically receives the measurement beam that has passed through each of the plurality of passing areas.

49. The processing system according to claim 48, wherein
the processing system comprises a deflection optical system that is configured to deflect the processing beam to change the irradiation position of the processing beam on the object and that is configured to deflect the measurement beam to change the irradiation position of the measurement beam on the object,
the deflection optical system deflects each of the processing beam and the measurement beam so that the plurality of passing areas are scanned with each of the processing beam and the measurement beam along one direction that is along a surface of the beam passing member, and
the control apparatus controls the position change apparatus based on the light receiving result of the processing beam by the light receiving apparatus in a period during which the plurality of passing areas are scanned with the processing beam and the light receiving result of the measurement beam by the light receiving apparatus in a period during which the plurality of passing areas are scanned with the measurement beam.

50. The processing system according to claim 49, wherein
each of the plurality of passing areas includes: a linear first area which extends in a first direction intersecting a direction along which the plurality of passing areas are arranged, and through which each of the processing beam and the measurement beam is allowed to pass; and a linear second area which extends in a second direction obliquely intersecting the first direction, and through which each of the processing beam and the measurement beam is allowed to pass,
the control apparatus:
calculates a first timing at which the processing beam passes through the first area and a second timing at which the processing beam passes through the second area based on the light receiving result of the processing beam by the light receiving apparatus;
calculates a third timing at which the measurement beam passes through the first area and a fourth timing at which the measurement beam passes through the second area based on the light receiving result of the measurement beam by the light receiving apparatus; and
controls the position change apparatus based on at least one of a difference between the first timing and the third timing and a difference between the second timing and the fourth timing.

51. The processing system according to any one of claims 41 to 50, wherein
the irradiation optical system is a first irradiation optical system,
the first irradiation optical system is exchangeable with a second irradiation optical system that is different from the first irradiation optical system, and
the light receiving apparatus optically receive each of the processing beam and the measurement beam emitted from the second irradiation optical system in a case where the first irradiation optical system is exchanged with the second irradiation optical system.

52. The processing system according to any one of claims 41 to 51, wherein
the light receiving apparatus is positioned on an optical path of at least one of the processing beam and the measurement beam in at least a part of a period during which the light receiving apparatus optically receives the processing beam and the measurement beam, and is positioned at a position that is away from the optical path of each of the processing beam and the measurement beam in at least a part of each of a period during which the object is processed by the processing beam and a period during which the object is measured by the measurement beam.

53. The processing system according to any one of claims 41 to 52, wherein
the position change apparatus is configured to change a relative positional relationship between the irradiation position of the processing beam on the object and the irradiation position of the measurement beam on the object in a first direction that intersects an irradiation direction of the measurement beam.

54. The processing system according to any one of claims 41 to 53, wherein
the position change apparatus is configured to change a relative positional relationship between the irradiation position of the processing beam on the object and the irradiation position of the measurement beam on the object.

55. A processing system comprising:
a deflection optical system that is configured to deflect an energy beam, which is for processing or measuring an object, to change an irradiation position of the energy beam on the object;
an irradiation optical system that is configured to irradiate the object with the energy beam emitted from the deflection optical system;
a light receiving apparatus that is configured to optically receive the energy beam emitted from the irradiation optical system;
a position change apparatus that is configured to change the irradiation position of the energy beam on the object by changing a position or a pose of the deflection optical system; and
a control apparatus that controls the position change apparatus based on a light receiving result of the energy beam by the light receiving apparatus,
wherein
the light receiving apparatus includes:
a beam passing member having a plurality of formed passing areas through each of which the energy beam emitted from the irradiation optical system is allowed to pass; and
a light receiving unit that is configured to optically receive each energy beam that has passed through each of the plurality of passing areas,
the deflection optical system deflects the energy beam so that the plurality of passing areas are scanned with the energy beam along one direction that is along a surface of the beam passing member, and
the control apparatus controls the position change apparatus based on the light receiving result of the energy beam by the light receiving apparatus.

56. The processing system according to claim 55, wherein
the light receiving unit optically receives, through a light receiving optical system, the energy beam that has passed through each of the plurality of passing areas.

57. The processing system according to claim 56, wherein
the light receiving optical system emits, from a first part of the light receiving optical system, the energy beam that has passed through a first passing area of the plurality of passing areas,
the light receiving optical system emits, from a second part of the light receiving optical system that is different from the first part, the energy beam that has passed through a second passing area of the plurality of passing areas that is different from the first passing area,
the energy beam emitted from the first part enters the light receiving unit by passing through a first optical path that is directed from the first part to the light receiving unit, and
the energy beam emitted from the second part enters the light receiving unit by passing through a second optical system that is directed from the first part to the light receiving unit and that is different from the first optical path.

58. The processing system according to any one of claims 55 to 57, wherein
the light receiving apparatus includes single light receiving unit.

59. The processing system according to any one of claims 55 to 58, wherein
the plurality of passing areas are formed on the beam passing member to distribute in a scan area in which the irradiation position of the energy beam is allowed to be set by means of the deflection optical system deflecting the energy beam on a surface of the beam passing member.

60. The processing system according to any one of claims 55 to 59, wherein
the deflection optical system deflects the energy beam so that the plurality of passing areas are scanned with the energy beam along the one direction in a state where a positional relationship between the light receiving apparatus and the irradiation optical system is fixed.

61. The processing system according to any one of claims 55 to 60, wherein
each of the plurality of passing areas includes: a linear first area which extends in a first direction intersecting a direction along which the plurality of passing areas are arranged, and through which the energy beam is allowed to pass; and a linear second area which extends in a second direction obliquely intersecting the first direction, and through which the energy beam is allowed to pass.

62. The processing system according to claim 61, wherein
the control apparatus calculates a first timing at which the energy beam passes through the first area and a second timing at which the energy beam passes through the second area based on the light receiving result of the energy beam by the light receiving apparatus, and controls the position change apparatus based on the first and second timings.

63. The processing system according to any one of claims 55 to 62, wherein
the position change apparatus includes a position change optical system that is configured to deflect the energy beam to change the irradiation position of the energy beam on the object.

64. The processing system according to any one of claims 55 to 63, wherein
the irradiation optical system is a first irradiation optical system,
the first irradiation optical system is exchangeable with a second irradiation optical system that is different from the first irradiation optical system, and
the light receiving apparatus optically receive the energy beam emitted from the second irradiation optical system in a case where the first irradiation optical system is exchanged with the second irradiation optical system.

65. The processing system according to any one of claims 55 to 64, wherein
the light receiving apparatus is positioned on an optical path of the energy beam in at least a part of a period during which the light receiving apparatus optically receives the energy beam, and is positioned at a position that is away from the optical path of the energy beam in at least a part of each of a period during which the object is processed or measured by the energy beam.

66. A processing system comprising:
an emission optical system that is configured to emit an energy beam, which is for processing or measuring an object, and that includes a plurality of condensed position adjustment optical systems each of which is configured to adjusts a condensed position of the energy beam and whose focal lengths are different from each other;
a plurality of irradiation optical systems each of which is configured to irradiate the object with the energy beam emitted from the emission optical system, each of which is attachable to and detachable from the emission optical system, and each of which includes at least an objective optical system;
a change apparatus that is configured to exchange the irradiation optical system attached to the emission optical system; and
a control apparatus that identifies a type of the irradiation optical system attached to the emission optical system, selects one condensed position adjustment optical system from among the plurality of condensed position adjustment optical systems based on the identified type, and moves the one condensed position adjustment optical system so that the selected one condensed position adjustment optical system is positioned on an optical system of the energy beam.

67. The processing system according to claim 66, wherein
in a case where a first exchange optical system, which is usable as the irradiation optical system, is attached to the emission optical system as the irradiation optical system, the control apparatus selects, as the one condensed position adjustment optical system, a first condensed position adjustment optical system of the plurality of condensed position adjustment optical systems, and
in a case where a second exchange optical system, which is usable as the irradiation optical system and which is different from the first exchange optical system, is attached to the emission optical system as the irradiation optical system, the control apparatus selects, as the one condensed position adjustment optical system, a second condensed position adjustment optical system of the plurality of condensed position adjustment optical systems that is different from the first condensed position adjustment optical system.

68. The processing system according to claim 66 or 67, wherein
the change apparatus exchanges the irradiation optical system by attaching one of a plurality of exchange optical systems, each of which is usable as the irradiation optical system, to the emission optical system as the irradiation optical system, and
the plurality of condensed position adjustment optical system correspond to the plurality of exchange optical systems on a one-to-one basis.

69. The processing system according to any one of claims 66 to 68, wherein
the emission optical system is configured to emit, as the energy beam, a processing beam that is for processing the object and a measurement beam that is for measuring the object,
the control apparatus selects the one condensed position adjustment optical system of the plurality of condensed position adjustment optical systems so that a difference between a condensed position of the processing beam and a condensed position of the measurement beam is smaller in a direction along an optical axis of the irradiation optical system, compared to a case where another condensed position adjustment optical system, which is different from the one condensed position adjustment optical system, of the plurality of condensed position adjustment optical systems is selected.

70. The processing system according to any one of claims 66 to 69, wherein
the emission optical system is configured to emit, as the energy beam, a processing beam that is for processing the object and a measurement beam that is for measuring the object,
the control apparatus selects the one condensed position adjustment optical system of the plurality of condensed position adjustment optical systems so that a condensed position of the processing beam is the same as a condensed position of the measurement beam in a direction along an optical axis of the irradiation optical system.

71. The processing system according to claim 69 or 70, wherein
the control apparatus moves the one condensed position adjustment optical system so that the selected one condensed position adjustment optical system is positioned on an optical system of at least one of the processing beam and the measurement beam.

72. A processing system comprising:
an irradiation optical system that is configured to irradiate an object with an energy beam;
a first change apparatus that is configured to change at least one of a positional relationship and a postural relationship between the object and the irradiation optical system;
a light receiving apparatus that is configured to optically receive the energy beam emitted from the irradiation optical system;
a second change apparatus that is configured to change a positional relationship between the light receiving apparatus and the irradiation optical system; and
a control apparatus,
wherein
a position of the light receiving apparatus is changed to a first position at which it is possible to optically receive the energy beam from a second position that is different from the first position by the second change apparatus under a control of the control apparatus.

73. A processing system comprising:
an irradiation optical system that is configured to irradiate an object with a first beam and that is configured to irradiate the object with a second beam;
a light receiving apparatus that is configured to optically receive the first beam and the second beam emitted from the irradiation optical system;
a position change apparatus that is configured to change at least one of an irradiation position of the first beam on the object and an irradiation position of the second beam on the object; and
a control apparatus,
wherein
the control apparatus controls the position change apparatus based on a light receiving result of the first beam by the light receiving apparatus and a light receiving result of the second beam by the light receiving apparatus.

74. A processing system comprising:
a deflection optical system that is configured to deflect an energy beam to change an irradiation position of the energy beam on the object;
an irradiation optical system that is configured to irradiate the object with the energy beam emitted from the deflection optical system;
a light receiving apparatus that is configured to optically receive the energy beam emitted from the irradiation optical system;
a position change apparatus that is configured to change the irradiation position of the energy beam on the object by changing a position or a pose of the deflection optical system; and
a control apparatus that controls the position change apparatus based on a light receiving result of the energy beam by the light receiving apparatus,
wherein
the light receiving apparatus includes:
a beam passing member having a plurality of formed passing areas through each of which the energy beam emitted from the irradiation optical system is allowed to pass; and
a light receiving unit that is configured to optically receive each energy beam that has passed through each of the plurality of passing areas,
the control apparatus controls the position change apparatus based on the light receiving result of the energy beam by the light receiving apparatus.

75. A processing system comprising:
an emission optical system that is configured to emit an energy beam and that includes a plurality of condensed position adjustment optical systems each of which is configured to adjusts a condensed position of the energy beam and whose focal lengths are different from each other;
a plurality of irradiation optical systems each of which is configured to irradiate the object with the energy beam emitted from the emission optical system, each of which is attachable to and detachable from the emission optical system, and each of which includes at least an objective optical system;
a change apparatus that is configured to exchange the irradiation optical system attached to the emission optical system; and
a control apparatus that identifies a type of the irradiation optical system attached to the emission optical system, selects one condensed position adjustment optical system from among the plurality of condensed position adjustment optical systems based on the identified type, and moves the one condensed position adjustment optical system so that the selected one condensed position adjustment optical system is positioned on an optical system of the energy beam.
